# EUROPEAN PATENT APPLICATION

(11) **EP 3 119 156 A1**
(43) Date of publication of application: **18.01.2017**
(21) Application number: 15764460.0
(22) Date of filing: 18.03.2015
(51) Int. Cl.: H04W 76/02, H04W 4/16, H04W 4/14, H04W 80/04, H04W 48/02

(54) **EXECUTION METHOD AND USER EQUIPMENT FOR SERVICE REQUEST PROCEDURE**

(30) Priority: 19.03.2014 US 201461955233 P; 22.04.2014 US 201461982343 P; 02.05.2014 US 201461987503 P; 19.05.2014 US 201461995000 P; 23.05.2014 US 201462002190 P; 02.07.2014 US 201462019897 P; 09.07.2014 US 201462022218 P; 29.07.2014 US 201462030088 P
(71) Applicant: LG Electronics Inc., Seoul 07336 (KR)
(72) Inventor: KIM, Jaehyun, Seoul 137-893 (KR); LEE, Youngdae, Seoul 137-893 (KR); KIM, Laeyoung, Seoul 137-893 (KR); KIM, Hyunsook, Seoul 137-893 (KR); KIM, Taehun, Seoul 137-893 (KR); JUNG, Sunghoon, Seoul 137-893 (KR)
(74) Representative: Cabinet Plasseraud
(86) International application number: PCT/KR2015/002622
(87) International publication number: WO 2015/142049

(57) **Abstract**

A disclosure of the present specification provides a method for executing a service request procedure from a user equipment (UE). The method may comprise the steps of: a lower layer of a UE blocking access of an originating call due to access class barring (ACB); an NAS layer of the UE receiving a start indication from an upper layer due to a request for uplink data; and, if the lower layer has indicated that access was blocked for the originating call but the NAS layer has received the start indication, then the NAS layer commencing the service request procedure.

## Description

### BACKGROUND OF THE INVENTION

### Field of the invention

The present invention relates to mobile communication.

### Related Art

In 3GPP in which technical standards for mobile communication systems are established, in order to handle 4th generation communication and several related forums and new technologies, research on Long Term Evolution/System Architecture Evolution (LTE/SAE) technology has started as part of efforts to optimize and improve the performance of 3GPP technologies from the end of the year 2004.

SAE that has been performed based on 3GPP SA WG2 is research regarding network technology that aims to determine the structure of a network and to support mobility between heterogeneous networks in line with an LTE task of a 3GPP TSG RAN and is one of recent important standardization issues of 3GPP. SAE is a task for developing a 3GPP system into a system that supports various radio access technologies based on an IP, and the task has been carried out for the purpose of an optimized packet-based system which minimizes transmission delay with a more improved data transmission capability.

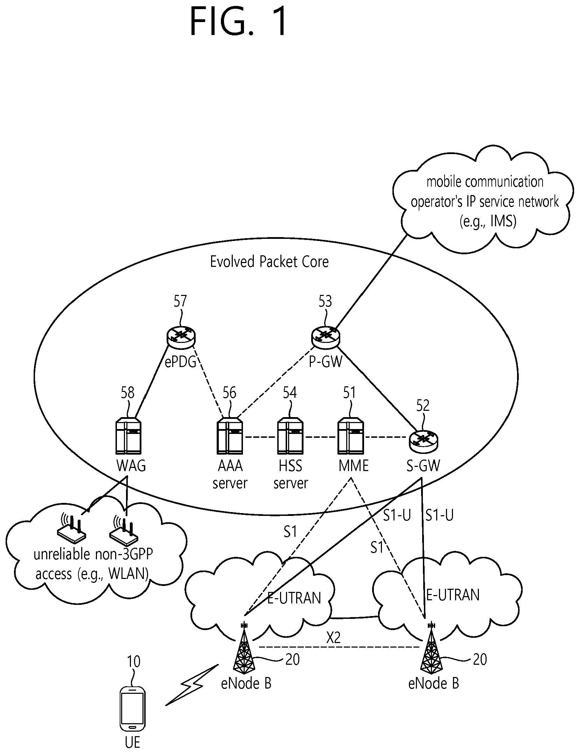

An Evolved Packet System (EPS) higher level reference model defined in 3GPP SA WG2 includes a non-roaming case and roaming cases having various scenarios, and for details therefor, reference can be made to 3GPP standard documents TS 23.401 and TS 23.402. A network configuration of FIG. 1 has been briefly reconfigured from the EPS higher level reference model.

**FIG. 1** **shows the configuration of an evolved mobile communication network.**

An Evolved Packet Core (EPC) may include various elements. FIG. 1 illustrates a Serving Gateway (S-GW) 52, a Packet Data Network Gateway (PDN GW) 53, a Mobility Management Entity (MME) 51, a Serving General Packet Radio Service (GPRS) Supporting Node (SGSN), and an enhanced Packet Data Gateway (ePDG) that correspond to some of the various elements.

The S-GW 52 is an element that operates at a boundary point between a Radio Access Network (RAN) and a core network and has a function of maintaining a data path between an eNodeB 22 and the PDN GW 53. Furthermore, if a terminal (or User Equipment (UE) moves in a region in which service is provided by the eNodeB 22, the S-GW 52 plays a role of a local mobility anchor point. That is, for mobility within an E-UTRAN (i.e., a Universal Mobile Telecommunications System (Evolved-UMTS) Terrestrial Radio Access Network defined after 3GPP release-8), packets can be routed through the S-GW 52. Furthermore, the S-GW 52 may play a role of an anchor point for mobility with another 3GPP network (i.e., a RAN defined prior to 3GPP release-8, for example, a UTRAN or Global System for Mobile communication (GSM) (GERAN)/Enhanced Data rates for Global Evolution (EDGE) Radio Access Network).

The PDN GW (or P-GW) 53 corresponds to the termination point of a data interface toward a packet data network. The PDN GW 53 can support policy enforcement features, packet filtering, charging support, etc. Furthermore, the PDN GW (or P-GW) 53 can play a role of an anchor point for mobility management with a 3GPP network and a non-3GPP network (e.g., an unreliable network, such as an Interworking Wireless Local Area Network (I-WLAN), a Code Division Multiple Access (CDMA) network, or a reliable network, such as WiMax).

In the network configuration of FIG. 1, the S-GW 52 and the PDN GW 53 have been illustrated as being separate gateways, but the two gateways may be implemented in accordance with a single gateway configuration option.

The MME 51 is an element for performing the access of a terminal to a network connection and signaling and control functions for supporting the allocation, tracking, paging, roaming, handover, etc. of network resources. The MME 51 controls control plane functions related to subscribers and session management. The MME 51 manages numerous eNodeBs 22 and performs conventional signaling for selecting a gateway for handover to another 2G/3G networks. Furthermore, the MME 51 performs functions, such as security procedures, terminal-to-network session handling, and idle terminal location management.

The SGSN handles all packet data, such as a user's mobility management and authentication for different access 3GPP networks (e.g., a GPRS network and an UTRAN/GERAN).

The ePDG plays a role of a security node for an unreliable non-3GPP network (e.g., an I-WLAN and a Wi-Fi hotspot).

As described with reference to FIG. 1, a terminal (or UE) having an IP capability can access an IP service network (e.g., IMS), provided by a service provider (i.e., an operator), via various elements within an EPC based on non-3GPP access as well as based on 3GPP access.

Furthermore, FIG. 1 shows various reference points (e.g., S1-U and S1-MME). In a 3GPP system, a conceptual link that connects two functions that are present in the different function entities of an E-UTRAN and an EPC is called a reference point. Table 1 below defines reference points shown in FIG. 1. In addition to the reference points shown in the example of Table 1, various reference points may be present depending on a network configuration.

**[Table 1]**

| REFERENCE POINT | DESCRIPTION |
|---|---|
| S1-MME | A reference point for a control plane protocol between the E-UTRAN and the MME |
| S1-U | A reference point between the E-UTRAN and the S-GW for path switching between eNodeBs during handover and user plane tunneling per bearer |
| S3 | A reference point between the MME and the SGSN that provides the exchange of pieces of user and bearer information for mobility between 3GPP access networks in idle and/or activation state. This reference point can be used intra-PLMN or inter-PLMN (e.g. in the case of Inter-PLMN HO). |
| S4 | A reference point between the SGW and the SGSN that provides related control and mobility support between the 3GPP anchor functions of a GPRS core and the S-GW Furthermore, if a direct tunnel is not established, the reference point provides user plane tunneling. |
| S5 | A reference point that provides user plane tunneling and tunnel management between the S-GW and the PDN GW. The reference point is used for S-GW relocation due to UE mobility and if the S-GW needs to connect to a non-collocated PDN GW for required PDN connectivity |
| S11 | A reference point between the MME and the S-GW |
| SGi | A reference point between the PDN GW and the PDN. The PDN may be a public or private PDN external to an operator or may be an intra-operator PDN, e.g., for the providing of IMS services. This reference point corresponds to Gi for 3GPP access. |

Among the reference points shown in FIG. 1, S2a and S2b correspond to non-3GPP interfaces. S2a is a reference point providing the user plane with related control and mobility support between a PDN GW and a reliable non-3GPP access. S2b is a reference point providing the user plane with mobility support and related control between a PDN GW and an ePDG.

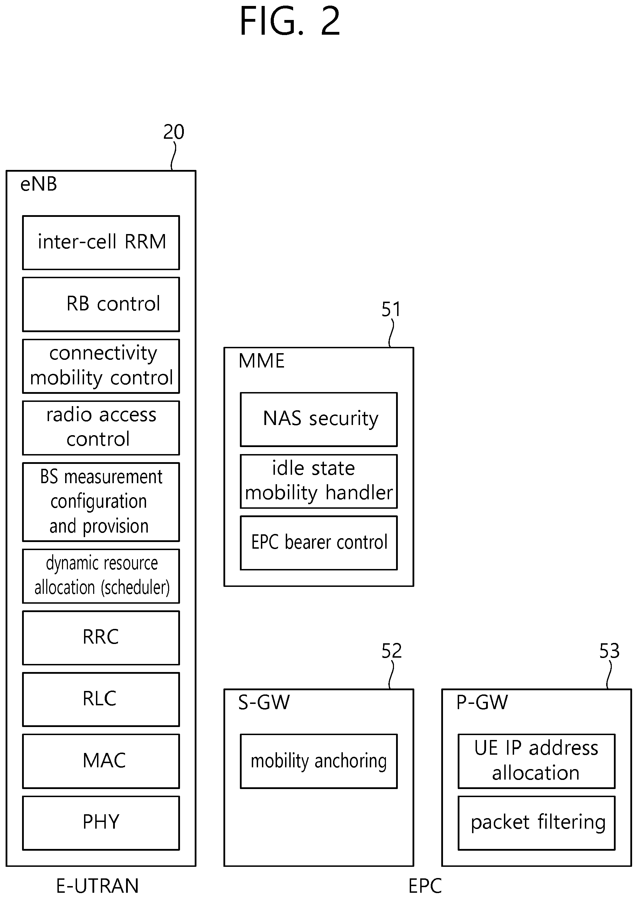

**FIG. 2** **is an exemplary diagram showing the architecture of a common E-UTRAN and a common EPC.**

As shown in FIG. 2, the eNodeB 20 can perform functions, such as routing to a gateway while RRC connection is activated, the scheduling and transmission of a paging message, the scheduling and transmission of a broadcast channel (BCH), the dynamic allocation of resources to UE in uplink and downlink, a configuration and providing for the measurement of the eNodeB 20, control of a radio bearer, radio admission control, and connection mobility control. The EPC can perform functions, such as the generation of paging, the management of an LTE_IDLE state, the ciphering of a user plane, control of an EPS bearer, the ciphering of NAS signaling, and integrity protection.

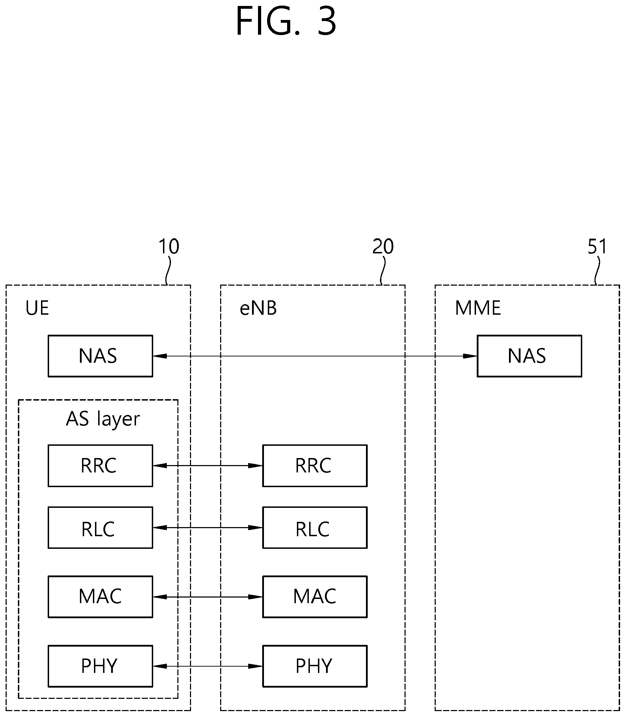

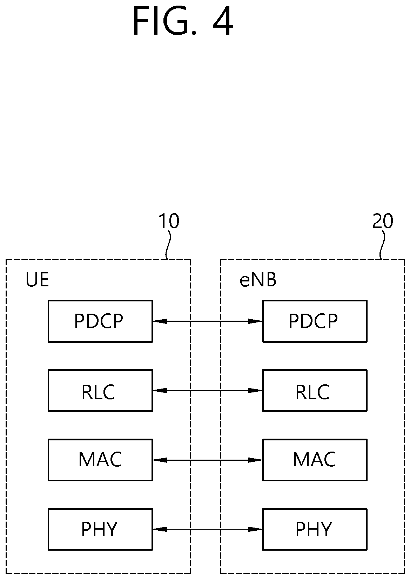

**FIG. 3** **is an exemplary diagram showing the structure of a radio interface protocol in a control plane between UE and an eNodeB, and** **FIG. 4** **is another exemplary diagram showing the structure of a radio interface protocol in a control plane between UE and an eNodeB.**

The radio interface protocol is based on a 3GPP radio access network standard. The radio interface protocol includes a physical layer, a data link layer, and a network layer horizontally, and it is divided into a user plane for the transmission of information and a control plane for the transfer of a control signal (or signaling).

The protocol layers may be classified into a first layer (L1), a second layer (L2), and a third layer (L3) based on three lower layers of the Open System Interconnection (OSI) reference model that is widely known in communication systems.

The layers of the radio protocol of the control plane shown in FIG. 3 and the radio protocol in the user plane of FIG. 4 are described below.

The physical layer PHY, that is, the first layer, provides information transfer service using physical channels. The PHY layer is connected to a Medium Access Control (MAC) layer placed in a higher layer through a transport channel, and data is transferred between the MAC layer and the PHY layer through the transport channel. Furthermore, data is transferred between different PHY layers, that is, PHY layers on the sender side and the receiver side, through the PHY layer.

A physical channel is made up of multiple subframes on a time axis and multiple subcarriers on a frequency axis. Here, one subframe is made up of a plurality of symbols and a plurality of subcarriers on the time axis. One subframe is made up of a plurality of resource blocks, and one resource block is made up of a plurality of symbols and a plurality of subcarriers. A Transmission Time Interval (TTI), that is, a unit time during which data is transmitted, is 1 ms corresponding to one subframe.

In accordance with 3GPP LTE, physical channels that are present in the physical layer of the sender side and the receiver side can be divided into a Physical Downlink Shared Channel (PDSCH) and a Physical Uplink Shared Channel (PUSCH), that is, data channels, and a Physical Downlink Control Channel (PDCCH), a Physical Control Format Indicator Channel (PCFICH), a Physical Hybrid-ARQ Indicator Channel (PHICH), and a Physical Uplink Control Channel (PUCCH), that is, control channels.

A PCFICH that is transmitted in the first OFDM symbol of a subframe carries a Control Format Indicator (CFI) regarding the number of OFDM symbols (i.e., the size of a control region) used to send control channels within the subframe. A wireless device first receives a CFI on a PCFICH and then monitors PDCCHs.

Unlike a PDCCH, a PCFICH is transmitted through the fixed PCFICH resources of a subframe without using blind decoding.

A PHICH carries positive-acknowledgement (ACK)/negative-acknowledgement (NACK) signals for an uplink (UL) Hybrid Automatic Repeat reQuest (HARQ). ACK/NACK signals for UL data on a PUSCH that is transmitted by a wireless device are transmitted on a PHICH.

A Physical Broadcast Channel (PBCH) is transmitted in four former OFDM symbols of the second slot of the first subframe of a radio frame. The PBCH carries system information that is essential for a wireless device to communicate with an eNodeB, and system information transmitted through a PBCH is called a Master Information Block (MIB). In contrast, system information transmitted on a PDSCH indicated by a PDCCH is called a System Information Block (SIB).

A PDCCH can carry the resource allocation and transport format of a downlink-shared channel (DL-SCH), information about the resource allocation of an uplink shared channel (UL-SCH), paging information for a PCH, system information for a DL-SCH, the resource allocation of an upper layer control message transmitted on a PDSCH, such as a random access response, a set of transmit power control commands for pieces of UE within a specific UE group, and the activation of a Voice over Internet Protocol (VoIP). A plurality of PDCCHs can be transmitted within the control region, and UE can monitor a plurality of PDCCHs. APDCCH is transmitted on one Control Channel Element (CCE) or an aggregation of multiple contiguous CCEs. A CCE is a logical allocation unit used to provide a PDCCH with a coding rate according to the state of a radio channel. A CCE corresponds to a plurality of resource element groups. The format of a PDCCH and the number of bits of a possible PDCCH are determined by a relationship between the number of CCEs and a coding rate provided by CCEs.

Control information transmitted through a PDCCH is called Downlink Control Information (DCI). DCI can include the resource allocation of a PDSCH (also called a downlink (DL) grant)), the resource allocation of a PUSCH (also called an uplink (UL) grant), a set of transmit power control commands for pieces of UE within a specific UE group, and/or the activation of a Voice over Internet Protocol (VoIP).

Several layers are present in the second layer. First, a Medium Access Control (MAC) layer functions to map various logical channels to various transport channels and also plays a role of logical channel multiplexing for mapping multiple logical channels to one transport channel. The MAC layer is connected to a Radio Link Control (RLC) layer, that is, a higher layer, through a logical channel. The logical channel is basically divided into a control channel through which information of the control plane is transmitted and a traffic channel through which information of the user plane is transmitted depending on the type of transmitted information.

The RLC layer of the second layer functions to control a data size that is suitable for sending, by a lower layer, data received from a higher layer in a radio section by segmenting and concatenating the data. Furthermore, in order to guarantee various types of QoS required by radio bearers, the RLC layer provides three types of operation modes: a Transparent Mode (TM), an Un-acknowledged Mode (UM), and an Acknowledged Mode (AM). In particular, AM RLC performs a retransmission function through an Automatic Repeat and Request (ARQ) function for reliable data transmission.

The Packet Data Convergence Protocol (PDCP) layer of the second layer performs a header compression function for reducing the size of an IP packet header containing control information that is relatively large in size and unnecessary in order to efficiently send an IP packet, such as IPv4 or IPv6, in a radio section having a small bandwidth when sending the IP packet. Accordingly, transmission efficiency of the radio section can be increased because only essential information is transmitted in the header part of data. Furthermore, in an LTE system, the PDCP layer also performs a security function. The security function includes ciphering for preventing the interception of data by a third party and integrity protection for preventing the manipulation of data by a third party.

A Radio Resource Control (RRC) layer at the highest place of the third layer is defined only in the control plane and is responsible for control of logical channels, transport channels, and physical channels in relation to the configuration, re-configuration, and release of Radio Bearers (RBs). Here, the RB means service provided by the second layer in order to transfer data between UE and an E-UTRAN.

If an RRC connection is present between the RRC layer of UE and the RRC layer of a wireless network, the UE is in an RRC_CONNECTED state. If not, the UE is in an RRC_IDLE state.

An RRC state and an RRC connection method of UE are described below. The RRC state means whether or not the RRC layer of UE has been logically connected to the RRC layer of an E-UTRAN. If the RRC layer of UE is logically connected to the RRC layer of an E-UTRAN, it is called the RRC_CONNECTED state. If the RRC layer of UE is not logically connected to the RRC layer of an E-UTRAN, it is called the RRC_IDLE state. Since UE in the RRC_CONNECTED state has an RRC connection, an E-UTRAN can check the existence of the UE in a cell unit, and thus control the UE effectively. In contrast, if UE is in the RRC_IDLE state, an E-UTRAN cannot check the existence of the UE, and a core network is managed in a Tracking Area (TA) unit, that is, an area unit greater than a cell. That is, only the existence of UE in the RRC_IDLE state is checked in an area unit greater than a cell. In such a case, the UE needs to shift to the RRC_CONNECTED state in order to be provided with common mobile communication service, such as voice or data. Each TA is classified through Tracking Area Identity (TAI). UE can configure TAI through Tracking Area Code (TAC), that is, information broadcasted by a cell.

When a user first turns on the power of UE, the UE first searches for a proper cell, establishes an RRC connection in the corresponding cell, and registers information about the UE with a core network. Thereafter, the UE stays in the RRC_IDLE state. The UE in the RRC_IDLE state (re)selects a cell if necessary and checks system information or paging information. This process is called camp on. When the UE in the RRC_IDLE state needs to establish an RRC connection, the UE establishes an RRC connection with the RRC layer of an E-UTRAN through an RRC connection procedure and shifts to the RRC_CONNECTED state. A case where the UE in the RRC_IDLE state needs to establish with an RRC connection includes multiple cases. The multiple cases may include, for example, a case where UL data needs to be transmitted for a reason, such as a call attempt made by a user and a case where a response message needs to be transmitted in response to a paging message received from an E-UTRAN.

A Non-Access Stratum (NAS) layer placed over the RRC layer performs functions, such as session management and mobility management.

The NAS layer shown in FIG. 3 is described in detail below.

Evolved Session Management (ESM) belonging to the NAS layer performs functions, such as the management of default bearers and the management of dedicated bearers, and ESM is responsible for control that is necessary for UE to use PS service from a network. Default bearer resources are characterized in that they are allocated by a network when UE first accesses a specific Packet Data Network (PDN) or accesses a network. Here, the network allocates an IP address available for UE so that the UE can use data service and the QoS of a default bearer. LTE supports two types of bearers: a bearer having Guaranteed Bit Rate (GBR) QoS characteristic that guarantees a specific bandwidth for the transmission and reception of data and a non-GBR bearer having the best effort QoS characteristic without guaranteeing a bandwidth. A default bearer is assigned a non-GBR bearer, and a dedicated bearer may be assigned a bearer having a GBR or non-GBR QoS characteristic.

In a network, a bearer assigned to UE is called an Evolved Packet Service (EPS) bearer. When assigning an EPS bearer, a network assigns one ID. This is called an EPS bearer ID. One EPS bearer has QoS characteristics of a Maximum Bit Rate (MBR) and a Guaranteed Bit Rate (GBR) or an Aggregated Maximum Bit Rate (AMBR).

Meanwhile, in FIG. 3, the RRC layer, the RLC layer, the MAC layer, and the PHY layer placed under the NAS layer are also collectively called an Access Stratum (AS).

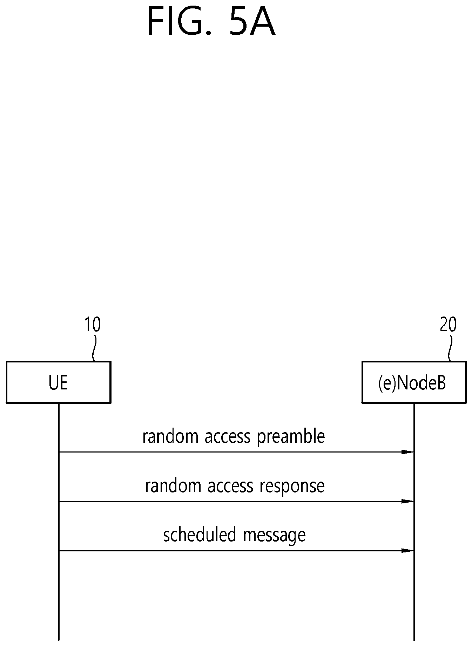

**FIG. 5a** **is a flowchart illustrating a random access process in 3GPP LTE.**

The random access process is used for UE 10 to obtain UL synchronization with a base station, that is, an eNodeB 20, or to be assigned UL radio resources.

The UE 10 receives a root index and a physical random access channel (PRACH) configuration index from the eNodeB 20. 64 candidate random access preambles defined by a Zadoff-Chu (ZC) sequence are present in each cell. The root index is a logical index that is used for the UE to generate the 64 candidate random access preambles.

The transmission of a random access preamble is limited to specific time and frequency resources in each cell. The PRACH configuration index indicates a specific subframe on which a random access preamble can be transmitted and a preamble format.

The UE 10 sends a randomly selected random access preamble to the eNodeB 20. Here, the UE 10 selects one of the 64 candidate random access preambles. Furthermore, the UE selects a subframe corresponding to the PRACH configuration index. The UE 10 sends the selected random access preamble in the selected subframe.

The eNodeB 20 that has received the random access preamble sends a Random Access Response (RAR) to the UE 10. The random access response is detected in two steps. First, the UE 10 detects a PDCCH masked with a random access-RNTI (RA-RNTI). The UE 10 receives a random access response within a Medium Access Control (MAC) Protocol Data Unit (PDU) on a PDSCH that is indicated by the detected PDCCH.

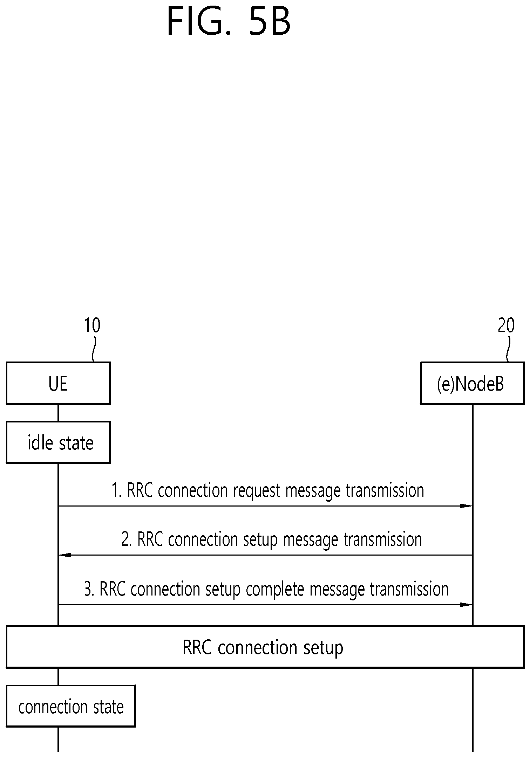

**Fig. 5b** **illustrates a connection process in a radio resource control (RRC) layer.**

Fig. 5b shows an RRC state depending on whether there is an RRC connection. The RRC state denotes whether the entity of the RRC layer of UE 10 is in logical connection with the entity of the RRC layer of eNodeB 20, and if yes, it is referred to as RRC connected state, and if no as RRC idle state.

In the connected state, UE 10 has an RRC connection, and thus, the E-UTRAN may grasp the presence of the UE on a cell basis and may thus effectively control UE 10. In contrast, UE 10 in the idle state cannot grasp eNodeB 20 and is managed by a core network on the basis of a tracking area that is larger than a cell. The tracking area is a set of cells. That is, UE 10 in the idle state is grasped for its presence only on a larger area basis, and the UE should switch to the connected state to receive a typical mobile communication service such as voice or data service.

When the user turns on UE 10, UE 10 searches for a proper cell and stays in idle state in the cell. UE 10, when required, establishes an RRC connection with the RRC layer of eNodeB 20 through an RRC connection procedure and transits to the RRC connected state.

There are a number of situations where the UE staying in the idle state needs to establish an RRC connection, for example, when the user attempts to call or when uplink data transmission is needed, or when transmitting a message responsive to reception of a paging message from the EUTRAN.

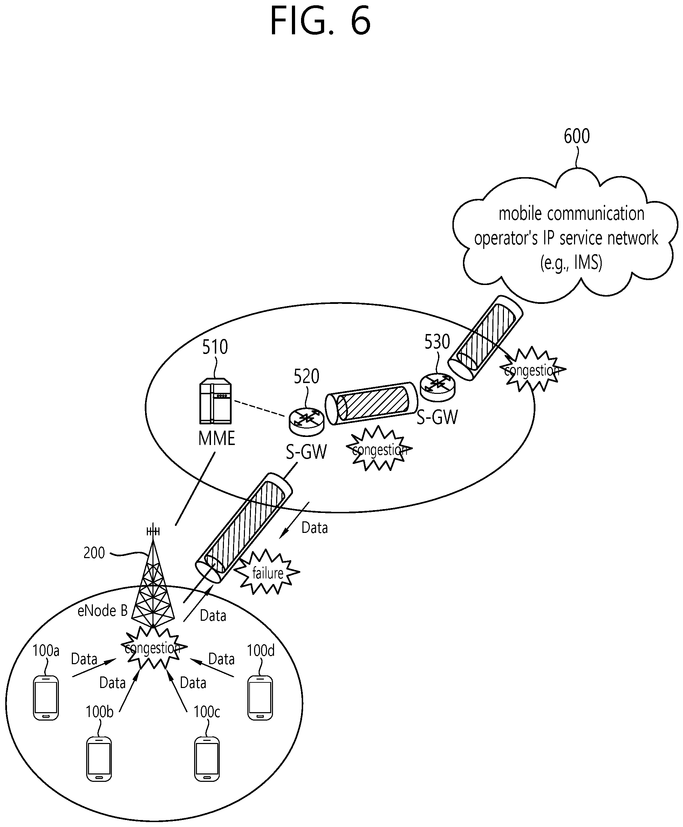

In order for the idle UE 10 to be RRC connected with eNodeB 20, UE 10 needs to perform the RRC connection procedure as described above. The RRC connection procedure generally comes with the process in which UE 10 transmits an RRC connection request message to eNodeB 20, the process in which eNodeB 20 transmits an RRC connection setup message to UE 10, and the process in which UE 10 transmits an RRC connection setup complete message to eNodeB 20. The processes are described in further detail with reference to Fig. 6.
1) The idle UE 10, when attempting to establish an RRC connection, e.g., for attempting to call or transmit data or responding to paging from eNodeB 20, sends an RRC connection request message to eNodeB 20.
2) When receiving the RRC connection message from UE 10, eNodeB 20 accepts the RRC connection request from UE 10 if there are enough radio resources, and eNodeB 20 sends a response message, RRC connection setup message, to UE 10.
3) When receiving the RRC connection setup message, UE 10 transmits an RRC connection setup complete message to eNodeB 20. If UE 10 successfully transmits the RRC connection setup message, UE 10 happens to establish an RRC connection with eNodeB 20 and switches to the RRC connected state.

Meanwhile, when the UE 10 requests for an RRC connection for the purpose of data transmission of a user plane, this can be rejected if a network, e.g., a base station (i.e., eNodeB) is in a congestion state.

Meanwhile, recently, there are many researches on a multimedia telephony service (MMTel). The MMTel may provide converged, fixed mobile real-time multimedia communication as a global standard based on an IP multimedia subsystem (IMS), so that media capabilities such as voice, real-time video, text, file transmission, etc., can be used and photos, audio and video clips, etc., can be shared. In the MMTel, a user may add or delete media during a session. That is, during the session, chatting, voice adding, another caller adding, video adding, media sharing, file transmitting, and deleting of a specific capability thereof may be possible.

However, when the UE desires to perform the MMTel, there is a problem in that a service cannot be performed if a network, e.g., a base station (e.g., eNodeB), is in a congestion state.

### SUMMARY OF THE INVENTION

Accordingly, one disclosure of the present specification aims to provide a method capable of solving the aforementioned problem.

To acheive the aforementioned aim, one disclosure of the present specification provides a method for performing a service request procedure. The method may be performed by a user equipment (UE) and comprise: barring, by a lower layer of the UE, an access for an originating call, because of an access class barring (ACB); receiving, by a non-access stratum (NAS) layer of the UE, a start indication from an upper layer due to a request for an uplink data; if the lower layer indicates that the access was barred for the originating call and if the NAS layer receives the start indication, starting, by the NAS layer, a service request procedure. The starting the service request procedure may include: delivering, to the lower layer, a call type for transmitting a service request message or an extended service request message. Here, the call type may be set to one of an originating multimedia telephony (MMTEL) voice, an originating MMTEL video, an originating short message service (SMS) over internet protocol (IP) or an originating SMS.

The request for the uplink data may correspond a request to submit an originating message over IP.

The NAS layer may receive the start indication from the upper layer, if the request to submit the originating message over IP is received and if no other originating message over IP exists.

The request for the uplink data may correspond to a request to establish an originating MMTEL communication session and to establish the originating SMS over IP.

The NAS layer may receive the start indication from the upper layer, if an audio is offered in the MMTEL communication session or if a video is offered in the MMTEL communication session.

The starting of the service request procedure may include: transmitting a service request message or an extended service request.

The service request message or the extended request message may include a call type field. The call type field may be set to at least one of a originating MMTEL voice, an originating MMTEL video, an originating SMS over IP or a originating SMS.

If the service request message or the extended service request message is to request user plane radio resources and if a MMTEL voice call is started, the service request message or the extended service request may include: the call type field set to the originating MMTEL voice; and an establish cause field set to a mobile orienting (MO) data.

If the service request message or the extended service request message is to request user plane radio resources and if a MMTEL video call is started, the service request message or the extended service request message may include: the call type field set to the originating MMTEL video; and an establish cause field set to MO data.

If the service request message or the extended service request message is to request user plane radio resources and if a SMS over IP is started, the service request message or the extended service request message may include: the call type field set to the originating SMS over IP; and an establish cause field set to MO data.

If the service request message or the extended service request message is to request resources for an uplink signalling for SMS or SMS over NAS, the service request message or the extended service request message may include: the call type field set to the originating SMS (SMS over NAS); and an establish cause field set to MO data.

The service request message may further include a service type field. The service type field may be set to a MO MMTEL voice, a MO MMTEL video, a MO SMS over IP, or MO SMS(SMS over NAS).

To acheive the aforementioned aim, one disclosure of the present specification provides a user equipment (UE) for performing a service request procedure. The UE may comprise: a transceiver; and a processor controlling the transceiver and configured to include: a lower layer for barring an access for an originating call, because of an access class barring (ACB); and a non-access stratum (NAS) layer for receiving a start indication from an upper layer due to a request for an uplink data. If the lower layer indicates that the access was barred for the originating call and if the NAS layer receives the start indication, the NAS layer deliveries, to the lower layer, a call type for transmitting a service request message or an extended service request message to start a service request procedure. The call type is set to one of an originating multimedia telephony (MMTEL) voice, an originating MMTEL video, an originating short message service (SMS) over internet protocol (IP) or an originating SMS.

According to a disclosure of the present specification, the aforementioned problem of the conventional technique is solved.

### BRIEF DESCRIPTION OF THE DRAWINGS

FIG. 1 is a structural diagram of an evolved mobile communication network.
FIG. 2 is an exemplary diagram illustrating architectures of a general E-UTRAN and a general EPC.
FIG. 3 is an exemplary diagram illustrating a structure of a radio interface protocol on a control plane between UE and eNodeB.
FIG. 4 is another exemplary diagram illustrating a structure of a radio interface protocol on a user plane between the UE and a base station.
FIG. 5a is a flowchart illustrating a random access process in 3GPP LTE.
FIG. 5b illustrates a connection process in a radio resource control (RRC) layer.
FIG. 6 illustrates a network overload state.
FIG. 7 is an exemplary flowchart illustrating an operation based on access class barring in a network congestion state.
FIG. 8 illustrates an example showing a problem.
FIG. 9a and FIG. 9b are signal flows illustrating proposals 1-1, 1-2, and 1-3 of the present specification.
FIG. 10a and FIG. 10b are signal flows illustrating the proposal 1-1 of the present specification.
FIG. 11a and FIG. 11b are signal flows illustrating the proposals 2-1, 2-2, and 2-3 of the present specification.
FIG. 12a and FIG. 12b are signal flows illustrating the proposal 2-2 of the present specification.
FIG. 13a and FIG. 13b are signal flows illustrating the proposal 3 of the present specification.
FIG. 14a and FIG. 14b are signal flows illustrating an example of SMS in the proposal 3 of the present specification.
FIG. 15a and FIG. 15b are signal flows illustrating the proposal 4 of the present specification.
FIG. 16a and FIG. 16b are signal flows illustrating an example of SMS in the proposal 4 of the present specification.
FIG. 17a and FIG. 17b are signal flows illustrating the proposal 5-1 of the present specification.
FIG. 18a and FIG. 18b are signal flows illustrating an example for SMS in the proposal 5 of the present specification.
FIG. 19a and FIG. 19b are signal flows illustrating an example of the proposal 5-2 according to the present specification.
FIG. 20a and FIG. 20b are signal flows illustrating an example for SMS in the proposal 5-2 of the present specification.
FIG. 21a and FIG. 21b are signal flows illustrating the proposal 6 of the present specification.
FIG. 22a and FIG. 22b are signal flows illustrating an example for SMS in the proposal 6-1 of the present specification.
FIG. 23a and FIG. 23b are signal flows illustrating the proposal 7 of the present specification.
FIG. 24a and FIG. 24b are signal flows illustrating an exemplary modification of the proposal 7 of the present specification.
FIG. 25a and FIG. 25b are signal flows illustrating the proposal 8 of the present specification.
FIG. 26a and FIG. 26b are signal flows illustrating the proposal 9 of the present specification.
FIG. 27a and FIG. 27b are signal flows illustrating an exemplary modification of the proposal 9 of the present specification.
FIG. 28a and FIG. 28b are signal flows illustrating the proposals 10-1/10-2/10-3 of the present specification.
FIG. 29a and FIG. 29b are signal flows illustrating an example of SMS in the proposal 10-1 of the present specification.
FIG. 30a and FIG. 30b are signal flows illustrating the proposal 11 of the present specification.
FIG 31a and FIG. 31b are signal flows illustrating an example for SMS in the proposal 11 of the present specification.
FIG. 32a and FIG. 32b are signal flows illustrating the proposal 12 of the present specification.
FIG. 33a and FIG. 33b are signal flows illustrating an exemplary modification of the proposal 12 of the present specification.
FIG. 34a and FIG. 34b are signal flows illustrating an example of SMS in the proposal 12 of the present specification.
FIG. 35 is a block diagram of a UE 100 and an eNodeB 200 according to an embodiment of the present invention.

### DESCRIPTION OF EXEMPLARY EMBODIMENTS

The present invention is described in light of UMTS (Universal Mobile Telecommunication System) and EPC (Evolved Packet Core), but not limited to such communication systems, and may be rather applicable to all communication systems and methods to which the technical spirit of the present invention may apply.

The technical terms used herein are used to merely describe specific embodiments and should not be construed as limiting the present invention. Further, the technical terms used herein should be, unless defined otherwise, interpreted as having meanings generally understood by those skilled in the art but not too broadly or too narrowly. Further, the technical terms used herein, which are determined not to exactly represent the spirit of the invention, should be replaced by or understood by such technical terms as being able to be exactly understood by those skilled in the art. Further, the general terms used herein should be interpreted in the context as defined in the dictionary, but not in an excessively narrowed manner.

The expression of the singular number in the specification includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the specification, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the spirit of the invention readily understood, but not should be intended to be limiting of the invention. It should be understood that the spirit of the invention may be expanded to its modifications, replacements or equivalents in addition to what is shown in the drawings.

In the drawings, user equipments (UEs) are shown for example. The UE may also be denoted a terminal or mobile equipment (ME). The UE may be a laptop computer, a mobile phone, a PDA, a smartphone, a multimedia device, or other portable device, or may be a stationary device such as a PC or a car mounted device.

### Definition of terms

For a better understanding, the terms used herein are briefly defined before going to the detailed description of the invention with reference to the accompanying drawings.

An UMTS is an abbreviation of a Universal Mobile Telecommunication System, and it refers to the core network of the 3rd generation mobile communication.

UE/MS is an abbreviation of User Equipment/Mobile Station, and it refers to a terminal device.

An EPS is an abbreviation of an Evolved Packet System, and it refers to a core network supporting a Long Term Evolution (LTE) network and to a network evolved from an UMTS.

A PDN is an abbreviation of a Public Data Network, and it refers to an independent network where a service for providing service is placed.

A PDN connection refers to a connection from UE to a PDN, that is, an association (or connection) between UE represented by an IP address and a PDN represented by an APN.

A PDN-GW is an abbreviation of a Packet Data Network Gateway, and it refers to a network node of an EPS network which performs functions, such as the allocation of a UE IP address, packet screening & filtering, and the collection of charging data.

A Serving gateway (Serving GW) is a network node of an EPS network which performs functions, such as mobility anchor, packet routing, idle mode packet buffering, and triggering an MME to page UE.

A Policy and Charging Rule Function (PCRF): The node of an EPS network which performs a policy decision for dynamically applying QoS and a billing policy that are different for each service flow.

An Access Point Name (APN) is the name of an access point that is managed in a network and provides to UE. That is, an APN is a character string that denotes or identifies a PDN. Requested service or a network (PDN) is accessed via P-GW. An APN is a name (a character string, e.g., 'internet.mnc012.mcc345.gprs') previously defined within a network so that the P-GW can be searched for.

A Tunnel Endpoint Identifier (TEID): The end point ID of a tunnel set between nodes within a network, and it is set for each bearer unit of each UE.

ANodeB is an eNodeB of a UMTS network and installed outdoors. The cell coverage of the NodeB corresponds to a macro cell.

An eNodeB is an eNodeB of an Evolved Packet System (EPS) and is installed outdoors. The cell coverage of the eNodeB corresponds to a macro cell.

An (e)NodeB is a term that denotes a NodeB and an eNodeB.

An MME is an abbreviation of a Mobility Management Entity, and it functions to control each entity within an EPS in order to provide a session and mobility for UE.

A session is a passage for data transmission, and a unit thereof may be a PDN, a bearer, or an IP flow unit. The units may be classified into a unit of the entire target network (i.e., an APN or PDN unit) as defined in 3GPP, a unit (i.e., a bearer unit) classified based on QoS within the entire target network, and a destination IP address unit.

A PDN connection is a connection from UE to a PDN, that is, an association (or connection) between UE represented by an IP address and a PDN represented by an APN. It means a connection between entities (i.e., UE-PDN GW) within a core network so that a session can be formed.

UE context is information about the situation of UE which is used to manage the UE in a network, that is, situation information including an UE ID, mobility (e.g., a current location), and the attributes of a session (e.g., QoS and priority)

OMADM (Open Mobile Alliance Device Management): a protocol designed for managing mobile devices such as mobile phones, PDAs, or portable computers and performs functions such as device configuration, firmware upgrade, and error reporting.

OAM (Operation Administration and Maintenance): denotes a group of network management functions displaying network faults and providing capability information, diagnosis and data.

NAS configuration MO (Management Object): MO (Management Object) used to configure in UE parameter associated with NAS functionality

NAS (Non-Access-Stratum): A higher stratum of a control plane between a UE and an MME. The NAS supports mobility management, session management, IP address management, etc., between the UE and the network.

MM (Mobility Management) operation/procedure: An operation or procedure for mobility regulation/management/control of the UE. The MM operation/procedure may be interpreted as including one or more of an MM operation/procedure in a CS network, a GMM operation/procedure in a GPRS network, and an EMM operation/procedure in an EPS network. The UE and the network node (e.g., MME, SGSN, and MSC) exchange an MM message to perform the MM operation/procedure.

SM (Session Management) operation/procedure: An operation or procedure for regulating/managing/processing/handling a user plane and/or a bearer context/PDP context of the UE. The SM operation/procedure may be interpreted as including one or more of an SM operation/procedure in a GPRS network and an ESM operation/procedure in an EPS network. The UE and the network node (e.g., MME and SGSN) exchange an SM message to perform the SM operation/procedure.

Low priority UE: A UE configured for NAS signalling low priority. The standard document 3GPP TS 24.301 and TS 24.008 may be incorporated by reference for details thereof.

Normal priority UE: A normal UE not configured with low priority.

Dual priority UE: A UE configured for dual priority. That is, a UE which provides dual priority support is configured for a NAS signalling low priority and also configured to override the NAS signalling low priority indicator. The standard document 3GPP TS 24.301 and TS 24.008 may be incorporated by reference for details thereof.

Hereinafter, an aspect of the present specification is described with reference to the accompanying drawings.

**FIG. 6** **illustrates a network overload state.**

As shown in FIG. 6, many UEs 100a, 100b, 300c, and 300d are present in the coverage of an eNodeB 200, and data transmission/reception is attempted. Accordingly, if traffic is overloaded or congested in an interface between the eNodeB 200 and an S-GW 520, downlink data to the MTC device 100 or uplink data from the UE 100 is not correctly transmitted and thus data transmission fails.

Alternatively, even if an interface between the S-GW 520 and a PDN-GW 530 or an interface between the PDN-GW 530 and an Internet Protocol (IP) service network of a mobile communication operator is overloaded or congested, downlink data to the UEs 100a, 100b, 300c, and 300d or uplink data from the UEs 100a, 100b, 300c, and 300d is not correctly transmitted and thus data transmission fails.

If an interface between the eNodeB 200 and the S-GW 520 is overloaded or congested or if an interface between the S-GW 520 and the PDN-GW 530 is overloaded or congested, a node (e.g., MME) of the core network performs a NAS level congest control to avoid or control signaling congestion and APN congestion.

The NAS level congestion control consists of an APN based congestion control and a general NAS level mobility management control.

The APN based congestion control implies an EMM, GMM, and (E)SM signal congestion control related to a UE and a specific APN (i.e., an APN related to a congestion state), and includes an APN based session management congestion control and an APN based mobility management congestion control.

On the other hand, the general NAS level mobility management control implies that a node (MME, SGSN) in the core network rejects a mobility management signaling request which is requested by the UE/MS in a general network congestion or overload situation to avoid the congestion and the overload.

In general, if the core network performs the NAS level congestion control, a back-off timer value is transmitted to a UE in an idle mode or a connected mode by being carried on a NAS reject message. In this case, the UE does not request an EMM/GMM/(E)SM signal to the network until the back-off timer expires. The NAS reject message is one of an Attach reject, a Tracking Area Updating (TAU) reject, a Routing Area Updating (RAU) reject, a service reject, an extended service reject, a PDN connectivity reject, a bearer resource allocation reject, a bearer resource modification reject, and a deactivate EPS bearer context request reject.

The back-off timer may be classified into a Mobility Management (MM) back-off timer and a Session Management (SM) back-off timer.

The MM back-off timer operates independently for each UE, and the SM back-off timer operates independently for each APN and each UE.

Simply, the MM back-off timer is for controlling an EMM/GMM signal (e.g., Attach, TAU/RAU request, etc.). The SM back-off timer is for controlling an (E)SM signal (e.g., PDN connectivity, Bearer Resource Allocation, Bearer Modification, PDP Context Activation, PDP Context Modification request, etc.).

More specifically, the MM back-off timer is a mobility management related back-off timer used to control a case where a network congestion occurs, and is a timer which prevents the UE from performing an attach, location information update (TAU, RAU), and service request procedure during the timer is running. However, exceptionally in case of an emergency bearer service and a Multimedia Priority Service (MPS), the UE may be allowed to perform the request even if the timer is running.

As described above, the UE may receive the MM back-off timer value from a core network node (e.g., MME, SGSN, etc.) or from a lower layer (access stratum). In addition, the timer value may be randomly set by the UE within the range of 15 minutes to 30 minutes.

The SM back-off timer is a session management related back-off timer used to control a case where a network congestion occurs, and is a timer which prevents the UE from configuring or changing an associated APN-based session. However, likewise, exceptionally in case of an emergency bearer service and a Multimedia Priority Service (MPS), the UE 100 may be allowed to perform the request even if the timer is running.

The UE receives the SM back-off timer value from the core network node (e.g., MME, SGSN, etc.), and is randomly set within up to 72 hours. In addition, the timer value may be randomly set by the UE/MS within the range of 15 minutes to 30 minutes.

Meanwhile, if a congestion occurs in the eNodeB 200, the eNodeB 200 may also perform the congestion control. That is, in a case where the UE requests for an RRC connection establishment for the purpose of data transmission of a user plane, if the eNodeB 200 is in the congestion state, a rejection response may be transmitted to the UE together with an extended wait timer. In this case, the RRC connection establishment request cannot be reattempted until the extended wait timer expires. On the other hand, in a case where the UE requests for the RRC establishment for the purpose of transmitting a signal of a control plane for a Circuit Switched (CS)-based call, this cannot be rejected even if the eNodeB 200 is in the congestion state.

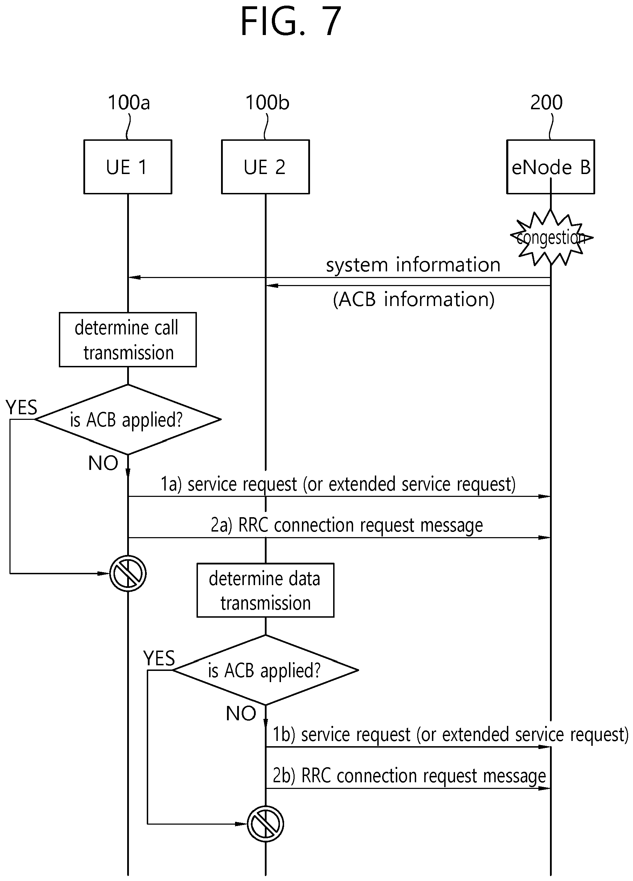

**FIG. 7** **is an exemplary flowchart illustrating an operation based on access class barring in a network congestion state.**

Referring to FIG. 7, in an overload or congestion state of a network or an eNodeB 200, the eNodeB 200 may broadcast Access Class Barring (ACB) related information via system information. The system information may be a System Information Block (SIB) type 2.

The SIB type 2 may include ACB related information as shown in Table below.

**[Table 2]**

| Field | Description |
|---|---|
| ac-BarringFactor | If a random value generated by a UE is less than a value caused by ac-BarringFactor, access is allowed. Otherwise, access is barred. |
| ac-BarringForCSFB | This is ACB for Circuit Switch (CS) fallback. The CS fallback is for switching a VoLTE call to a previous 3G call. |
| ac-BarringForEmergency | This is ACB for an emergency service. |
| ac-BarringForMO-Data | This is ACB for mobile originating data. |
| ac-BarringForMO-Signalling | This is ACB for a mobile originating control signal. |
| ac-BarringForSpecialAC | This is ACB for a specific access class, i.e., 11 to 15. |
| ac-BarringTime | This indicates a time in which access is barred. |
| ssac-BarringForMMTEL-Video | This is ACB of each service for mobile originating MMTEL video. |
| ssac-BarringForMMTEL-Voice | This is ACB of each service for mobile originating MMTEL voice. |

Meanwhile, the UE1 100a determines a call origination based on the IMS service, e.g., VoLTE, and determines whether the ACB is applied for this. Likewise, the UE2 100b determines a normal data origination, and determines whether the ACB is applied for this.

In general, at least one of 10 access classes (e.g., AC0, AC1, ..., AC9) is randomly allocated in the UE. Exceptionally, AC10 is allocated for an emergency access. As such, a value of the access class allocated randomly may be stored in each USIM of the UE1 100a and the UE2 100b.

Then, the UE1 100a and the UE2 100b check whether access barring is applied by using a barring factor field included in the received ACB related information, on the basis of the stored access class. Such an access barring check is performed in each of Access Stratum (AS) layers, i.e., RRC layers, of the UE1 100a and the UE2 100b.

If the ACB is not applied for this, the UE1 100a and the UE2 100b may respectively transmit the service request (or extended service request) message and the RRC connection request message.

However, if the ACB is applied for this, both of the UE1 100a and the UE2 100b cannot transmit the RRC connection request messages.

### <MultiMedia Telephony (MMtel)>

Recently, there are many researches on a multimedia telephony service (MMTel). The MMTel may provide converged, fixed mobile real-time multimedia communication as a global standard based on an IP multimedia subsystem (IMS), so that media capabilities such as voice, real-time video, text, file transmission, etc., can be used and photos, audio and video clips, etc., can be shared. In the MMTel, a user may add or delete media during a session. That is, during the session, chatting, voice adding, another caller adding, video adding, media sharing, file transmitting, and deleting of a specific capability thereof may be possible.

In a system supporting a current 3GPP standard multimedia telephony (MMTEL)-based (i.e., IMS-based) service, in order to start an MMTEL voice, MMTEL video, and SMS over IP service, an RRC connection request message is transmitted in a non-access stratum (NAS) of a UE by setting a call type as originating calls when starting a service request procedure, and by setting an RRC establishment cause as mobile originated data.

In general, MMTEL voice, MMTEL video, and SMS over IP signaling are transmitted to a user plane, and thus are provided without distinction from a normal data service (i.e., a call type = originating calls).

Therefore, if the UE desires to receive the MMTEL-based (i.e., IMS-based) service, e.g., a mobile originated (MO) MMTEL voice, MMTEL video, and SMS over IP-based service, and thus the UE intends to check whether access is barred before starting a service request procedure, since MMTEL (i.e., IMS) signaling for connecting voice call, video call, or SMS over IP is not differentiated from existing normal data signaling (i.e., call type = originating calls), ACB may be applied in the barring. Therefore, the MMTEL-based (IMS-based) MO service (in particular, MMTEL voice call, MMTEL video call, or SMS over IP) cannot be performed.

In addition, even if the UE intends to perform an MO short message service (SMS) service, signaling is not differentiated from the existing typical signaling (i.e., call types = originating calls), and ACB is equally applied in the barring. Therefore, the MO SMS service cannot be performed.

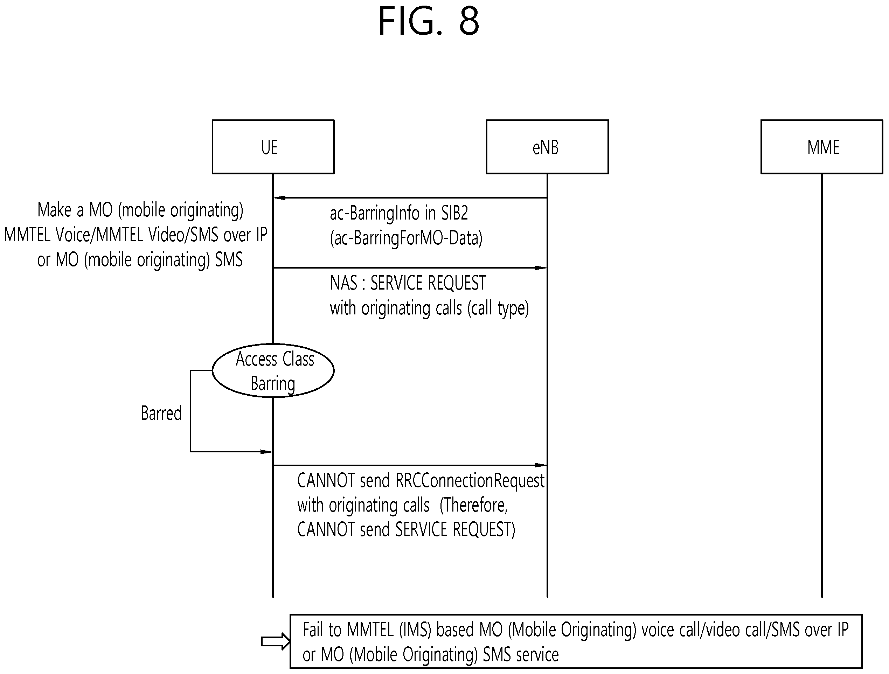

**FIG. 8** **illustrates an example showing a problem.**

Referring to FIG. 8, it is shown a situation in which a connection request for an MO MMTEL voice/MMTEL video/SMS over IP, and MO SMS service eventually fails due to ACB since normal data cannot be distinguished (differentiated/discriminated) from MMTEL voice/MMTEL video/SMS over IP, and SMS signaling.

Meanwhile, a procedure of a NAS layer for mapping an RRC establishment cause is described below.

If an EMM requests for an establishment of a NAS signaling connection, the RRC establishment cause used by a UE is selected according to a NAS procedure. The EMM must report a call type related to the RRC establishment cause to a lower layer for the purpose of an access control. If extended access barring (EAB) is set, the UE applies the EAB to the requests for the purpose of the access control except for the following cases.
- The UE is configured to use one of AC11 to AC 15 in a selected PLMN
- The UE responds to a paging signal
- An RRC establishment cause is set to Emergency call
- When the UE is configured to override the EAB
- When the UE is configured to override the EAB and already has a PDN connection established while overriding the EAB

**[Table 3]**

| NAS procedure | RRC establishment cause | Call type |
|---|---|---|
| Attach | If the attach request message has an EPS attach type not set to "EPS emergency attach", the RRC establishment cause shall be set to MO signalling except when the UE performs the attach procedure to establish emergency bearer services. | originating signalling |
| | If the attach request contains a device attribute set to "MS is configured for NAS signalling low priority", the RRC establishment cause shall be set to Delay tolerant | originating signalling |
| | If the attach request has an EPS attach type set to "EPS emergency attach" or if the attach request has an EPS attach type not set to "EPS emergency attach" but the UE performs the attach procedure upon receiving a request from an upper layer to establish emergency bearer services, the RRC establishment cause shall be set to Emergency call. | emergency calls |
| TAU(Tracking Area Update) | If the UE does not have a PDN connection established for emergency bearer services and is not initiating a PDN connection request that has a request type set to "emergency", the RRC establishment cause shall be set to MO signalling. | originating signalling |
| | If the UE does not have the PDN connection established for emergency bearer services and is not initiating the PDN connectivity request that has the request type set to "emergency", the TAU procedure is not triggered due to paging, and the TAU request contains a device attribute set to "MS is configured for NAS signalling low priority", the RRC establishment cause shall be set to Delay tolerant. | originating signalling |
| | If the UE does not have the PDN connection established for emergency bearer services and is not initiating the PDN connectivity request that has the request type set to "emergency", and the TAU procedure is triggered due to paging, the RRC establishment cause shall be set to MT access. | terminating calls |
| | If the UE has a PDN connection established for emergency bearer services or is initiating the PDN connectivity request that has the request type set to "emergency", the RRC establishment cause shall be set to Emergency call. | emergency calls |
| Detach | MO signalling | originating signalling |
| Service Request | If the service request is to request user plane radio resources, the RRC establishment cause shall be set to MO data. | originating calls |
| | If the service request is to request user plane radio resources for emergency bearer services, the RRC establishment cause shall be set to Emergency call. | emergency calls |
| | If the service request is to request resources for UL signalling, the RRC establishment cause shall be set to MO data. | originating calls |

**[Table 4]**

| ***SystemInformationBlockType2* field description** |
|---|
| ***ac-BarringFactor*** |
| When a random value generated by the UE is less than this number, access is allowed, and otherwise, access is barred. |
| ***ac-BarringForCSFB*** |
| ACB for CS fallback initiated by the UE |
| ***ac-BarringForEmergency*** |
| ACB for AC 10 |
| ***ac-BarringForMO-Data*** |
| ACB for call initiated by the UE |
| ***ac-BarringForMO-Signalling*** |
| ACB for signalling initiated by the UE |

In conclusion, there is no effective method in the current 3GPP standard when it is intended to support by distinguishing MMTEL-based (IMS-based) MO MMTEL voice, MO MMTEL video, MO SMS over IP, and MO SMS services. Such a problem leads to a waste of network resources and a degradation of user experiences.

### <Disclosures of the present specification>

Accordingly, a disclosure of the present specification proposes solutions for solving the aforementioned problem.

The present invention proposes a method of skipping access class barring (ACB) by distinguishing MMTEL (IMS) signaling and existing normal data signaling to differentiate the MMTEL-based (IMS-based) mobile originated (MO) MMTEL voice/MMTEL video/SMS over IP service. By skipping the ACB in this manner, the MMTEL-based (IMS-based) MO MMTEL voice/MMTEL video/SMS over IP service always allows a connection to provide a service by discriminating from other normal data services.

For this, a network (or an eNB) provides ACB skip information (i.e. ACB skipping bit = set/true/not set/false for MMTEL voice and/or MMTEL video and/or SMS over IP and/or SMS (SMS over SGs)) for the MMTEL voice/MMTEL video/SMS over IP service to an AS layer (e.g., an RRC layer) of a UE via SIB2. The AS layer (e.g., the RRC layer) of the UE may provide an IMS layer or NAS layer for MMTEL/SMS over IP with the ACB skip information for the MMTEL voice/MMTEL video/SMS over IP service provided from the network.

### <Summary of proposals 1-1/1-2/1-3>

First, the proposal 1-1 relates to an operation of a NAS layer and an AS layer (i.e., an RRS layer), the proposal 1-2 relates to an MMTEL (IMS) operation, and the proposal 1-3 relates to an SMS-over IP operation.

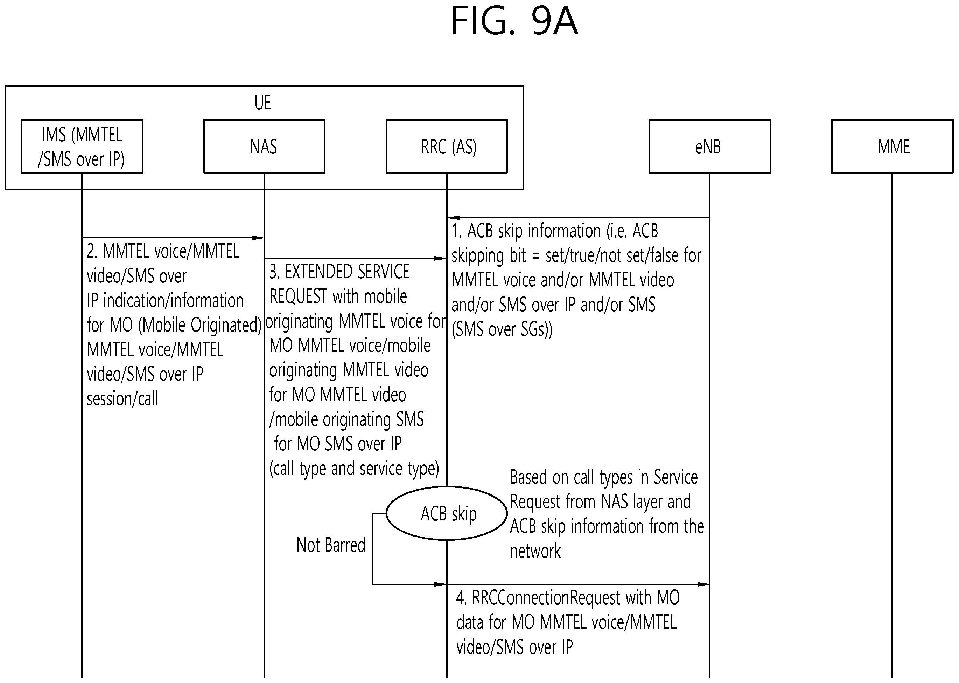

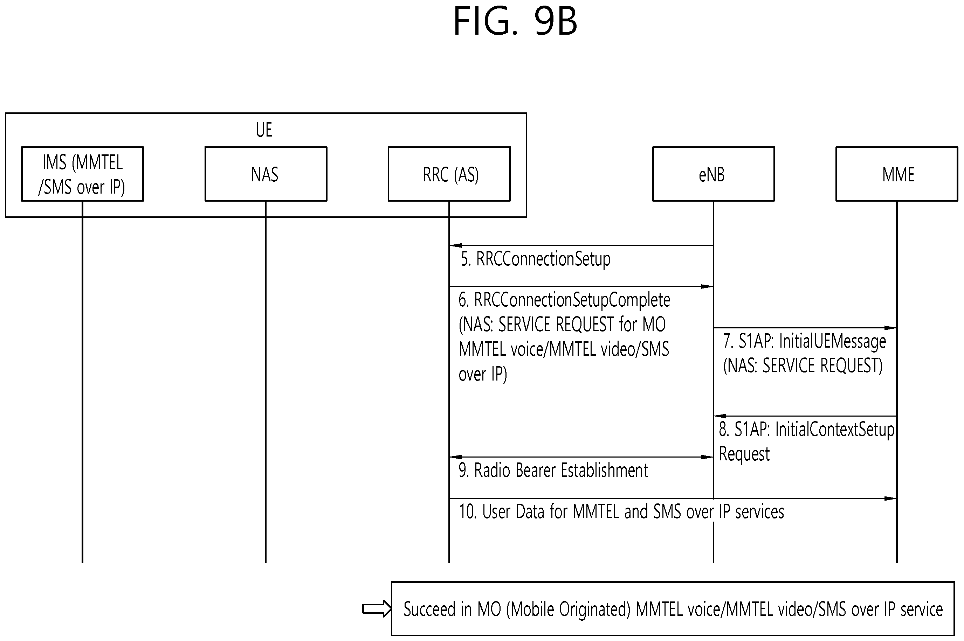

**FIG. 9a** **and** **FIG. 9b** **are signal flows illustrating proposals 1-1, 1-2, and 1-3 of the present specification.**

As can be seen from FIG. 9a and FIG. 9b, the proposals 1-1/1-2/1-3 provide a method of skipping access class barring (ACB) by distinguishing MMTEL (IMS) signaling and existing normal data signaling to differentiate the MMTEL-based (IMS-based) mobile originated (MO) MMTEL voice/MMTEL video/SMS over IP service. By skipping an ACB check in this manner, the MMTEL-based (IMS-based) MO MMTEL voice/MMTEL video/SMS over IP service always allows a connection to provide a service by discriminating from other normal data services.

For this, the network (e.g., eNB) may provide ACB skip information (i.e., ACB skipping bit = set/true/not set/false for MMTEL voice, MMTEL video, SMS over IP and/or SMS (SMS over SGs)) for the MMTEL voice/MMTEL video/SMS over IP/SMS (SMS over SGs) service to an AS layer (i.e., the RRC layer) via a system information block (e.g., SIBs).

When an IMS layer for MMTEL/SMS over IP starts a service connection for MO MMTEL voice/MMTEL video/MO SMS over IP, the IMS layer for MMTEL provides the NAS layer with an indication/information for reporting that it is a session/call for the MMTEL voice and the MMTEL video. Likewise, the IMS layer for the SMS over IP provides the NAS layer with an indication/information for reporting that it is an SMS over IP session.

If the IMS layer for MMTEL/SMS over IP provides a session/call indication for the MMTEL voice/MMTE video and/or the SMS over IP, the NAS layer recognizes that the session/call is not a normal data session/call but a session/call for the MMTEL voice, MMTEL video, and/or SMS over IP. Thereafter, the NAS layer starts a service request procedure to connect a session for the MMTEL voice/MMTE video or the SMS over IP. When the service request procedure is started, a service type is set to mobile originating MMTEL voice for MMTEL voice/mobile originating MMTEL video for MMTEL video/mobile originating SMS over IP for SMS over IP. The RRC establishment cause is set to MO data. The call type is set to originating MMTEL voice calls for MO MMTEL voice/originating MMTEL video calls for MO MMTEL video/mobile originating SMS for MO SMS over IP.

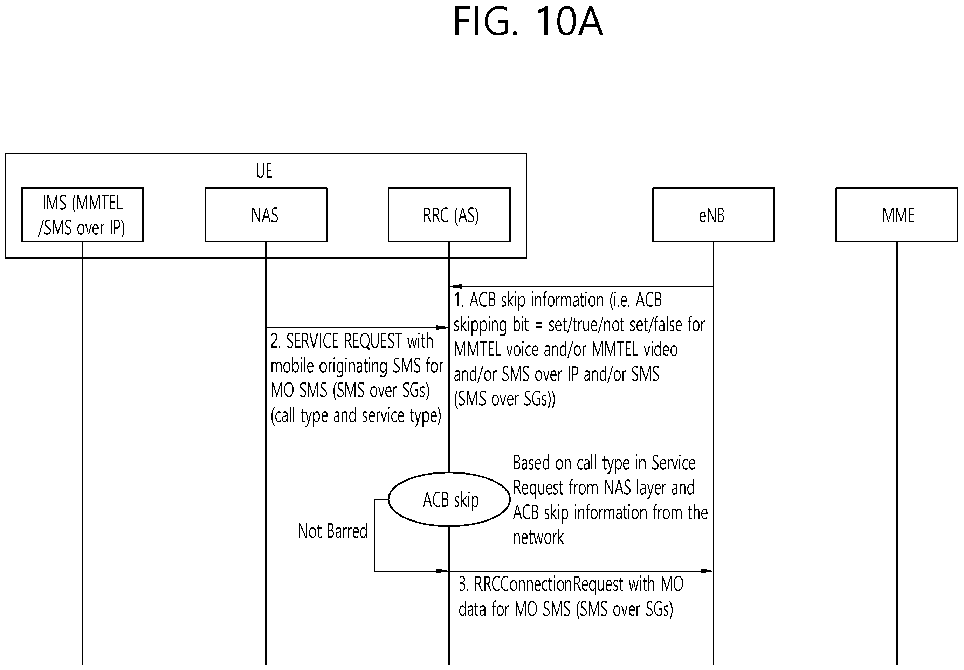

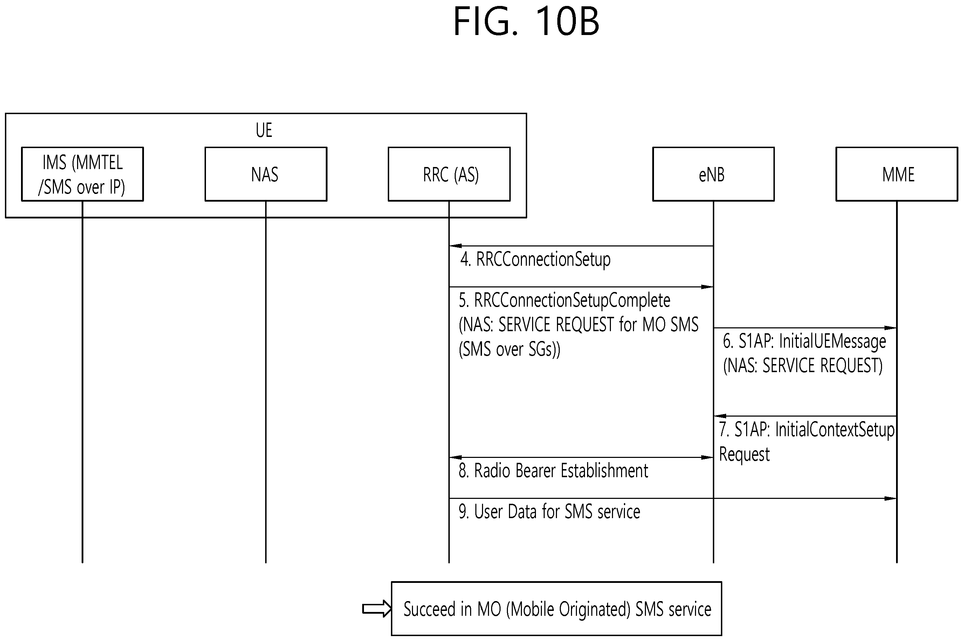

**FIG. 10a** **and** **FIG. 10b** **are signal flows illustrating the proposal 1-1 of the present specification.**

As can be seen from FIG. 10A and FIG. 10B, according to the proposal 1-1, in case of SMS (i.e., SMS over SGs; SMS over NAS), when a service request procedure is started for a mobile originated (MO) SMS connection, a NAS layer sets a service type to mobile originating SMS over SGs, sets an RRC establishment cause to MO data, and sets a call type to mobile originating SMS for MO SMS (SMS over SGs).

According to the proposals 1-1/1-2/1-3, if the IMS layer for MMTEL/SMS over IP provides a session/call indication for the MMTEL voice/MMTE video and/or the SMS over IP, the NAS layer recognizes that the session/call is not a normal data session/call but a session/call for the MMTEL voice, MMTEL video, and/or SMS over IP. Thereafter, the NAS layer starts a service request procedure to connect a session for MMTEL voice/MMTE video, and/or SMS over IP. The call type is set to originating MMTEL voice calls for MO MMTEL voice/originating MMTEL video calls for MO MMTEL video/mobile originating SMS for MO SMS over IP.

Hereinafter, each proposal will be described.

### <Proposal 1-1: Standard improvement>

The following abnormal cases can be identified.
a) Access barred because of access class barring or NAS signalling connection establishment rejected by the network without "Extended wait time" received from lower layers.
   - If an access indicated by a lower layer is barred but a service request is initiated for SMS except for an SMS over IP, a service request procedure may be started.

   If the access indicated by the lower layer is barred but the service request is initiated for MMTEL voice, MMTEL video, or SMS over IP, the service request procedure may be started.
   Otherwise, if the access is barred as to originating calls, the service request procedure may not be started. In a state where a UE stays in a current serving cell, a normal cell reselection procedure is performed.
b) The NAS signaling connection is released without an extended wait time received from the upper layer before a lower layer failure or the completion of the service request procedure.

**[Table 5]**

| NAS procedure | RRC establishment cause | Call type |
|---|---|---|
| Service Request | If the service request contains a service type set to mobile originating MMTEL voice, the RRC establishment cause shall be set to MO data. | originating MMTEL voice calls |
| | If the service request contains a service type set to mobile originating MMTEL video, the RRC establishment cause shall be set to MO data. | originating MMTEL video calls |
| | If the service request contains a service type set to mobile originating SMS over IP, the RRC establishment cause shall be set to MO data. | mobile originating SMS |
| | If the service request contains a service type set to mobile originating SMS over SGs, the RRC establishment cause shall be set to MO data. | mobile originating SMS |

### <Proposal 1-2: Standard improvement>

If there is a request for establishing a multimedia telephony communication session from a user, a UE supporting smart congestion mitigation (SCM) operates as follows.
1) If video is offered in the multimedia telephony communication session, MMTEL video is instructed to an EMM layer, and a session establishment is performed.
2) On the other hand, if audio is offered in the multimedia telephony communication session, MMTEL voice is instructed to the EMM layer, and a session establishment is performed.

Meanwhile, the SCM is described below.

The following information is provided to a NAS layer.
- ACB-skip-set(e.g., true/start/begin)-indication with MMTEL voice identifier
- ACB-skip-reset(e.g., false/stop/end)-indication with MMTEL voice identifier
- ACB-skip-set(e.g., true/start/begin)-indication with MMTEL video identifier
- ACB-skip-reset(e.g., false/stop/end)-indication with MMTEL video identifier

When the establishment of the multimedia telephony communication session is requested from the user and if the session establishment is continued after a service specific access control is performed, the following operation is performed.
1) If audio or real-time text or an audio and text combination is offered in the multimedia telephony communication session and there is no other multimedia telephony communication sessions, a UE provides the ACB-skip-set(e.g., true/start/begin)-indication with the MMTEL voice identifier to the NAS layer.
2) If video is offered in the multimedia telephony communication session and there is no other multimedia telephony communication sessions, the UE provides the ACB-skip-set(e.g., true/start/begin)-indication with the MMTEL video identifier to the NAS layer.

Meanwhile, when the multimedia telephony communication session ends, if the multimedia telephony communication session is established to transmit audio or real-time text or a combination of audio and text and there is no other session, then the UE may provide the ACB-skip-reset(e.g., false/stop/end)-indication) with the MMTEL voice identifier to the NAS layer.

Meanwhile, when the multimedia telephony communication session ends, if the multimedia telephony communication session is established to transmit video and there is no other session, then the UE may provide the ACB-skip-reset(e.g., false/stop/end)-indication with the MMTEL video identifier to the NAS layer.

### <Proposal 1-3: Standard improvement>

According to the proposal 1-3, if there is a request for establishing a multimedia telephony communication session from a user, a UE supporting SCM operates as follows.
1) If SMS-over-IP is offered in the multimedia telephony communication session, the UE instructs the SMS-over-IP to an EMM layer and continues with session establishment.
2) Otherwise, the session establishment is continued.

Meanwhile, the following information is provided to a NAS layer.
- ACB-skip-set(e.g., true/start/begin)-indication with SMS-over-IP identifier
- ACB-skip-reset(e.g., false/stop/end)-indication with SMS-over-IP identifier

If there is a request for transmitting SMS over IP from the user and there is no other originating SMS over IP, the UE instructs the ACB-skip-set(e.g., true/start/begin)-indication with the SMS-over IP identifier to the NAS layer.

If the transmitting of the SMS over IP ends and there is no other originating SMS over IP, the UE instructs the ACB-skip-reset(e.g., false/stop/end)-indication with the SMS-over IP identifier to the NAS layer.

### <Summary of proposals 2-1/2-2/2-3>

The proposal 2-1 relates to an operation of a NAS layer and an AS layer (e.g., RRC layer). The proposal 2-2 relates to an operation of an IMS layer and AS layer (e.g., RRC layer) for MMTEL. The proposal 2-3 relates to an operation of an IMS layer and AS layer (e.g., RRC layer) for SMS-over IP.

The proposals 2-1/2-2/2-3 propose a method of skipping an ACB check by distinguishing MMTEL (IMS) signaling and existing normal data signaling to differentiate the MMTEL-based (IMS-based) mobile originated (MO) MMTEL voice/MMTEL video/SMS over IP service. By skipping the ACB check in this manner, the MMTEL-based (IMS-based) MO MMTEL voice/MMTEL video/SMS over IP service always allows a connection to provide a service by discriminating from other normal data services.

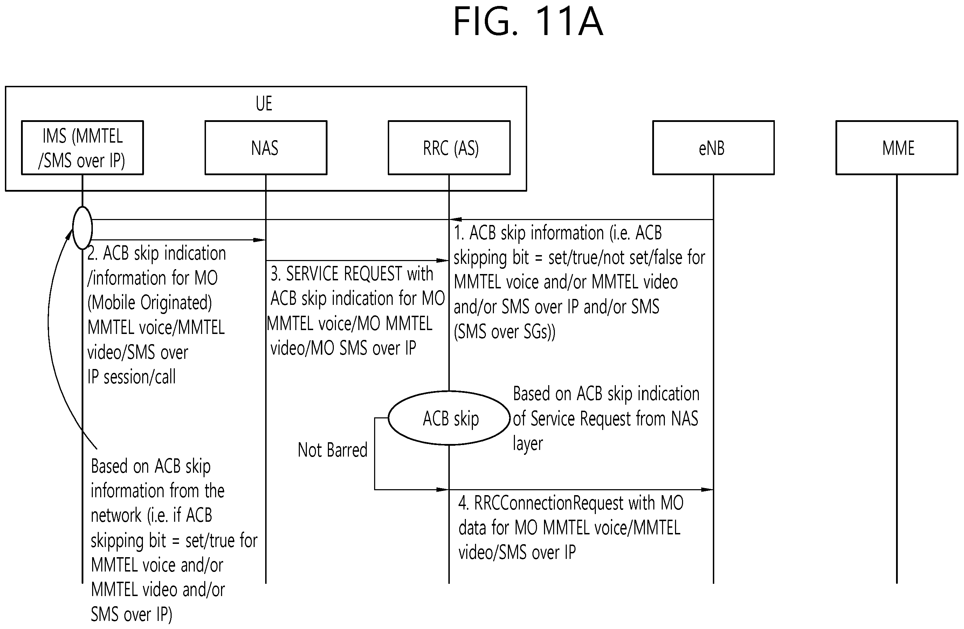

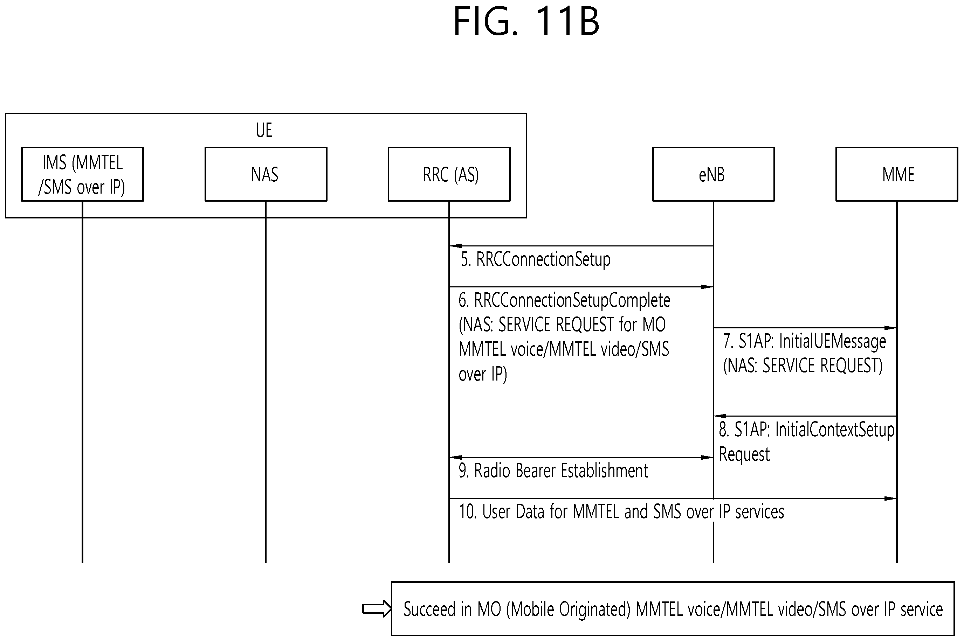

**FIG. 11a** **and** **FIG. 11b** **are signal flows illustrating the proposals 2-1, 2-2, and 2-3 of the present specification.**

As can be seen from FIG. 11a and FIG. 11b, a network (e.g., eNB) may provide ACB skip information (i.e., ACB skipping bit = set/true/not set/false for MMTEL voice, MMTEL video, SMS over IP and/or SMS (SMS over SGs)) for the MMTEL voice/MMTEL video/SMS over IP service to an AS layer (i.e., the RRC layer) via a system information block (e.g., SIBs). The AS layer (e.g., RRC layer) of a UE provides an IMS layer for MMTEL/SMS over IP with the ACB skip information for the MMTEL voice/MMTEL video/SMS over IP service provided from the network

According to the proposals 2-1/2-2/2-3, if the IMS layer for MMTEL/SMS over IP provides an ACB skip indication/information for the MMTEL voice/MMTE video and/or the SMS over IP, the NAS layer recognizes that the session/call is not a normal data session/call but a session/call for the MMTEL voice, MMTEL video, and/or SMS over IP. Thereafter, the NAS layer starts a service request procedure to connect a session for MMTEL voice/MMTE video, and/or SMS over IP. When the service request procedure is started, the ACB skip indication (i.e., ACB skip = set/true) is provided to the AS layer (e.g., RRC layer).

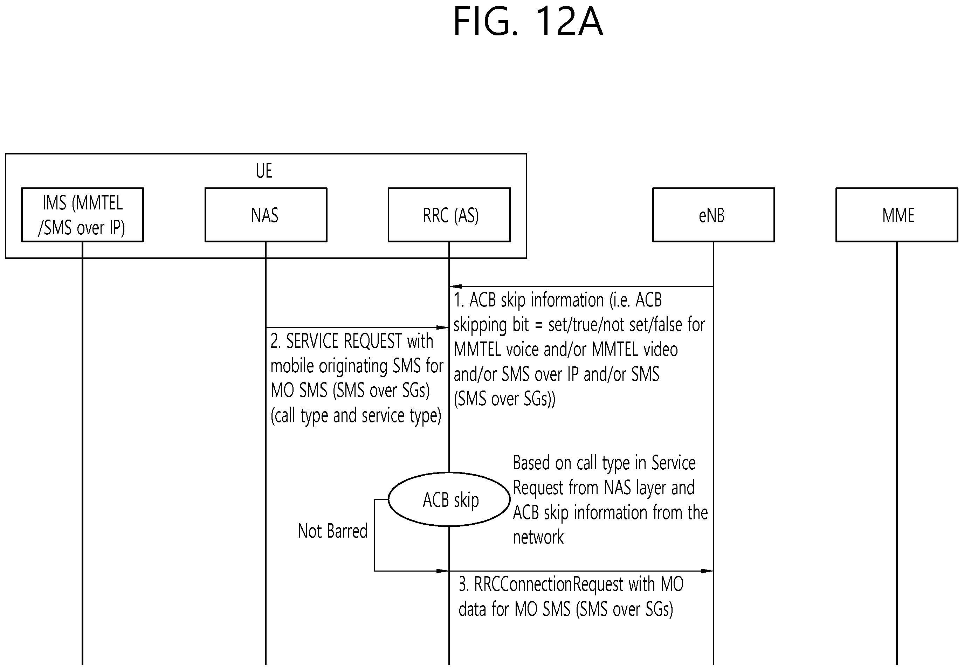

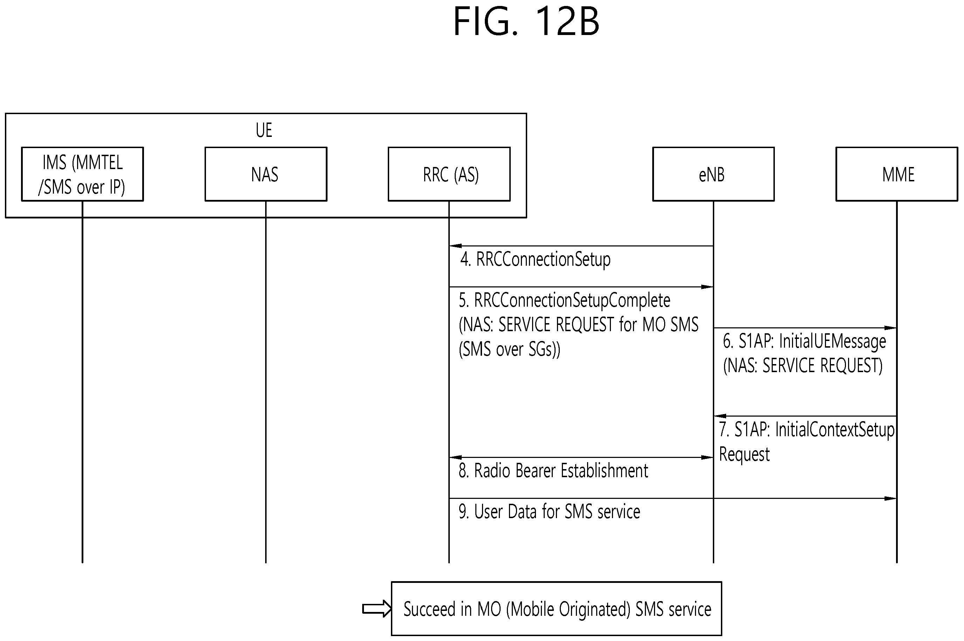

**FIG. 12a** **and** **FIG. 12b** **are signal flows illustrating the proposal 2-2 of the present specification.**

As can be seen from FIG. 12a and FIG. 12b, according to the proposal 2-1, in case of SMS (i.e., SMS over SGs; SMS over NAS), when a service request procedure is started for an MO SMS connection, a NAS layer sets a service type to mobile originating SMS over SGs, sets an RRC establishment cause to MO data, and sets a call type to mobile originating SMS for MO SMS (SMS over SGs).

Hereinafter, each proposal will be described in detail.

### <Proposal 2-1>

The following abnormal cases can be identified.
a) Access barred because of access class barring or NAS signalling connection establishment rejected by the network without "Extended wait time" received from lower layers.
   - If an access indicated by a lower layer is barred but a service request is initiated for SMS except for an SMS over IP, a service request procedure must be started.
   - If the access indicated by the lower layer is barred but the service request is initiated for MMTEL voice, MMTEL video, or SMS over IP, and if the UE is instructed to skip an ACB check from an upper layer, the service request procedure must be started.
b) The NAS signaling connection is released without an extended wait time received from the upper layer before a lower layer failure or the completion of the service request procedure.

Meanwhile, a procedure of a NAS layer for mapping an RRC establishment cause is described below.

When an EMM requests for an establishment of a NAS signaling connection, the RRC establishment cause used by a UE is selected according to a NAS procedure. The EMM must report a call type related to the RRC establishment cause to a lower layer for the purpose of an access control. Further, when the EMM requests for the NAS signaling connection, if the upper layer instructs to skip an ACB check, the EMM must deliver the skipping of the ACB check to the lower layer. If extended access barring (EAB) is set, the UE applies the EAB to the requests for the purpose of the access control except for the following cases.
- The UE is configured to use one of AC11 to AC 15 in a selected PLMN
- The UE responds to a paging signal
- An RRC establishment cause is set to Emergency call
- When the UE is configured to override the EAB
- When the UE is configured to override the EAB and already has a PDN connection established while overriding the EAB

**[Table 6]**

| NAS procedure | RRC establishment cause | Call type |
|---|---|---|
| Service Request | If the service request contains a service type set to mobile originating SMS over SGs, the RRC establishment cause shall be set to MO data. | mobile originating SMS |

Meanwhile, according to the proposal 2-1, the following abnormal cases can be identified.
a) Access barred because of access class barring or NAS signalling connection establishment rejected by the network without "Extended wait time" received from lower layers.

The ACB is not applied in the following cases.
- When the service request procedure is started in response to a paging request.
- When it is configured to skip an ACB check in an ACB skip indication received from the upper layer.

Meanwhile, the above proposal may be changed as follows.

If an EMM requests for an establishment of a NAS signaling connection, the RRC establishment cause used by a UE is selected according to a NAS procedure. The EMM must report a call type related to the RRC establishment cause to a lower layer for the purpose of an access control. If extended access barring (EAB) is set, the UE applies the EAB to the requests for the purpose of the access control except for the following cases.
- The UE is configured to use one of AC11 to AC 15 in a selected PLMN
- The UE responds to a paging signal
- An RRC establishment cause is set to Emergency call
- When the UE is configured to override the EAB
- When the UE is configured to override the EAB and already has a PDN connection established while overriding the EAB

If it is configured to skip the ACB check in the ACB skip indication received from the upper layer, the EMM indicates to the lower layer not to apply the ACB for this request for the purpose of the access control.

**[Table 7]**

| NAS procedure | RRC establishment cause | Call type |
|---|---|---|
| Service Request | If the service request is to request resources for UL signalling, except for mobile originating SMS, the RRC establishment cause shall be set to MO data. | originating calls |
| | If the service request is to request resources for mobile originating SMS, the RRC establishment cause shall be set to MO data. | originating SMS |

Alternatively, the above proposal may be modified as follows.

According to the above exemplary modification, the following abnormal cases can be identified.
a) Access barred because of access class barring or NAS signalling connection establishment rejected by the network without "Extended wait time" received from lower layers.

The ACB is not applied in the following cases.
- When the service request procedure is started in response to a paging request.
- When the service request procedure is started at the request of a user plane radio resource of the upper layer and it is configured to skip the ACB in the ACB skip information received from the upper layer.

Alternatively, the above proposal may be modified as follows.

If an EMM requests for an establishment of a NAS signaling connection, the RRC establishment cause used by a UE is selected according to a NAS procedure. The EMM must report a call type related to the RRC establishment cause to a lower layer for the purpose of an access control. If extended access barring (EAB) is set, the UE applies the EAB to the requests for the purpose of the access control except for the following cases.
- The UE is configured to use one of AC11 to AC 15 in a selected PLMN
- The UE responds to a paging signal
- An RRC establishment cause is set to Emergency call
- When the UE is configured to override the EAB
- When the UE is configured to override the EAB and already has a PDN connection established while overriding the EAB

The EMM may instruct the upper layer not to apply the ACB for the purpose of the access control in the following cases.
- When the UE receives the request for the radio resource of the user plane from the upper layer, and when it is configured to skip an ACB check in the ACB skip information received from the upper layer.

**[Table 8]**

| NAS procedure | RRC establishment cause | Call type |
|---|---|---|
| | If the service request is to request resources for UL signalling, except for mobile originating SMS (SMS over NAS), the RRC establishment cause shall be set to MO data. | originating calls |
| | If the service request is to request resources for mobile originating SMS (SMS over NAS), the RRC establishment cause shall be set to MO data. | originating SMS |

### <Proposal 2-2>

Improvement on smart congestion mitigation (SCM) will be described below according to the proposal 2-2.

The following information is provided by a lower layer.
- ACBSkipForMMTEL-Voice: ACB skipping bit for MMTEL voice;
- ACBSkipForMMTEL-Video: ACB skipping bit for MMTEL video

In case of receiving a user request for establishing a multimedia telephony communication session, the UE operates as follows.
1) Retrieve ACB skip information received from the lower layer.
2) If video is offered in the multimedia telephony communication session and if an ACB skipping bit is configured for MMTEL video, the UE instructs to skip an ACB check to the EMM layer and continues with session establishment.
3) If audio is offered in the multimedia telephony communication session and if the ACB skipping bit is configured for MMTEL voice, the UE instructs to skip he ACB check to the EMM layer and continues with session establishment.

### <Proposal 2-3>

Improvement on smart congestion mitigation (SCM) will be described below according to the proposal 2-3.

The following information is provided by a lower layer.
- ACBSkipForSMS-over-IP: ACB skipping bit for SMS-over-IP

In case of receiving a request for establishing a multimedia telephony communication session from a user, the UE operates as follows.
1) Retrieve ACB skip information received from the lower layer.
2) If SMS-over-IP is offered in the multimedia telephony communication session and if an ACB skipping bit is configured for SMS-over-IP, the UE instructs to skip an ACB check to the EMM layer and continues with session establishment.

### <Proposal 3>

The proposal 3 proposes a method of skipping an ACB check by distinguishing MMTEL (IMS) signaling and existing normal data signaling to differentiate the MMTEL-based (IMS-based) MMTEL voice/MMTEL video/SMS over IP service. By skipping the ACB check in this manner, the MMTEL-based (IMS-based) MO MMTEL voice/MMTEL video/SMS over IP service always allows a connection to provide a service by discriminating from other normal data services.

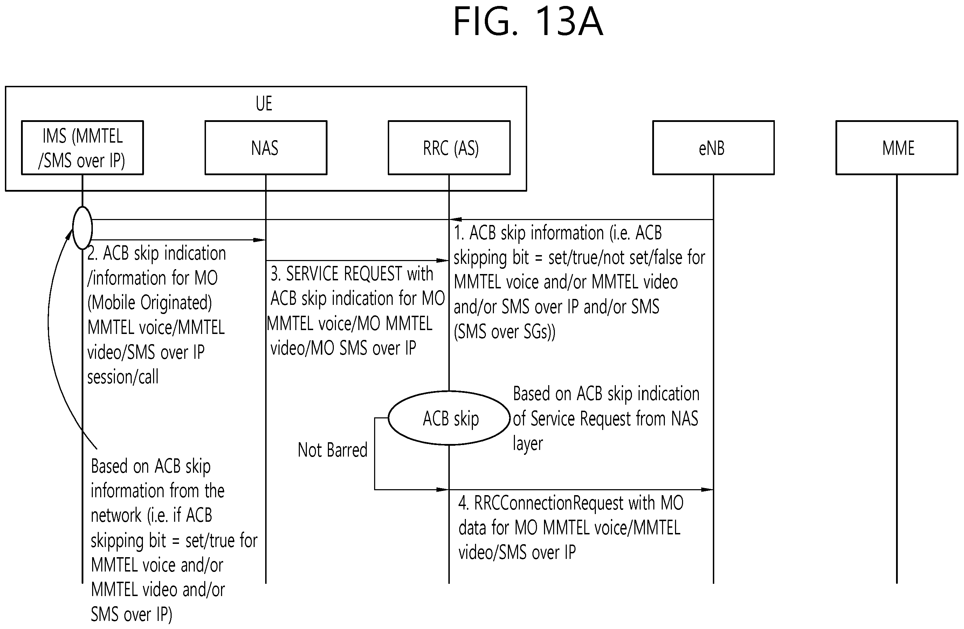

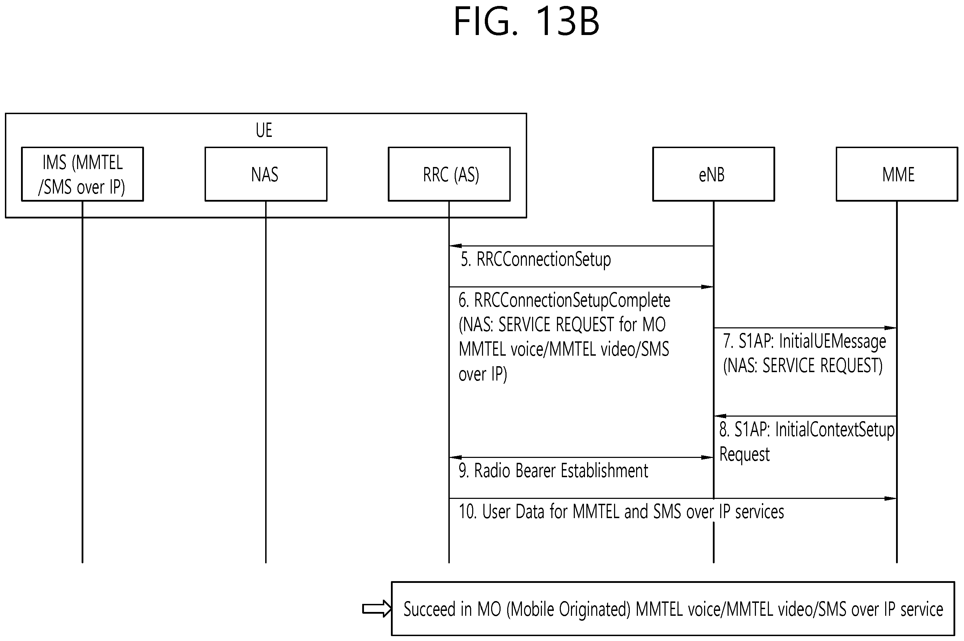

**FIG. 13a** **and** **FIG. 13b** **are signal flows illustrating the proposal 3 of the present specification.**

As can be seen from FIG. 13a and FIG. 13b, according to the proposal 3, for MMTEL voice/MMTEL video/SMS (specifically SMS over IP), if an IMS layer for MMTEL/SMS over IP provides an ACB skip indication/information for a session/call for the MMTEL voice, MMTEL video, and/or SMS over IP from an AS (RRC) layer, a NAS layer recognizes that the session/call is not a normal data session/call but a session/call for the MMTEL voice, MMTEL video, and/or SMS over IP. Thereafter, the NAS layer starts a service request procedure to connect a session for MMTEL voice/MMTE video, and/or SMS over IP. When the service request procedure is started, the ACB skip indication (i.e., ACB skip = set/true) is provided to the AS layer (e.g., RRC layer).

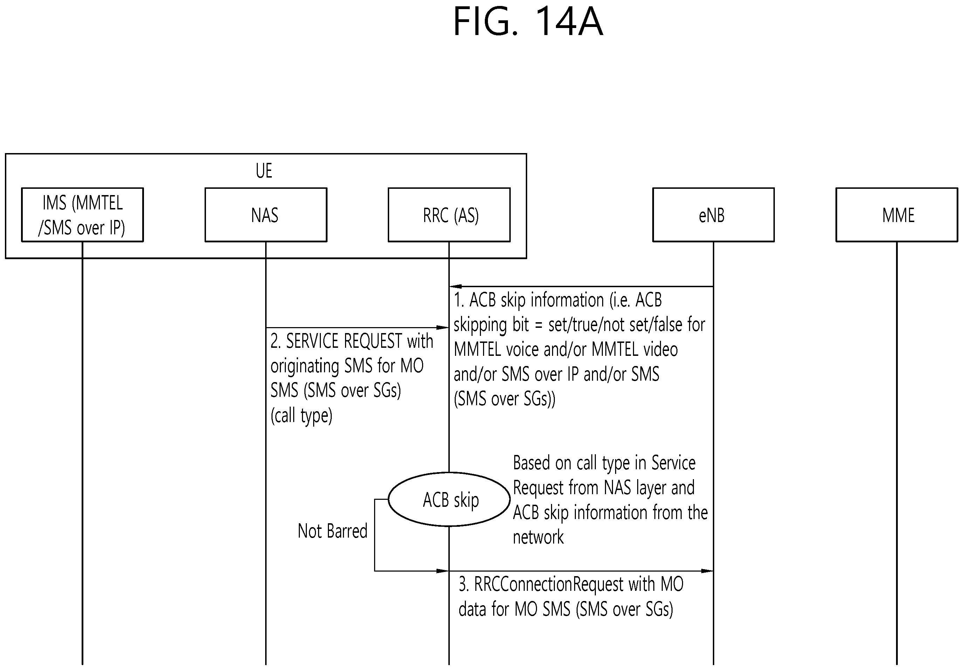

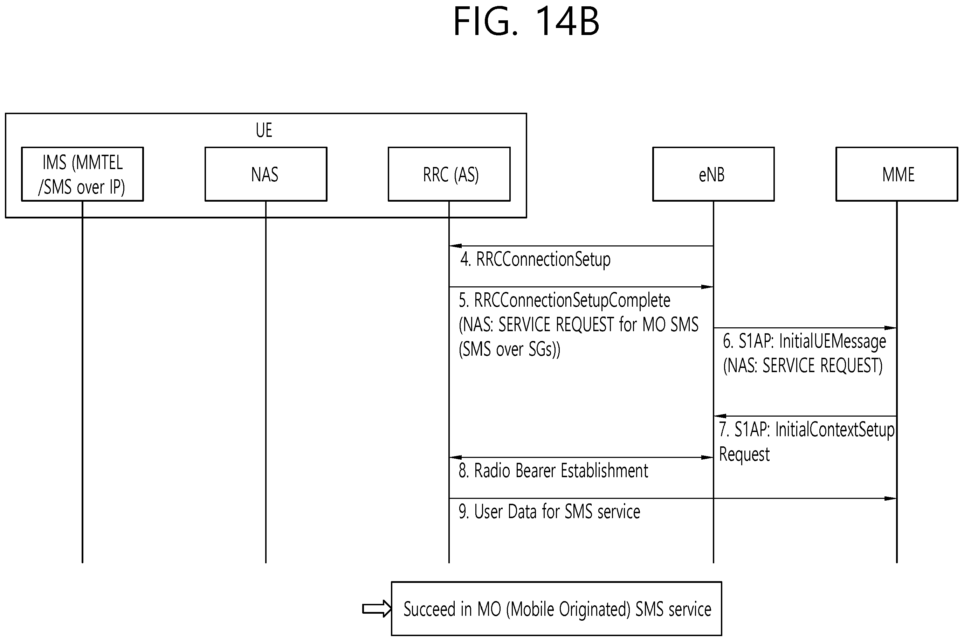

**FIG. 14a** **and** **FIG. 14b** **are signal flows illustrating an example of SMS in the proposal 3 of the present specification.**

Referring to FIG. 14a and FIG. 14b, in case of SMS (i.e., SMS over SGs; SMS over NAS), when a service request is started for a mobile originated (MO) SMS connection, a NAS layer sets a call type to mobile originating SMS for MO SMS (SMS over SGs), and sets an RRC establishment cause to MO data.

### <Proposal 4: Standard improvement>

The proposal 4 proposes a method of skipping an ACB check by distinguishing MMTEL (IMS) signaling and existing normal data signaling to differentiate the MMTEL-based (IMS-based) MMTEL voice/MMTEL video/SMS over IP service. By skipping the ACB check in this manner, the MMTEL-based (IMS-based) MO MMTEL voice/MMTEL video/SMS over IP service always allows a connection to provide a service by discriminating from other normal data services.

The proposal 4 is similar to the proposal 1-1. This is described in detail as follows.

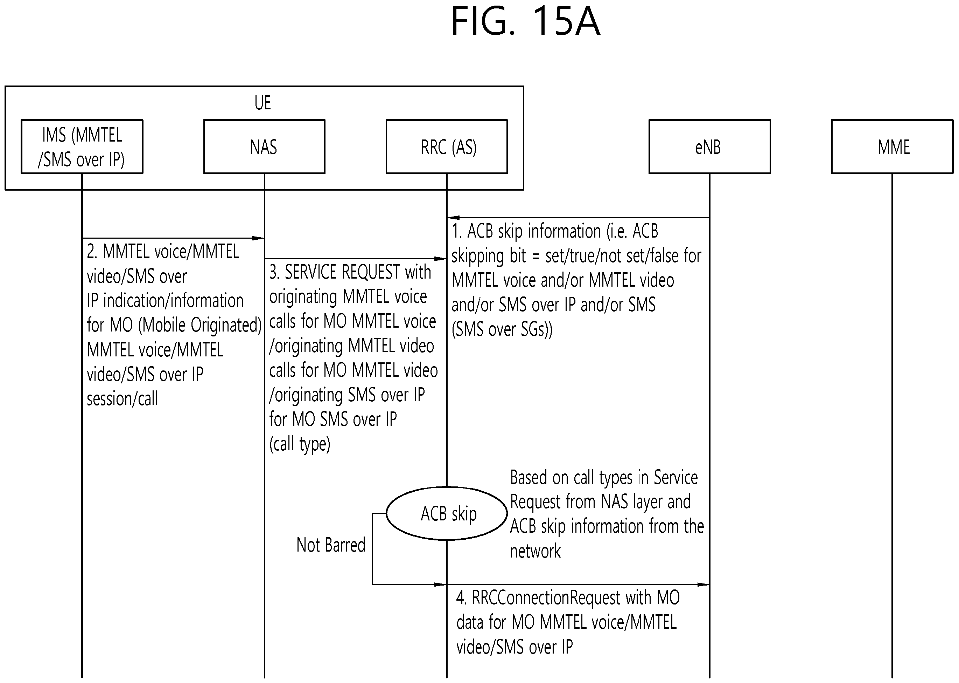

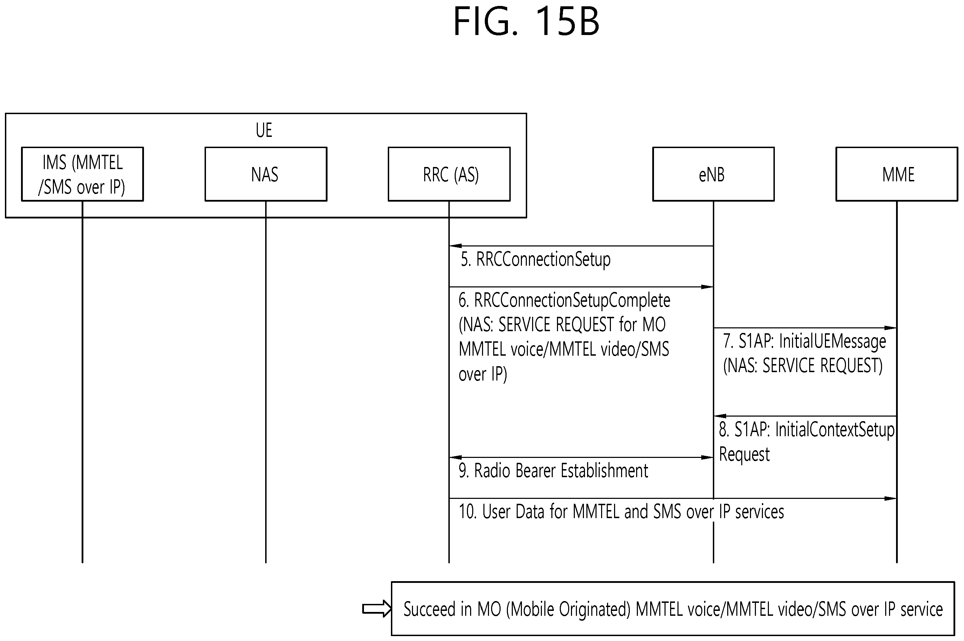

**FIG. 15a** **and** **FIG. 15b** **are signal flows illustrating the proposal 4 of the present specification.**

As can be seen from FIG. 14a and FIG. 14b, according to the proposal 4, for MMTEL voice/MMTEL video/SMS (specifically SMS over IP), when a service request procedure is started, a NAS layer sets a call type to mobile originating MMTEL voice, mobile originating MMTEL video or mobile originating SMS over IP for MO SMS over IP, and sets an RRC establishment cause to MO data.

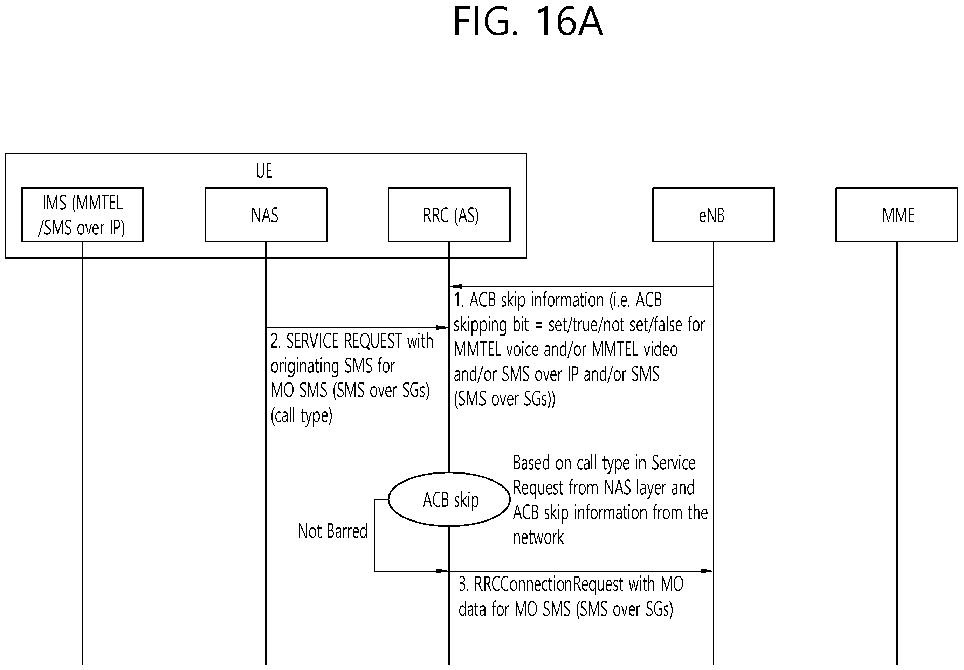

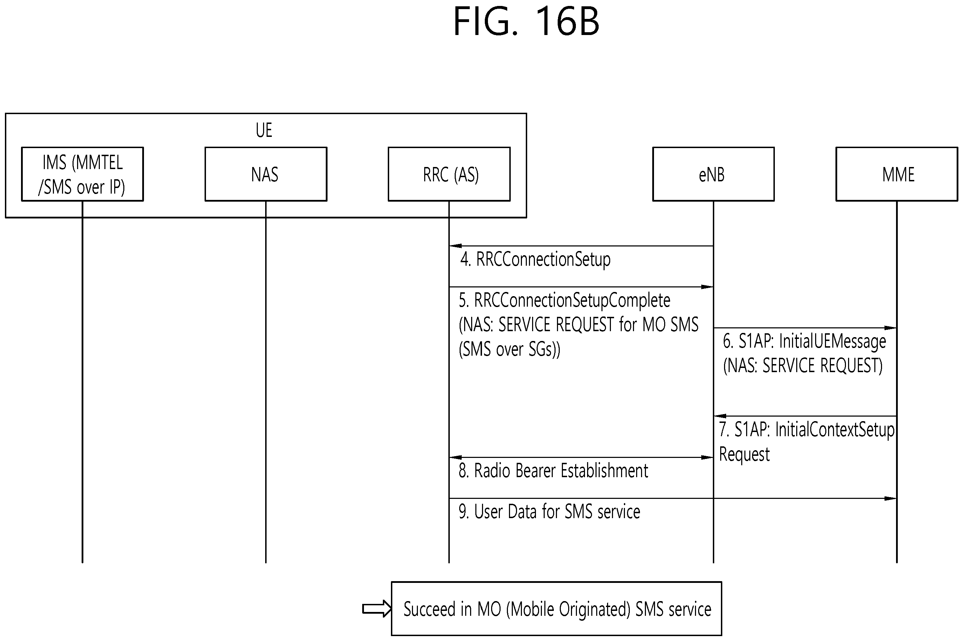

**FIG. 16a** **and** **FIG. 16b** **are signal flows illustrating an example of SMS in the proposal 4 of the present specification.**

As can be seen from FIG. 16a and FIG. 16b, according to the proposal 4, in case of SMS (i.e., SMS over SGs; SMS over NAS), when a service request procedure is started for a mobile originated (MO) SMS connection, a NAS layer sets a call type to originating SMS for MO SMS (SMS over SGs), and sets an RRC establishment cause to MO data.

According to the proposal 4, the following abnormal cases can be identified.
a) Access barred because of access class barring or NAS signalling connection establishment rejected by the network without "Extended wait time" received from lower layers.

The ACB is not applied in the following cases.
- When the service request procedure is initiated in response to a paging request of the network.
- When service indication (MMTEL voice, MMTEL voice, or SMS over IP) is received from an upper layer to skip the ACB.

**[Table 9]**

| NAS Procedure | RRC establishment cause | Call type |
|---|---|---|
| Service Request | If the service request is to request resources for UL signalling, except for mobile originating MMTEL voice, MMTEL video, SMS over IP, SMS (SMS over SGs), the RRC establishment cause shall be set to MO data. | originating calls |
| | If the service request is to request resources for mobile originating MMTEL voice, the RRC establishment cause shall be set to MO data. | originating MMTEL voice calls |
| | If the service request is to request resources for mobile originating MMTEL video, the RRC establishment cause shall be set to MO data. | originating MMTEL video calls |
| | If the service request is to request resources for mobile originating SMS over IP, the RRC establishment cause shall be set to MO data. | originating SMS over IP |
| | If the service request is to request resources for mobile originating SMS (SMS over SGs), the RRC establishment cause shall be set to MO data. | originating SMS |

In the aforementioned proposal, the service indicatoin provided from the upper layer (MMTEL layer) to the EMM layer (non-access stratum layer) may be an ACB skip bits indication for MMTEL voice or MMTEL video or SMS over IP or may be a service indicator/information which indicates MMTEL voice or MMTEL video or SMS over IP.

In the aforementioned proposal, when a service request procedure (i.e., transmission of a service request message) is started by dinstinguishing MMTEL voice, MMTEL video, SMS over IP, and SMS over NAS, the NAS layer defines originating MMTEL voice for MMTEL voice, originating MMTEL video for MMTEL video, originating SMS over IP for SMS over IP, and originating SMS for SMS over NAS as new call types for distinguishing MMTEL voice, MMTEL video, SMS over IP, and SMS over NAS, and sends them to the AS layer (i.e., RRC layer). The AS layer (i.e., RRC layer) establishes an RRC connection to perform a service request procedure (i.e., transmisison of a service request message) requested by the NAS. The IMS serivces and the SMS services are recognized with the new call types, and whether to skip a final ACB check is determined for each of them according to ACB skipp information included in a system information block (SIB) received from an eNB. That is, the AS layer (i.e., RRC layer) recognizes the IMS services and the SMS services by reading the new call types of the service request message of the NAS layer. Thereafter, if a corresponding service is set (e.g., ACB skipping ON) in the ACB skipping informatoin received from the network, a corresponding RRC connection is established, and otherwise, the corresponding RRC connection is not established, and access is barried.

Alternatively, the aforementioned proposal may be modified as follows.

**[Table 10]**

| NAS procedure | RRC establishment cause | Call type |
|---|---|---|
| Service Request | If the service request procedure contains a service type set to mobile originating SMS and is a request for mobile originating SMS, the RRC establishment cause shall be set to MO data. | originating SMS |
| | If the extended service request procedure contains a service type set to mobile originating MMTEL voice and is a request for mobile originating MMTEL voice, the RRC establishment cause shall be set to MO data. | mobile originating MMTEL voice |
| | If the extended service request procedure contains a service type set to mobile originating MMTEL video and is a request for mobile originating MMTEL video, the RRC establishment cause shall be set to MO data. | mobile originating MMTEL video |
| | If the extended service request procedure contains a service type set to mobile originating SMS over IP and is a request for mobile originating SMS over IP, the RRC establishment cause shall be set to MO data. | mobile originating SMS (SMS over IP) |

In the aforementioned proposal, the service indicatoin provided from the upper layer (e.g., MMTEL layer) to the EMM layer (e.g., NAS layer) may be an ACB skip bits indication for MMTEL voice or MMTEL video or SMS over IP or may be a service indicator/information which indicates MMTEL voice or MMTEL video or SMS over IP.

In the aforementioned proposal, when a service request procedure (i.e., transmission of an extended service request message) is started by dinstinguishing MMTEL voice, MMTEL video, SMS over IP, and SMS over NAS, the NAS layer defines mobile originating MMTEL voice, mobile originating MMTEL video, mobile originating SMS over IP, and mobile originating SMS as new call types for distinguishing MMTEL voice, MMTEL video, SMS over IP, and SMS over NAS and defines the new service types to the AS layer (i.e., RRC layer). In this case, new call types may be defined and used together with the newly defined service types. The AS layer (i.e., RRC layer) establishes an RRC connection to perform the service request procedure (i.e., transmission of the extended service request message) requested by the NAS. The IMS serivces and the SMS services are recognized with the service types and/or new call types, and whether to skip a final ACB check is determined for each of them according to ACB skip information included in system information (e.g., SIB) received from the network. That is, the AS layer (i.e., RRC layer) recognizes the IMS services and the SMS services by reading the new service types and/or call types of the service request message of the NAS layer. Thereafter, if a corresponding service is set (e.g., ACB skipping ON) in the ACB skipping informatoin received from the network, a corresponding RRC connection is established, and otherwise, the corresponding RRC connection is not established.

Meanwhile, the extended service request message is transmitted in the following cases.
- To initiate a CS fallback or to respond to mobile terminating CS fallback
- To request an establishment of NAS signaling

A service type is included in the extended service request message. The service type is as follows.

**[Table 11]**

| Service type value | | | | |
|---|---|---|---|---|
| Bit | | | | |
| 4 | 3 | 2 | 1 | |
| 0 | 0 | 0 | 0 | Mobile originating CS fallback |
| 0 | 0 | 0 | 1 | Mobile terminating CS fallback |
| 0 | 0 | 1 | 0 | Mobile originating CS fallback emergency call |
| 0 | 1 | 0 | 1 | Mobile originating MMTEL voice |
| 0 | 1 | 1 | 0 | Mobile originating MMTEL video |
| 0 | 1 | 1 | 1 | Mobile originating SMS (SMS over IP) |
| 1 | 1 | 0 | 0 | Mobile originating SMS |

Alternatively, upper layers indicate to skip an ACB check for MMTEL voice: the ACB-skip-set-indication with the "MMTEL voice" identifier was received from the upper layers, and after reception of the ACB-skip-set-indication with the "MMTEL voice" identifier, an ACB-skip-reset-indication with the "MMTEL voice" identifier has not been received.

Upper layers indicate to skip an ACB check for MMTEL video: the ACB-skip-set-indication with the "MMTEL video" identifier was received from the upper layers, and after reception of the ACB-skip-set-indication with the "MMTEL video" identifier, an ACB-skip-reset-indication with the "MMTEL video" identifier has not been received.

Upper layers indicate to skip an ACB check for MMTEL SMS-over-IP: the ACB-skip-set-indication with the "SMS-over-IP" identifier was received from the upper layers, and after reception of the ACB-skip-set-indication with the "SMS-over-IP" identifier, an ACB-skip-reset-indication with the "SMS-over-IP" identifier has not been received.

Meanwhile, the aforementioned proposal may be modified as follows.

The following abnormal cases can be identified.

a) Access barred because of access class barring or NAS signalling connection establishment rejected by the network without "Extended wait time" received from lower layers.

The ACB is not applied in the following cases.
- When the service request procedure is started in response to a paging request.
- When the service request procedure is started for mobile originating SMS.
- When the service request procedure is started if the upper layers request for user plane radio resources and the upper layers instruct to skip an ACB check for MMTEL voice.
- When the service request procedure is started if the upper layers request for user plane radio resources and the upper layers instruct to skip an ACB check for MMTEL video.
- When the service request procedure is started if the upper layers request for user plane radio resources and the upper layers instruct to skip an ACB check for SMS-over-IP.

If the trigger for the service request procedure is the response to a paging request and the NAS signalling connection establishment is rejected by the network, the service request procedure may not be started. If the UE stays in the current serving cell, a normal cell reselection procedure is performed. The service request procedure may be started when access for "terminating calls" is granted or because of a cell change or the like.

**[Table 12]**

| NAS procedure | RRC establishment cause | Call type |
|---|---|---|
| Service Request | If the service request is to request user plane radio resources and upper layers do not instruct to skip an ACB check for MO MMTEL voice, MO MMTEL video, or MO SMS-over-IP, the RRC establishment cause shall be set to MO data | originating calls |
| | If the service request is to request user plane radio resources and upper layers instruct to skip an ACB check for MO MMTEL voice, the RRC establishment cause shall be set to MO data | originating MMTEL voice |
| | If the service request is to request user plane radio resources and upper layers instruct to skip an ACB check for MO MMTEL video, the RRC establishment cause shall be set to MO data | originating MMTEL video |
| | If the service request is to request user plane radio resources and upper layers instruct to skip an ACB check for MO SMS-over-IP, the RRC establishment cause shall be set to MO data | originating SMS |
| | If the service request is to request resources for UL signalling not for MO SMS in MME, MO SMS over SGs, or MO SMS over S102, the RRC establishment cause shall be set to MO data. | originating calls |
| | If the service request is to request resources for UL signalling for MO SMS in MME, MO SMS over SGs, or MO SMS over S102, the RRC establishment cause shall be set to MO data. | originating SMS |

In the aforementioned proposal, when a service request procedure (i.e., transmission of a service request message) is started by dinstinguishing mobile originating (MO) MMTEL voice, MMTEL video, and SMS (specifically, SMS over IP, SMS over SGs, SMS in MME, or SMS over S102), the NAS layer defines originating MMTEL voice, originating MMTEL video, originating SMS as new call types by distinguishing MO MMTEL voice, MMTEL video, and SMS (specifically, SMS over IP, SMS over SGs, SMS in MME, or SMS over S102), and sends them to the AS layer (e.g., RRC layer). The AS layer (e.g., RRC layer) establishes an RRC connection to perform the service request procedure requested by the NAS. The IMS serivces and the SMS services are recognized with the new call types, and whether to skip a final ACB is determined for each of them according to ACB skipping nformation included in system information (e.g., SIB) received from the network. That is, the AS layer (i.e., RRC layer) recognizes the IMS services and the SMS services by reading the new call types of the service request message of the NAS layer. Thereafter, if a corresponding service is set (e.g., ACB skipping ON) in the ACB skipping informatoin received from the network, a corresponding RRC connection is established, and otherwise, the corresponding RRC connection is not established.

In addition, in the aforementioned proposal, if a tracking area update (TAU) request procedure for a NAS recovery is started (performed), when the TAU procedure (i.e., transmission of a TAU request message) is started by distinguishing MO MMTEL voice, MMTEL video, and SMS (specifically, SMS over IP, SMS over SGs, SMS in MME, or SMS over S102), the NAS layer defines originating MMTEL voice, originating MMTEL video, and originating SMS as new call types for distinguishing mobile originating (MO) MMTEL voice, MMTEL video, SMS (SMS over IP, SMS over SGs, SMS in MME, or SMS over S102), and sends them to the AS layer (e.g., RRC layer). The AS layer (e.g., RRC layer) establishes an RRC connection to perform the TAU procedure requested by the NAS. The IMS serivces and the SMS services are recognized with the new call types, and whether to skip a final ACB checkc is determined for each of them according to ACB skip information provided from the network. That is, the AS layer (i.e., RRC layer) recognizes the IMS services and the SMS services by recognizing the new call types of the TAU request message of the NAS layer. Thereafter, if a corresponding service is set (i.e., ACB skipping ON) in the ACB skipping informatoin received from the network, a corresponding RRC connection is established (in this case, RRC establishment cause is set to MO signalling), and otherwise, the corresponding RRC connection is not established.

On the other hand, upper layers may indicate to skip an ACB check for MMTEL voice: For example, it may be a case where the ACB-skip-set-indication with the "MMTEL voice" identifier was received from the upper layers, and after reception of the ACB-skip-set-indication with the "MMTEL voice" identifier, the ACB-skip-reset-indication with the "MMTEL voice" identifier has not been received.

The upper layers may indicate to skip an ACB check for MMTEL video. For example, it may be a case where the ACB-skip-set-indication with the "MMTEL video" identifier was received from the upper layers, and after reception of the ACB-skip-set-indication with the "MMTEL video" identifier, the ACB-skip-reset-indication with the "MMTEL video" identifier has not been received.

The upper layers may indicate to skip an ACB check for MMTEL SMS-over-IP. For example, it may be a case where the ACB-skip-set-indication with the "SMS-over-IP" identifier was received from the upper layers, and after reception of the ACB-skip-set-indication with the "SMS-over-IP" identifier, the ACB-skip-reset-indication with the "SMS-over-IP" identifier has not been received.

On the other hand, the aforementioned proposal may be modified as follows.

The following abnormal cases can be identified.
a) Access barred because of access class barring or NAS signalling connection establishment rejected by the network without "Extended wait time" received from lower layers.

The ACB is not applied in the following cases.
- When the service request procedure is started in response to a paging request.
- When the service request procedure is started due to MO SMS (e.g., SMS in MME, SMS over SGs or SMS over S102).
- When the service request procedure is started if the upper layers request for user plane radio resources and the upper layers instruct to skip an ACB check for MMTEL voice.
- When the service request procedure is started if the upper layers request for user plane radio resources and the upper layers instruct to skip an ACB check for MMTEL video.
- When the service request procedure is started if the upper layers request for user plane radio resources and the upper layers instruct to skip an ACB check for SMS-over-IP.

If the trigger for the service request procedure is started in response to paging from the network and the NAS signalling connection establishment is rejected by the network, the service request procedure must not be started. If the UE stays in the current serving cell, a normal cell reselection procedure may be performed.

**[Table 13]**

| NAS procedure | RRC establishment cause | Call type |
|---|---|---|
| Service Request | If the extended service request contains a service type set to mobile originating (MO) MMTEL voice and is performed to request MO MMTEL voice, and if upper layers instruct to skip an ACB check for MO MMTEL voice, the RRC establishment cause shall be set to MO data. | originating MMTEL voice |
| | If the extended service request contains a service type set to MO MMTEL video and is performed to request MO MMTEL voice, and if upper layers instruct to skip an ACB check for MO MMTEL video, the RRC establishment cause shall be set to MO data. | originating MMTEL video |
| | If the extended service request contains a service type set to MO SMS over IP and is performed to request MO MMTEL voice, and if upper layers instruct to skip an ACB check for MO SMS over IP, the RRC establishment cause shall be set to MO data. | originating SMS |
| | If the extended service request contains a service type set to mobile originating SMS in MME, mobile originating SMS over SGs, or mobile originating SMS over S102 and is performed for mobile originating SMS in MME, mobile originating SMS over SGs, or mobile originating SMS over S102, the RRC establishment cause shall be set to MO data. | originating SMS |

In the aforementioned proposal, when a service request procedure (i.e., transmission of an extended service request message) is started by dinstinguishing mobile originating (MO) MMTEL voice, MMTEL video, and SMS (specifically, SMS over IP, SMS over SGs, SMS in MME, or SMS over S102), the NAS layer defines new service types, e.g., mobile originating MMTEL voice for MMTEL voice, mobile originating MMTEL video for MMTEL video, and mobile originating SMS, for distinguishing MMTEL voice, MMTEL video, and SMS (specifically, SMS over IP, SMS over SGs, SMS in MME, or SMS over S102), and sends them to the AS layer (e.g., RRC layer). In this case, new call types may be defined and used together with the newly defined service types. The AS layer (e.g., RRC layer) establishes an RRC connection to perform the service request procedure (e.g., transmission of an extended service request message) requested by the NAS. The IMS serivces and the SMS services are recognized with the service types and/or new call types, and whether to skip a final ACB check is determined for each of them according to ACB skip information included in SIB provided from the network. That is, the AS layer (e.g., RRC layer) recognizes the IMS services and the SMS services by reading the new service types and/or call types of the service request message of the NAS layer. Thereafter, if a corresponding service is set (e.g., ACB skipping ON) in the ACB skipping informatoin received from the network, a corresponding RRC connection is established, and otherwise, the corresponding RRC connection is not established.

**[Table 14]**

| Service request value | | | | |
|---|---|---|---|---|
| Bit | | | | |
| 4 | 3 | 2 | 1 | |
| 0 | 0 | 0 | 0 | Mobile originating (MS) CS fallback |
| 0 | 0 | 0 | 1 | Mobile terminating (MT) CS fallback |
| 0 | 0 | 1 | 0 | MO CS fallback emergency call |
| 0 | 1 | 0 | 1 | MO MMTEL voice |
| 0 | 1 | 1 | 0 | MO MMTEL video |
| 0 | 1 | 1 | 1 | MO SMS over IP |
| 1 | 0 | 0 | 0 | Packet service |
| 1 | 1 | 0 | 0 | MO SMS in MME, SMS over SGs, or SMS over S102 |

### <Proposal 5-1: Standard improvement>

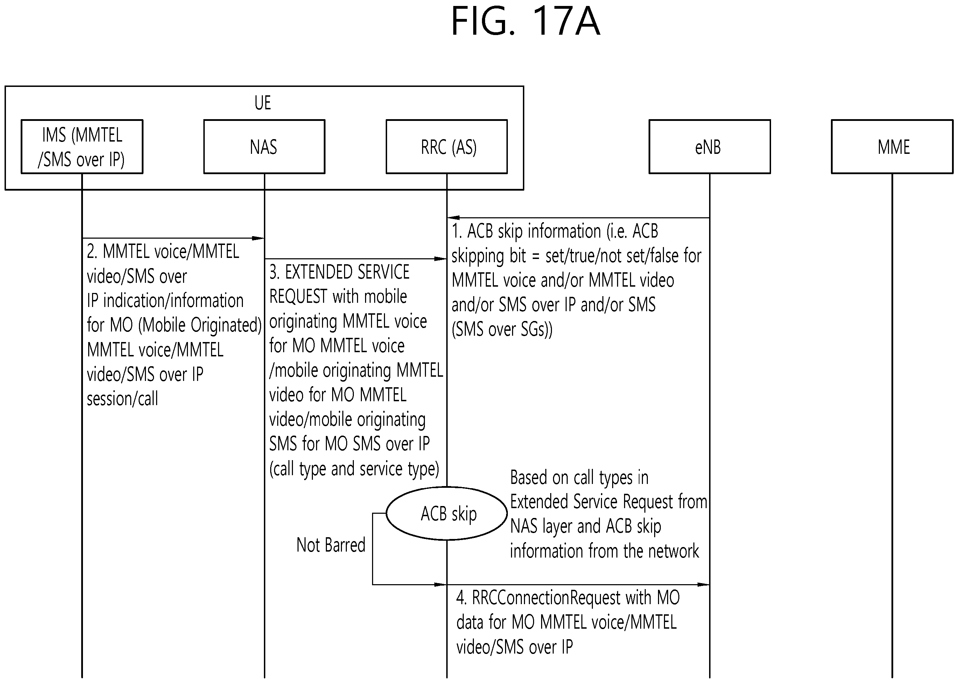

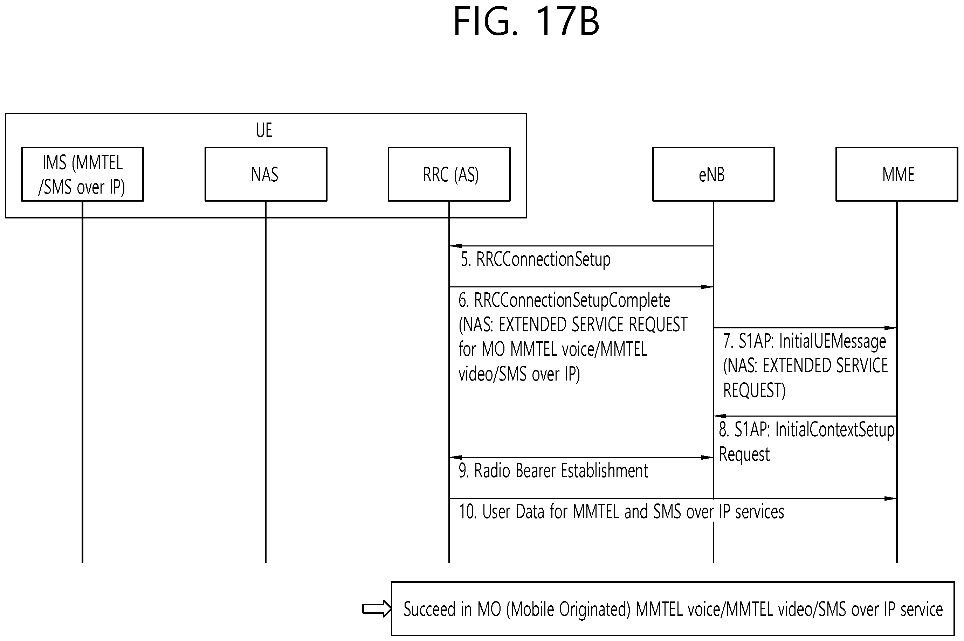

**FIG. 17a** **and** **FIG. 17b** **are signal flows illustrating the proposal 5-1 of the present specification.**

As can be seen from FIG. 17a and FIG. 17b, according to the proposal 5-1, if an IMS layer for MMTEL/SMS over IP provides an ACB skip indication for a session/call for MMTEL voice/MMTE video and/or SMS over IP, a NAS layer recognizes that the session/call is not a normal data session/call but a session/call for MMTEL voice, MMTEL video, and/or SMS over IP. Thereafter, the NAS layer starts a service request procedure to connect the session for MMTEL voice/MMTE video, or SMS over IP. In this case, an extended service request message is used. When a service request procedure is started, a service type of the extended service request message is set to mobile originating MMTEL voice for MMTEL voice/mobile originating MMTEL video for MMTEL video/mobile originating SMS over IP for SMS over IP, an RRC establishment cause is set to MO data, and a call type is set to mobile originating MMTEL voice calls for MO MMTEL voice/mobile originating MMTEL video calls for MO MMTEL video/mobile originating SMS for MO SMS (SMS over IP).

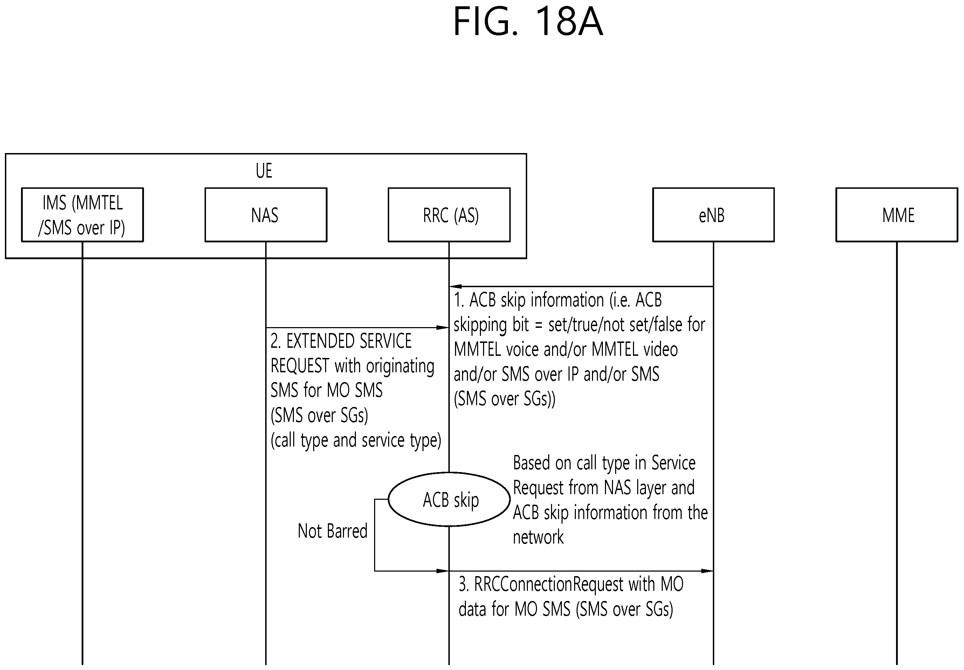

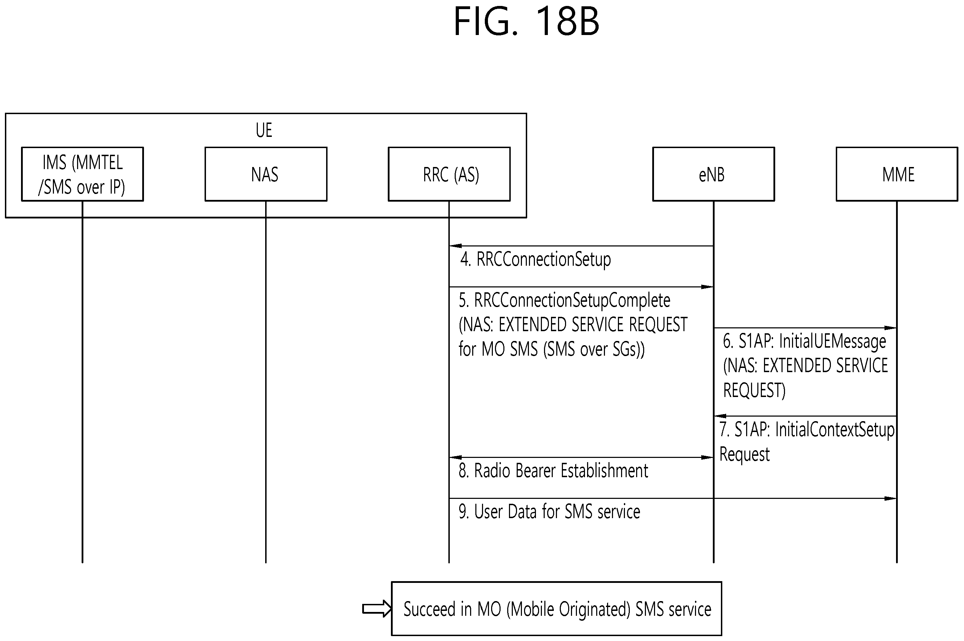

**FIG. 18a** **and** **FIG. 18b** **are signal flows illustrating an example for SMS in the proposal 5 of the present specification.**

Referring to FIG. 18a and FIG. 18b, in case of SMS (i.e., SMS over SGs; SMS over NAS), when a service request procedure is started for a mobile originated (MO) SMS connection, a NAS layer sets a service type of an extended service request message to mobile originating SMS, and sets a call type to originating SMS for MO SMS.

### <Proposal 5-2>

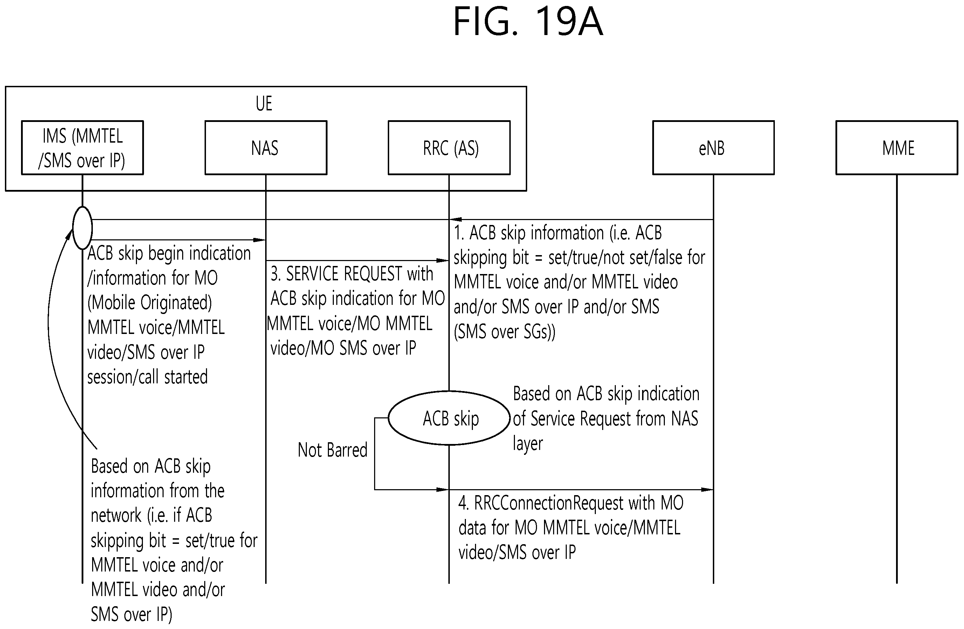

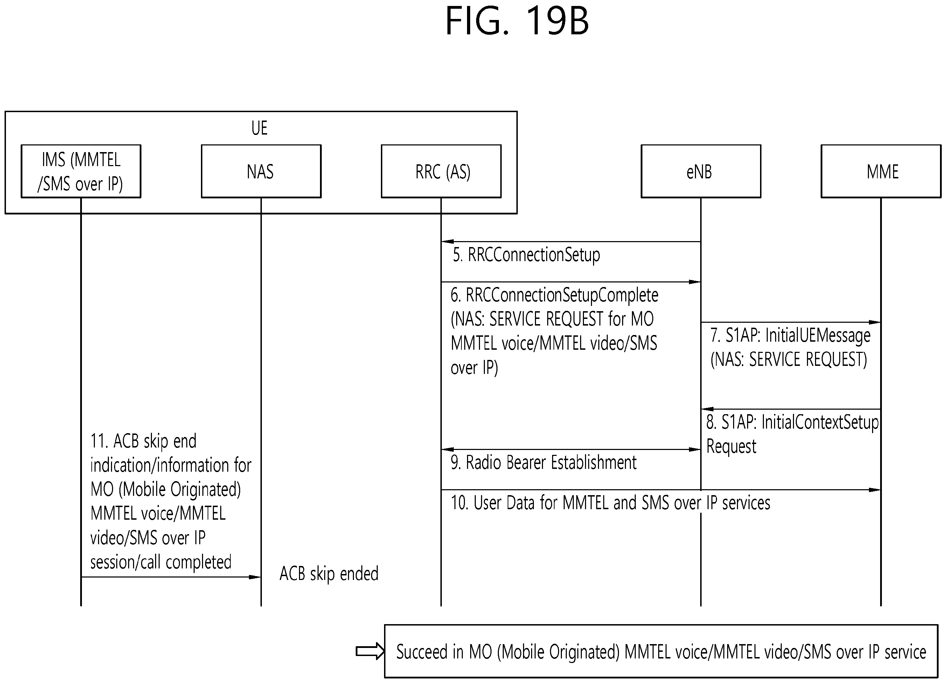

**FIG. 19a** **and** **FIG. 19b** **are signal flows illustrating an example of the proposal 5-2 according to the present specification.**

According to the proposal 5-2, upon starting a service connection for MO MMTEL voice/MMTEL video/MO SMS over IP, an IMS layer for MMTEL/SMS over IP confirms ACB skip information for the MMTEL voice/MMTEL video/SMS over IP service provided from an AS layer (e.g., RRC layer), and if ACB skipping bit = set/true as to the MMTEL voice and/or MMTEL video, and/or SMS over IP, provides an ACB skip begin indication/information to a NAS layer to report a start of a session/call for MMTEL voice and MMTEL video. Likewise, an IMS layer for SMS over IP provides an ACB skip begin indication/information to the NAS layer to report the start of a session for SMS over IP.

In addition, according to the proposal 5-2, upon receiving an ACB skip indication/information (i.e., ACB skip being indication) on a session/call for MO MMTEL voice, MO MMTEL video, or MO SMS over IP from an IMS layer for MMTEL/SMS over IP, the NAS layer recognizes that the session/call is not a normal data session/call but a start of a session/call for MMTEL voice, MMTEL video, and/or SMS over IP. Thereafter, the NAS layer starts a service request procedure to connect a session for MMTEL voice, MMTEL video, or SMS over IP. When the service request procedure is started, ACB skip information (i.e., ACB skip = set/true) is provided together to the AS layer (e.g., RRC layer).

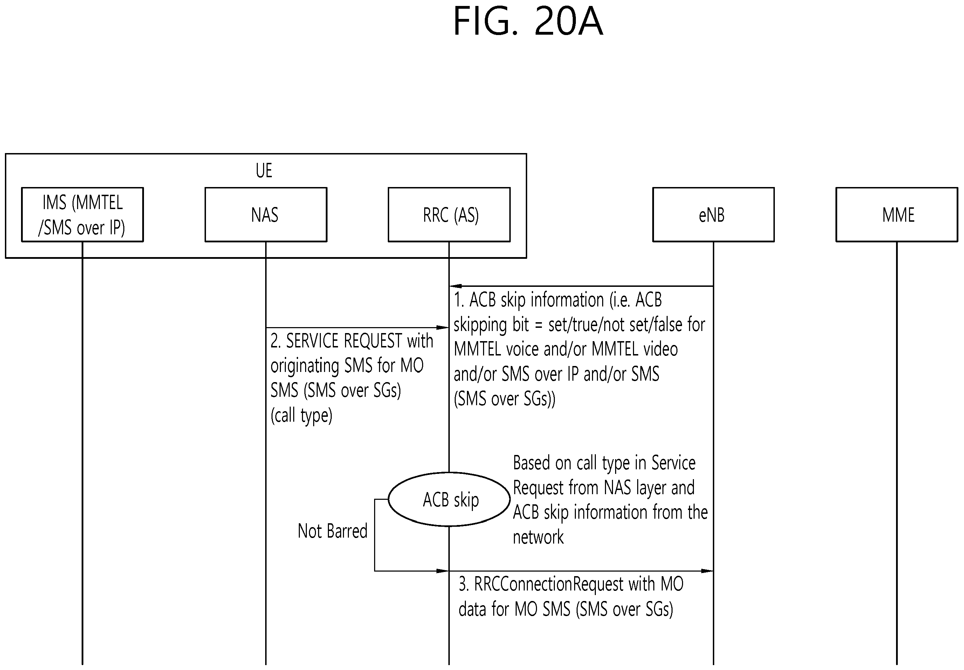

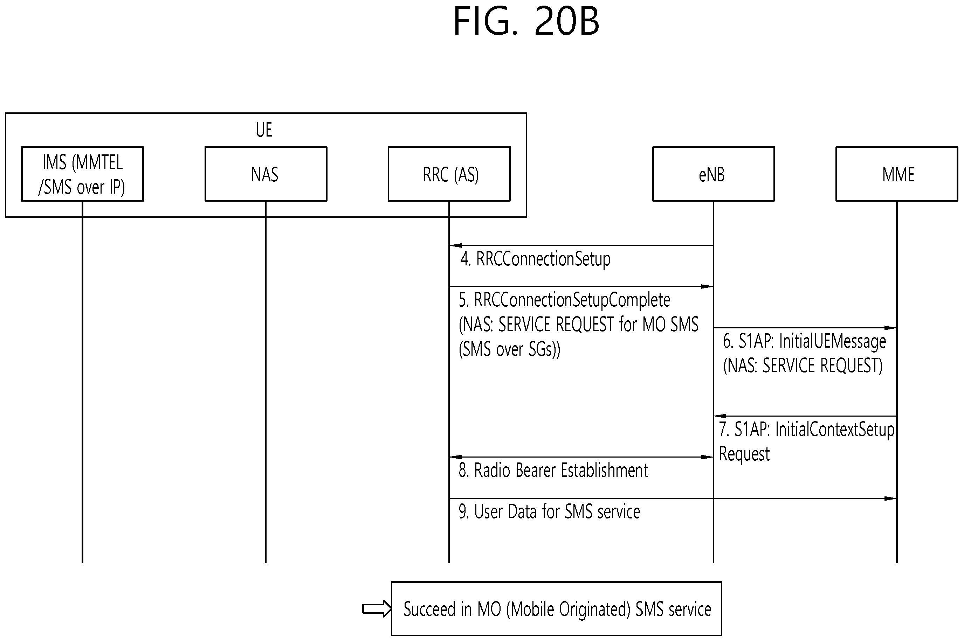

**FIG. 20a** **and** **FIG. 20b** **are signal flows illustrating an example for SMS in the proposal 5-2 of the present specification.**

Referring to FIG. 20a and FIG. 20b, in case of SMS (i.e., SMS over SGs; SMS over NAS), when a service request procedure is started for a mobile originated (MO) SMS connection, a NAS layer sets a call type to originating SMS for MO SMS (SMS over SGs), and sets an RRC establishment cause to MO data.

Returning to FIG. 19a and FIG. 19b, upon ending/terminating a service connection for MO MMTEL voice/MMTEL video/MO SMS over IP, an IMS layer for MMTEL/SMS over IP provides an ACB skip end indication/information to a NAS layer to report an end of an MMTEL voice and MMTEL video session/call. Likewise, an IMS layer for SMS over IP provides an ACB skip end indication/information to the NAS layer to report the end of an SMS over IP session.

More specifically, if the IMS layer for MMTEL/SMS over IP provides a session/call end indication/information (i.e., ACB skip end indication/information) for MO MMTEL voice, MO MMTEL video, or MO SMS over IP, the NAS layer recognizes the end of the session/call for MO MMTEL voice, MMTEL video, or MO SMS over IP. Thereafter, the NAS layer does not skip an ACB check on the MMTEL voice, MMTEL video, or SMS over IP session. That is, by being recognized as a session for normal data/call, a normal service request procedure is performed, and ACB is applied in the AS layer (i.e., RRC layer).

According to the proposal 5-2, the ACB skip begin indication/information and the ACB skip end indication/information are used.

For this, smart congestion mitigation (SCM) may be improved as follows.

The following information is provided from an AS layer.
- ACBSkipForMMTEL-Voice: ACB skipping bit for MMTEL voice
- ACBSkipForMMTEL-Video: ACB skipping bit for MMTEL video

The following information is provided to a NAS layer.
- ACB-skip-begin-indication;
- ACB-skip-end-indication.

If a request is received from a user to establish a multimedia telephony communication session and if the session establishment is continued after performing a service specific access control, a UE operates as follows.
1) Retrieve ACB skip information acquired from an AS layer.
2) If video is offered in the multimedia telephony communication session and if an ACB skipping bit for MMTEL video is set, the UE delivers ACB-skip-begin-indication to the NAS layer and continues with session establishment.
3) If audio is offered in the multimedia telephony communication session and if an ACB skipping bit for MMTEL voice is set, the UE delivers ACB-skip-begin-indication to the NAS layer and continues with session establishment.

If the multimedia telephony communication session ends, the UE delivers ACB-skip-end-indication to the NAS layer.

Alternatively, smart congestion mitigation (SCM) may be improved as follows.

The following information is provided from an AS layer.
- ACBSkipForMMTEL-Voice: ACB skipping bit for MMTEL voice
- ACBSkipForMMTEL-Video: ACB skipping bit for MMTEL video

The following information is provided to a NAS layer.
- ACB-skip-set (e.g., true/start/begin)-indication: MMTEL voice;
- ACB-skip-reset (e.g. false/stop/end)-indication: MMTEL voice;
- ACB-skip-set (e.g. true/start/begin)-indication: MMTEL video; and
- ACB-skip-reset (e.g. false/stop/end)-indication: MMTEL video.

If a request for the multimedia telephony communication session is received from a user and if the session establishment is continued after a service specific access control is performed, the UE operates as follows.
1) Retrieve ACB skip information acquired from an AS layer.
2) If audio is offered in the multimedia telephony communication session and if an ACB skipping bit for MMTEL voice is set, the UE delivers the ACB-skip-set-indication with the MMTEL voice identifier and continues with session establishment.
3) If video is offered in the multimedia telephony communication session and if an ACB skipping bit for MMTEL video is set, the UE delivers the ACB-skip-set-indication with the MMTEL video identifier and continues with session establishment.

Upon completion of the multimedia telephony communication session for voice, the UE delivers the ACB-skip-reset-indication with the MMTEL voice identifier to the NAS layer.

Likewise, if the multimedia telephony communication session for video ends, the UE delivers the ACB-skip-reset-indication with the MMTEL video identifier to the NAS layer.

### <Proposal 5-3>

According to the proposal 5-3, similarly to the proposal 5-2, the ACB skip begin indication/information and the ACB skip end indication/information may be used.

However, unlike the proposal 5-2, according to the proposal 5-3, smart congestion mitigation (SCM) may be improved as follows.

The following information is provided from an AS layer.

ACBSkipForSMS-over-IP: ACB skipping bit for SMS-over-IP

The following information is provided to a NAS layer.
- ACB-skip-begin-indication; and
- ACB-skip-end-indication.

Upon receiving a request for transmission of SMS over IP from a user, the UE operates as follows.
1) Retrieve ACB skip information acquired from an AS layer.
2) If an ACB skipping bit is set for SMS over IP, the UE delivers ACB-skip-begin-indication to a NAS layer, and continues with an SMS over IP transmission procedure.

Upon completion of SMS over IP transmission, the UE delivers ACB-skip-end-indication to the NAS layer.

Alternatively, smart congestion mitigation (SCM) may be improved as follows.

The following information is provided from an AS layer.
- ACBSkipForSMS-over-IP: ACB skipping bit for SMS-over-IP

The following information may be delivered to the NAS layer.
- ACB-skip-set (e.g., true/start/begin)-indication: SMS-over-IP;
- ACB-skip-reset (e.g., false/stop/end)-indication: SMS-over-IP.

If there is a request from a user to transmit SMS over IP, the UE operates as follows.
1) Retrieve ACB skip information acquired from an AS layer.
2) If an ACB skipping bit is set for SMS-over-IP, the UE delivers the ACB-skip-set-indication with the SMS-over-IP identifier to the NAS layer, and continues with originating SMS over IP.

Upon completion of the SMS over IP, the UE delivers the ACB-skip-reset-indication with the SMS-over-IP identifier to the NAS layer.

### <Proposal 6>

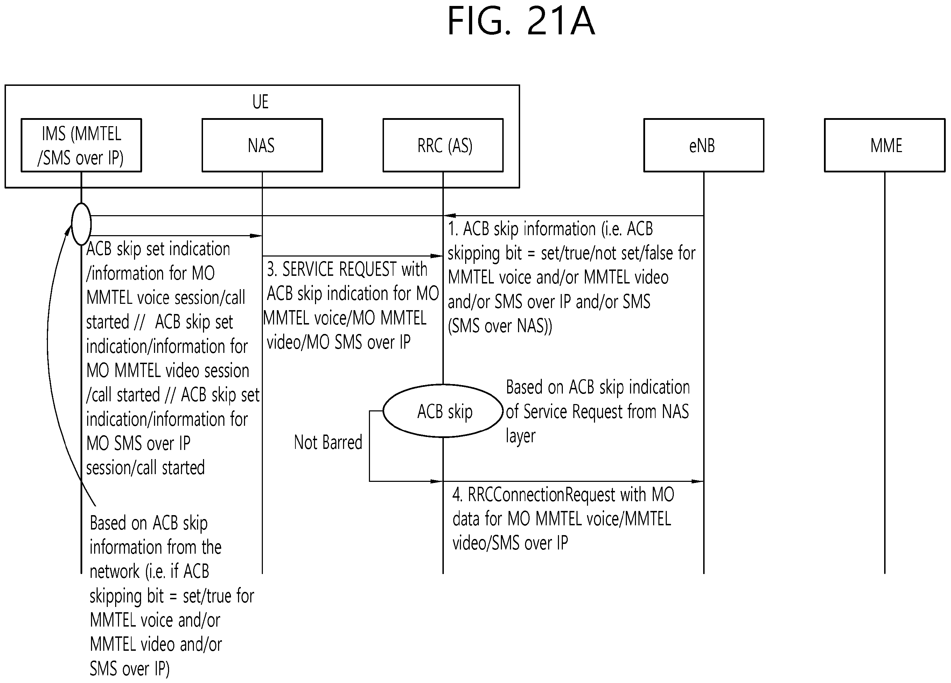

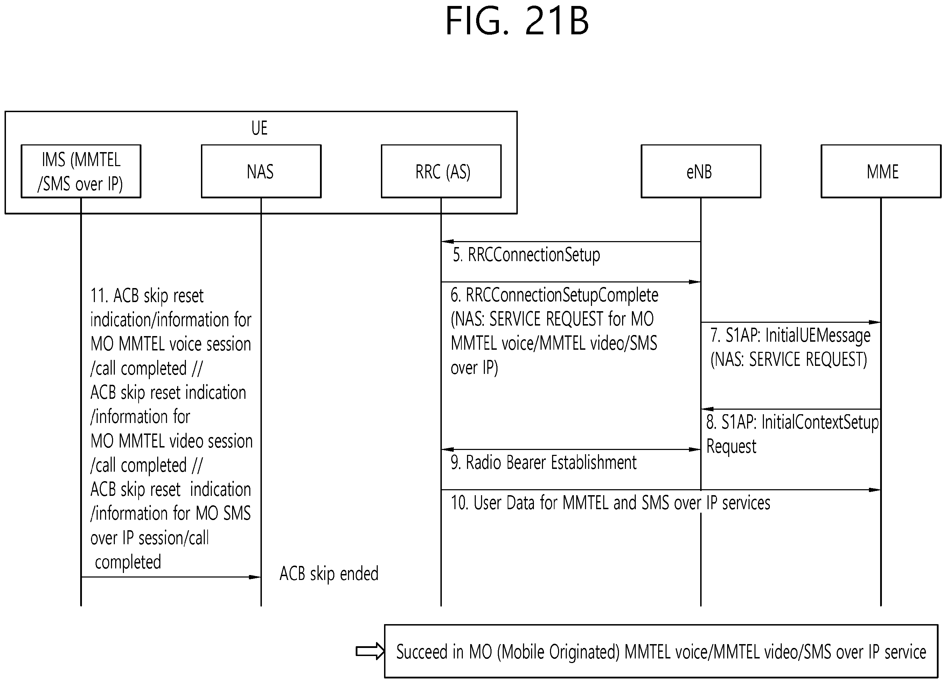

**FIG. 21a** **and** **FIG. 21b** **are signal flows illustrating the proposal 6 of the present specification.**

As can be seen from FIG. 21a and FIG. 21b, according to the proposal 6, when an IMS layer for MMTEL starts a service connection for MO MMTEL voice, if confirming of ACB skip information for the MMTEL voice provided from an AS layer (e.g., RRC layer) results in 'ACB skipping bit = set/true' as to MMTEL voice, the IMS layer for MMTEL provides an ACB skip begin indication/information to a NAS layer to report a start of a session/call for MMTEL voice. Alternatively, when the IMS layer for MMTEL starts a service connection for MO MMTEL video, if confirming of ACB skip information for the MMTEL video provided from an AS layer (e.g., RRC layer) results in 'ACB skipping bit = set/true' as to MMTEL video, the IMS layer for MMTEL provides an ACB skip begin indication/information to the NAS layer to report a start of a session/call for MMTEL video. Likewise, when the IMS layer for SMS over IP starts a service connection for MO SMS over IP, if configuring of ACB skip information for the MMTEL SMS over IP provided from an AS layer (e.g., RRC layer) results in 'ACB skipping bit = set/true' as to MMTEL SMS over IP, the IMS layer for SMS over IP provides an ACB skip begin indication/information to a NAS layer to report a start of a session/call for MMTEL SMS over IP.

If the IMS layer for MMTEL and SMS over IP provides a session/call begin indication/information (i.e., ACB skip begin indication) for MO MMTEL video or MO SMS over IP, the NAS layer recognizes that the session/call is not a normal data session/call but a start of a session/call for MMTEL voice, MMTEL video, and/or SMS over IP. Thereafter, the NAS layer starts a service request procedure to connect a session for MMTEL voice, MMTEL video, or SMS over IP. When the service request procedure is initiated, ACB skip information (i.e., ACB skip = set/true) is provided together to the AS layer (e.g., RRC layer).

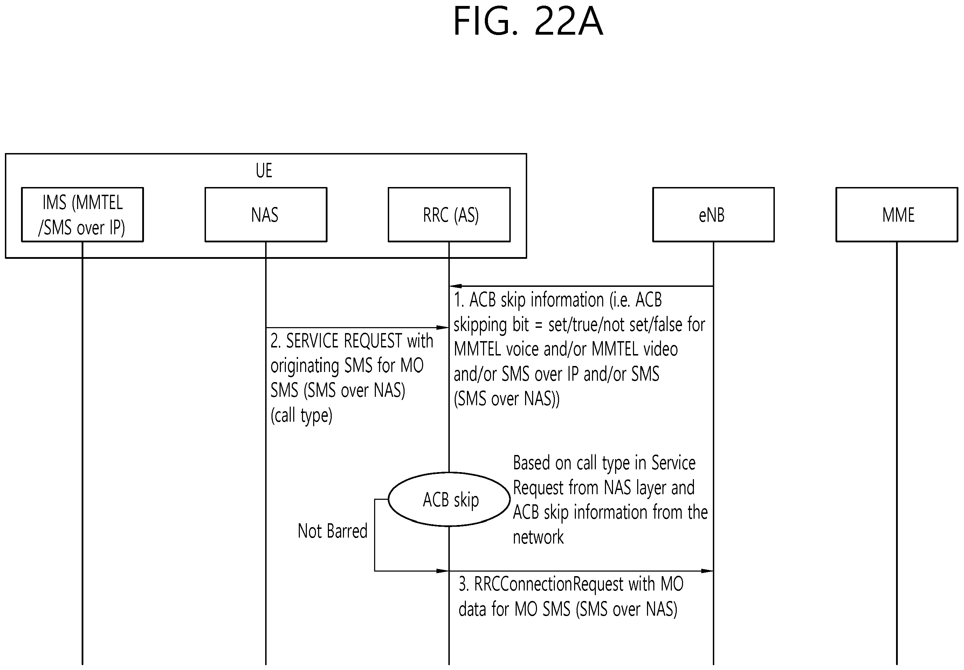

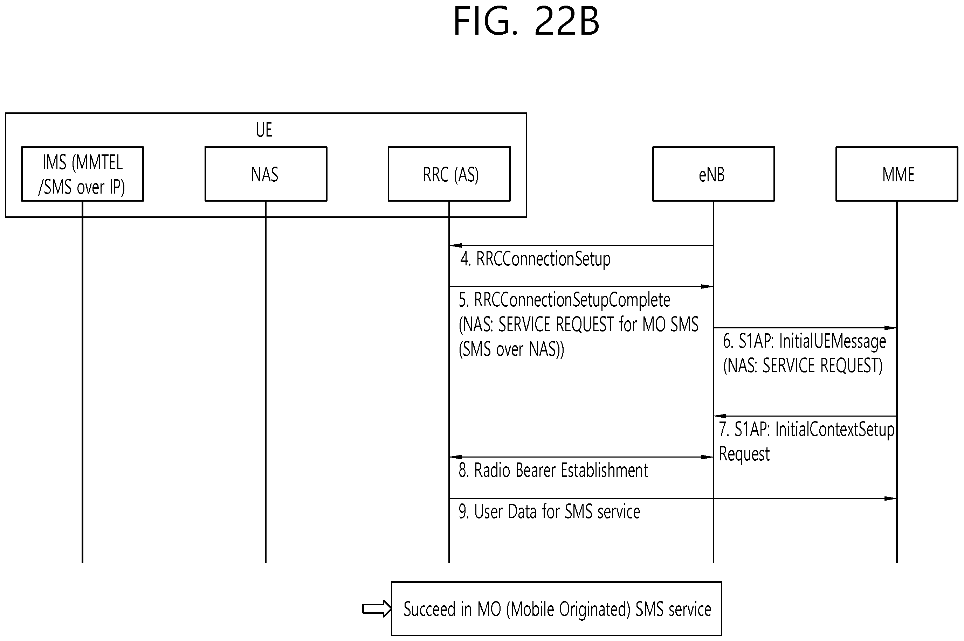

**FIG. 22a** **and** **FIG. 22b** **are signal flows illustrating an example for SMS in the proposal 6-1 of the present specification.**

As can be seen from FIG. 22a and FIG. 22b, in case of SMS (i.e., SMS over SGs; SMS over NAS), when a service request procedure is started for a mobile originated (MO) SMS connection, a NAS layer sets a call type to originating SMS for MO SMS (SMS over SGs), and sets an RRC establishment cause to MO data.

Meanwhile, an AS layer (e.g., RRC layer) of a UE confirms an ACB skip indication for MMTEL voice/MMTEL video/SMS over IP (i.e., ACB skip = set/true) provided from the NAS layer together with a service request, and skips an ACB check for the service request. Thereafter, an RRC connection request message is transmitted to an eNB. In this case, an establishment cause of the RRC connection request message is set to MO-data.

Alternatively, the AS layer (e.g., RRC layer) of the UE confirms an ACB skip indication for MMTEL voice (i.e., ACB skip = set/true for MMTEL voice) or ACB skip indication for MMTEL video (i.e., ACB skip = set/true for MMTEL video) or ACB skip indication for SMS over IP (i.e., ACB skip = set/true for SMS over IP) provided from the NAS layer together with the service request, and skips an ACB check for the service request. Thereafter, the RRC connection request message is transmitted to the eNB. In this case, the establishment cause of the RRC connection request message is set to MO-data.

Alternatively, the AS layer (e.g., RRC layer) of the UE confirms an ACB skip indication for MMTEL voice/video (i.e., ACB skip = set/true for MMTEL voice/video) or ACB skip indication for SMS over IP (i.e., ACB skip = set/true for SMS over IP) provided from the NAS layer together with the service request, and skips an ACB check for the service request. Thereafter, the RRC connection request message is transmitted to the eNB. In this case, the establishment cause of the RRC connection request message is set to MO-data.

In case of SMS(SMS over SGs; SMS over NAS), the AS layer (e.g., RRC layer) of the UE reads call types for the service request of the NAS layer, and recognizes that the service request is a service request for an MO SMS service connection. Thereafter, if confirming of the ACB skip information/indication for the SMS (SMS over SGs) provided from the network results in 'ACB skipping bit = set/true', an ACB check for the service request is skipped. Thereafter, the RRC connection request message is transmitted to the eNB. In this case, the establishment cause of the RRC connection request message is set to MO-data.

Alternatively, when an IMS layer for MMTEL/SMS over IP ends/terminates a service connection for MO MMTEL voice, MO MMTEL video, and MO SMS over IP, an IMS layer for MMTEL provides an ACB skip false/stop/reset indication/information for MO MMTEL voice and an ACB skip false/stop/reset indication information for MO MMTEL video to the NAS layer. Likewise, an IMS layer for SMS over IP provides an ACB skip false/stop/reset indication/information to the NAS to report the end of an SMS over IP session.

If the IMS layer for MMTEL/SMS over IP provides a session/call false/stop/reset indication/information for MO MMTEL voice, MO MMTEL video, or MO SMS over IP, the NAS layer recognizes the end of session/call for MO MMTEL voice, MMTEL video, or MO SMS over IP. Thereafter, the NAS layer does not skip an ACB check on the MMTEL voice, MMTEL video, or SMS over IP session. That is, the ACB is applied by recognizing the session as a normal session.

### <Proposal 7>

According to the proposal 7, a network (e.g., eNB) provides ACB skip information for MO MMTEL voice, MO MMTEL video, and MO SMS to a UE via SIB2. In this case, an AS layer (e.g., RRC layer) transmits this ACB skip informatoin to an MMTEL (including IMS; SMS over IP) layer and/or NAS layer. On the basis of this information, the IMS layer for MMTEL/SMS over IP determines whether to skip an ACB check for MMTEL voice/video/SMS over IP, and reports the ACB skip information to the NAS layer or the AS layer (e.g., RRC layer).

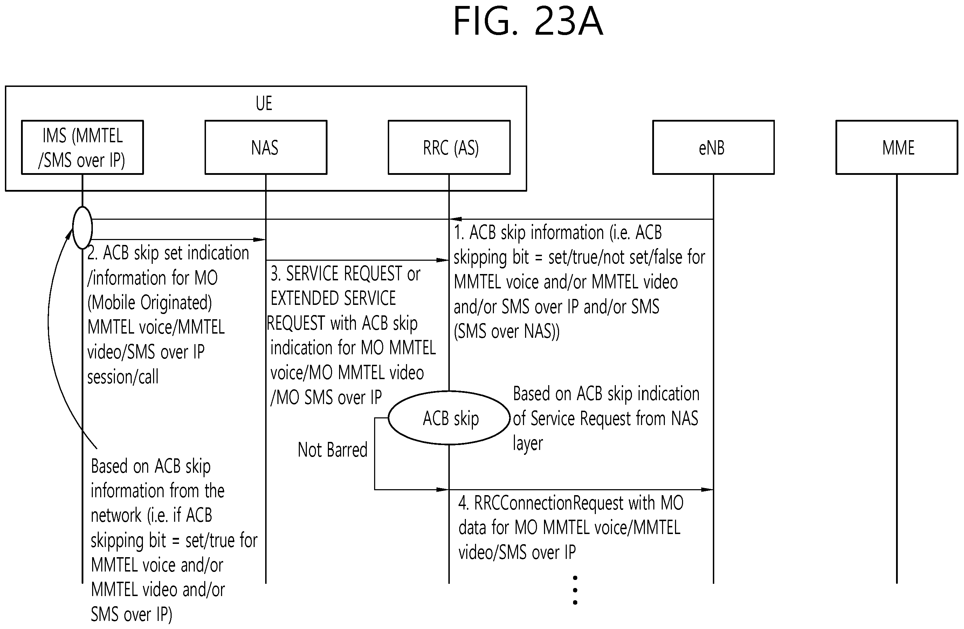

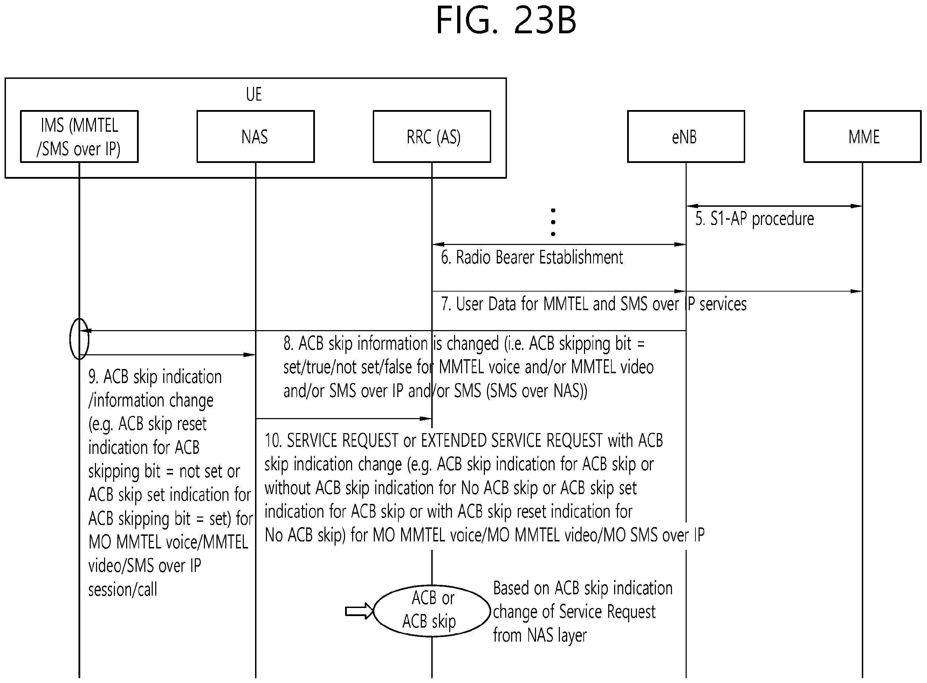

**FIG. 23a** **and** **FIG. 23b** **are signal flows illustrating the proposal 7 of the present specification.**

Referring to FIG. 23a and FIG. 23b, upon occurrence of ACB skip informatoin status change/modification (e.g, a change from ACB skip set/true to ACB skip reset/false (from ACB skip to No ACB skip) or a change from ACB skip reset/false to ACB skip set/reset (from No ACB skip to ACB skip)) from a network (e.g., eNB), an AS layer (e.g., RRC layer) immediately reports the ACB skip information change/modification to an IMS layer (or NAS layer) for MMTEL/SMS over IP. The IMS layer for MMTEL/SMS over IP reports the ACB skip information change/modification to the NAS layer (or RRC layer). On the basis of the ACB skip indication/information, the NAS layer performs a service request procedure. For example, a service request or an extended service request with an ACB skip indication is delivered to the RRC layer. The RRC layer skips an ACB check or applies ACB accoridng to the ACB skip indication (i.e., ACB skip = set/true) informatoin change/modificatoin provided from the NAS layer (or IMS layer).

If the RRC layer is provided no ACB skip information/indication via system information (e.g., SIB2), the RRC layer retrieves the ACB skip information with respect to MMTEL/SMS over IP, and indicates 'MMTEL set/start/true/begin' to the IMS layer (or NAS layer) to skip an ACB check with respect to MMTEL/SMS over IP or indicates 'MMTEL reset/stop/false/end' to the IMS layer (or NAS layer) not to apply the ACB check.

Upon receiving the ACB skip information from MMTEL/SMS over IP, the NAS layer delivers a service request or an extended service request with an ACB skip indication. When the layer receives the service request or the extended service request with the ACB skip information, the RRC layer skips the ACB instead of applying the ACB.

The ACB skip information is provided/updated periodically. In this case, the AS layer (i.e., RRC layer) may provide the ACB skip information to the IMS layer or NAS layer for MMTEL/SMS over IP.

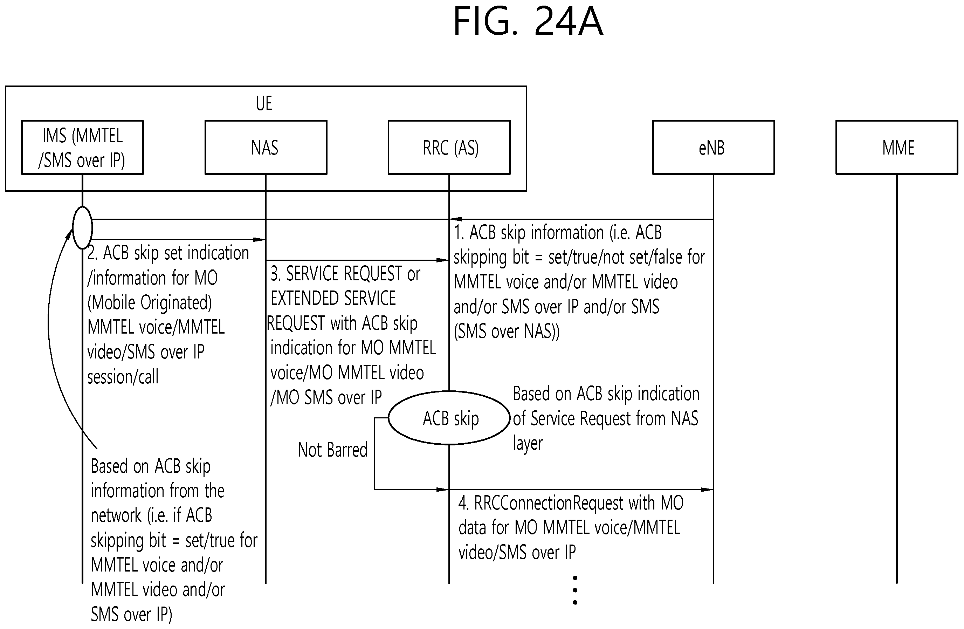

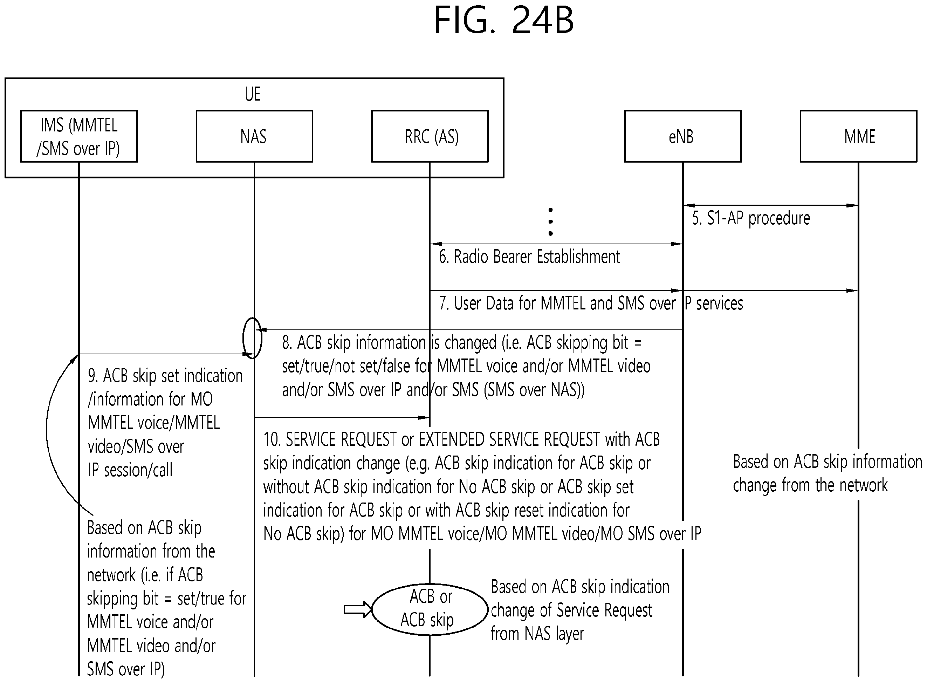

**FIG. 24a** **and** **FIG. 24b** **are signal flows illustrating an exemplary modification of the proposal 7 of the present specification.**

Referring to FIG. 24a and FIG. 24b, upon occurrence of ACB skip informatoin status change/modification (e.g, a change from ACB skip set/true to ACB skip reset/false (from ACB skip to No ACB skip) or a change from ACB skip reset/false to ACB skip set/reset (from No ACB skip to ACB skip)) from a network (e.g., eNB) or upon periodic reception of ACB skip informatoin, an AS layer (i.e., RRC layer) immediately reports the ACB skip information change/modificatoin to the NAS layer. An IMS layer for MMTEL/SMS over IP provides an ACB skip set/start/true/begin(/reset/stop/false/end) indication/information to the NAS layer when a session/call is started for MO MMTEL voice, MO MMTEL video, or MO SMS over IP. After the NAS layer recognizes the ACB skip indication/information, the NAS layer may perform a service request procedure on the basis of the ACB skip information change/modification provided from the RRC layer. Thereafter, the RRC layer may finally skip an ACB check or may apply ACB according to the ACB skip indication/information (change/modification) provided from the NAS layer.

### <Proposal 8>

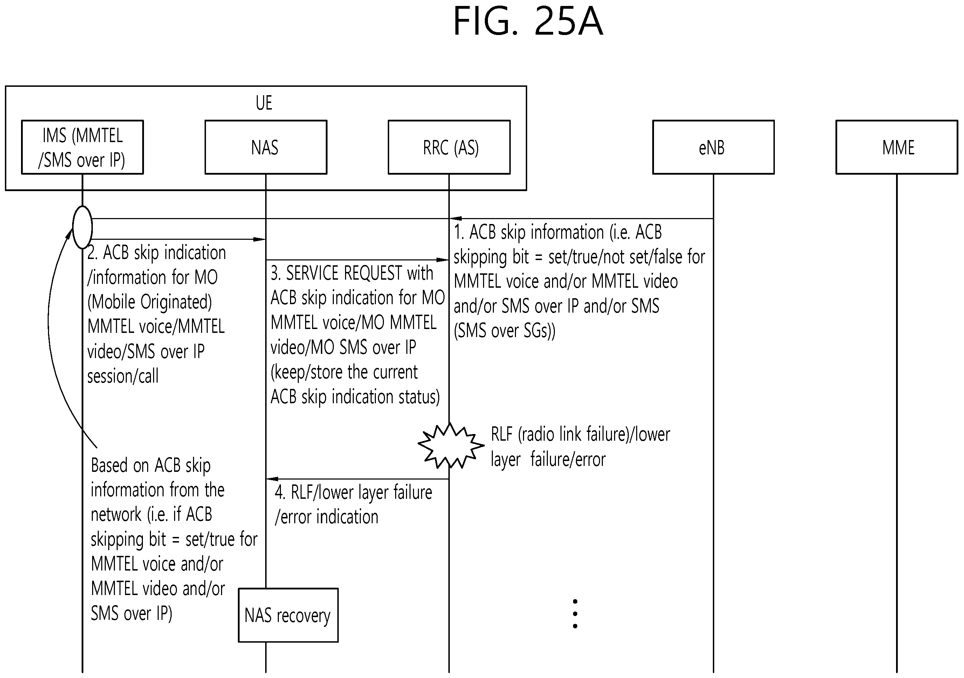

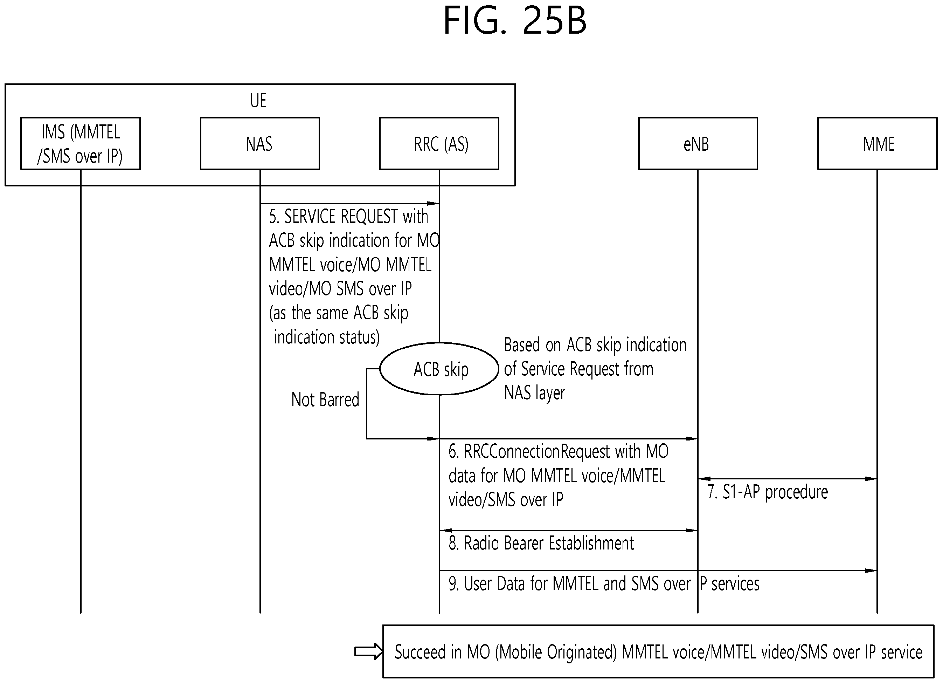

**FIG. 25a** **and** **FIG. 25b** **are signal flows illustrating the proposal 8 of the present specification.**

Referring to FIG. 25a and FIG. 25b, a network provides ACB skip informatoin for MMTEL voice, MMTEL video, and SMS to a UE via SIB2. In this case, an AS layer (e.g., RRC layer) of the UE transmits this ACB skip informatoin to a layer for MMTEL/SMS (i.e., IMS layer) or a NAS layer. On the basis of this information, the layer for MMTEL/SMS (i.e., IMS layer) determines whether to skip an ACB check for MMTEL voice/video/SMS over IP, and reports the ACB skip information to the NAS layer.

According to the proposal 8, upon occurrence of retransmission for MMTEL voice/video/SMS over IP due to a radio link failure (RLF), a lower layer failure/error, or the like (retransmission before QCI=1 bearer establishment completed or retransmission after QCI=1 bearer establishement completed), the AS layer (e.g., RRC layer) reports a lower layer failure/error indication to the NAS layer, and the NAS layer performs a NAS recovery procedure for NAS signaling connection (re)configuration (herein, QCI=1 bearer implies a bearer for a voice service (including VoLTE call)).

The NAS layer memorizes that the ACB skip indication is provided to the RRC layer when performing a service request procedure.

In this case, if retransmission occurs due to the lower layer failure/error, the NAS layer is provided a lower layer failure/error indication from the RRC layer. This may be regonized as keeping of a previous state (a state of applying the ACB skip or a state of applying the ACB).

When (re)performing the service request procedure for retransmission, the NAS layer provides an ACB skip indication/information or No ACB skip indication/information together by directly using a state of providing the ACB skip indicatoin of the service request procedure performed previousely.

The RRC layer performs final ACB skipping or no ACB skipping (i.e., ACB is applied) according to the ACB skip indication/information provided from the NAS layer.

### <Proposal 9>

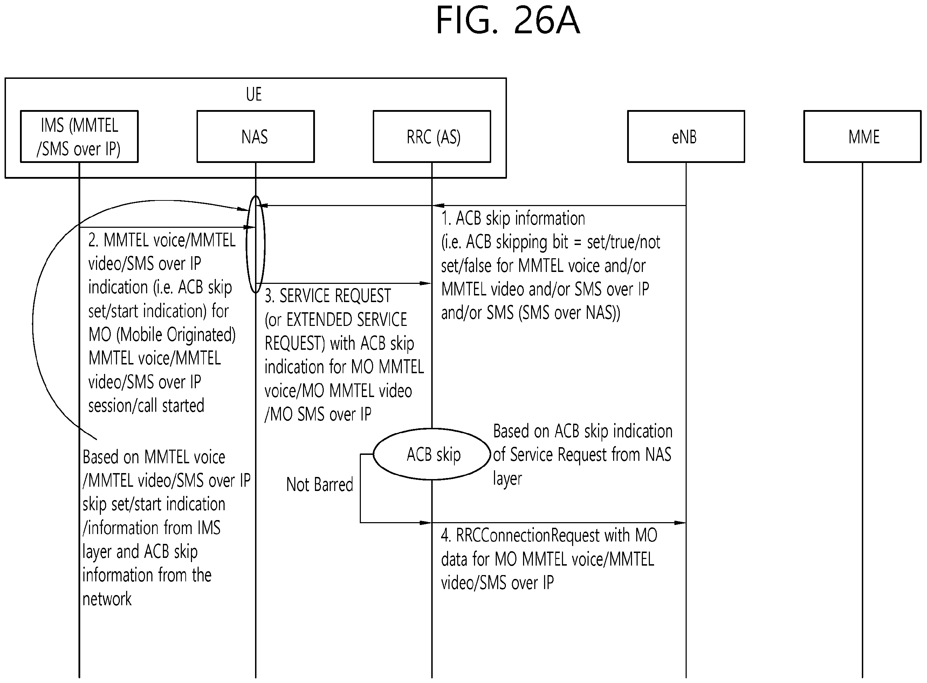

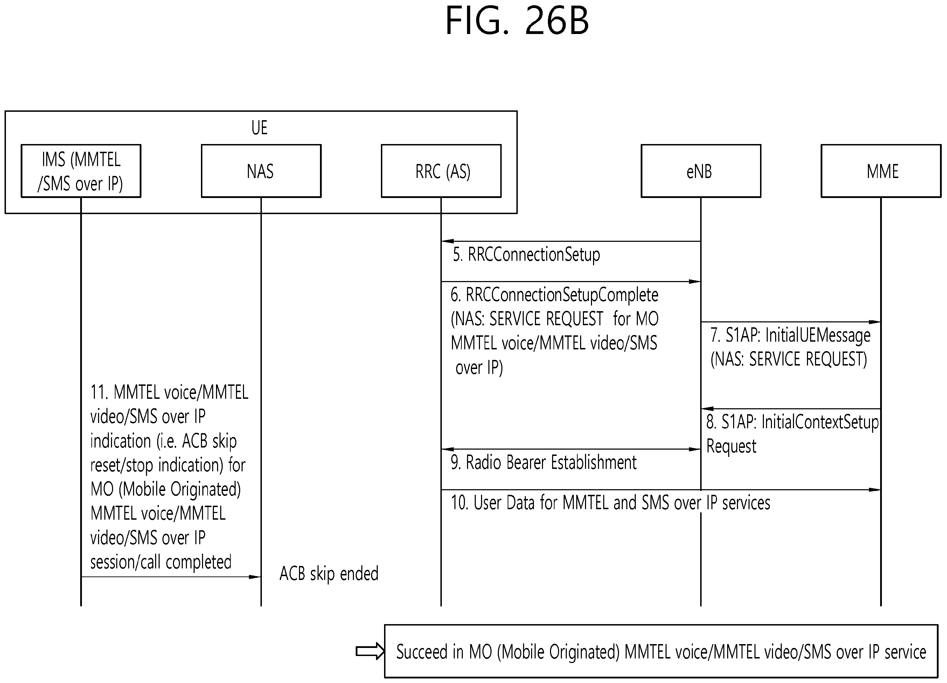

**FIG. 26a** **and** **FIG. 26b** **are signal flows illustrating the proposal 9 of the present specification.**

Referring to FIG. 26a and FIG. 26b, a network (e.g., eNB) provides ACB skip information for MMTEL voice, MMTEL video, and SMS (SMS over IP and/or SMS over NAS) to a UE via system information (e.g., SIB2). In this case, an AS layer of the UE transmits this ACB skip information to a NAS layer. In this case, the ACB skip information provided via SIB2 may be provided periodically or may be provided when there is a change in the ACB skip information. An AS layer (e.g., RRC layer) immediately provides (transmits) the ACB skip information received in this manner to the NAS layer. When MMTEL voice/video/SMS over IP is initiated or triggered, an IMS layer for MMTEL/SMS over IP transmits ACB skip SET/START to the NAS layer. In this case, the ACB skip SET/START may be a one-bit indication, or may be an indication/information distinguished according to MMTEL voice/video/SMS over IP similarly to MMTEL-voice-ACB-skip-SET/START, MMTEL-video-ACB-skip-SET/START, and SMSoverIP-ACB-skip-SET/START. In this case, an IMS layer for MMTEL/SMS over IP provides the MMTEL-voice/video-ACB-skip-SET/START or SMSoverIP-ACB-skip-SET/START indication/information to the NAS layer when MMTEL voice/video/SMS over IP is initiated or triggered irrespective of a case where the ACB skip information provided from an actual network is configured to apply the ACB skip.

After the IMS layer for MMTEL/SMS over IP receives the ACB skip SET/START indication/information, the NAS layer starts (performs) a service request procedure to transmit a packet of MMTEL voice/video/SMS over IP. In this case, according to an ACB skip configuration provided from the AS layer (e.g., RRC layer), an ACB-skip-ON/TRUE-indication/information is provided to the AS layer (e.g., RRC layer). The ACB skip-ON/TRUE-indication/information may be provided when the service request procedure is started (performed) or may be provided immediately irrespective of the service request procedure.

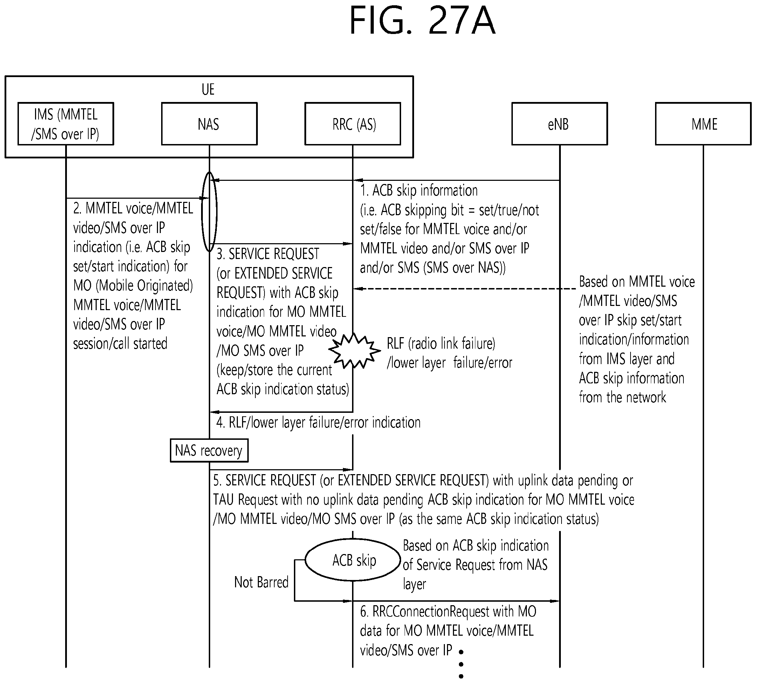

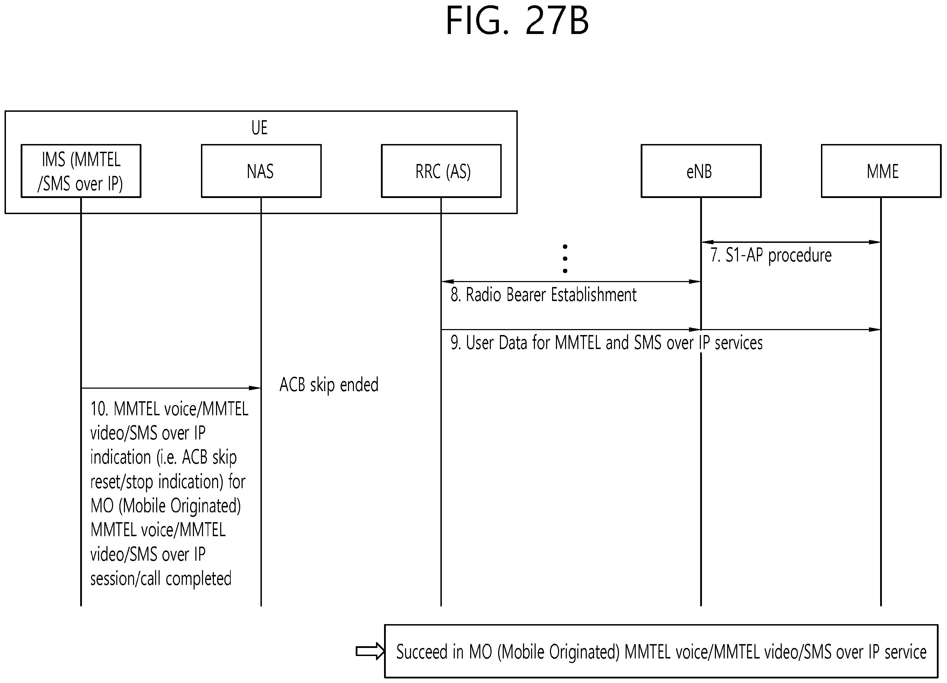

**FIG. 27a** **and** **FIG. 27b** **are signal flows illustrating an exemplary modification of the proposal 9 of the present specification.**

As can be seen from FIG. 27a and FIG. 27b, a NAS layer may also provide an ACB skip-ON/TRUE-indication/information when a TAU request procedure for a NAS recovery is started (performed), or may immediately provide it irrespective of the TAU request procedure.

The AS layer (e.g., RRC layer) skips an ACB check for a corresponding service request message according to the ACB skip-ON/TRUE-indication/information provided from the NAS layer.

If the TAU request procedure for the NAS recovery is started (performed), the AS layer (e.g., RRC layer) skips or applies an ACB check for a corresponding TAU request message (an RRC establishment cause is set to MO signalling) according to the ACB skip-ON/TRUE-indication/information.

If a session for corresponding MMTE voice/video/SMS over IP ends, an IMS layer for MMTEL/SMS over IP transmits ACB skip RESET/STOP to the NAS layer to report the end of an MMTEL service (transmission). In this case, the ACB skip SET/START may be a one-bit indication, or may be an indication/information distinguished according to MMTEL voice/video/SMS over IP similarly to MMTEL-voice-ACB-skip-RESET/STOP, MMTEL-video-ACB-skip-RESET/STOP, and SMSoverIP-ACB-skip-RESET/STOP. If the MMTEL layer receives the ACB skip RESET/STOP indication/information, the NAS layer does not provide an ACB skip-ON/TRUE indication/information together/separately to the AS layer (e.g., RRC layer) in a service request procedure (or a TAU request procedure) started/performed at a later time.

In the aforementioned procedure, when the service request procedure (or TAU request procedure) is initiated/performed, the NAS layer may request ACB skip information provided from the network via SIB2, or the RRC layer may immediately provide the ACB skip information (provided from the network) to the NAS layer whenever system information (SI) is updated or whenever a change of the ACB skip information in the SI is confirmed.

The service request procedure or the TAU request procedure may be performed for the NAS recovery. The service request procedure may be performed in the presence of uplink data, and the TAU request procedure may be performed in the absence of the uplink data.

### <Summary of proposals 10-1/10-2/10-3>

First, the proposal 1-1 relates to an operation of a NAS layer and an AS layer (i.e., RRC layer), the proposal 1-2 relates to an MMTEL (IMS) operation, and the proposal 1-3 relates to an SMS-over-IP operation.

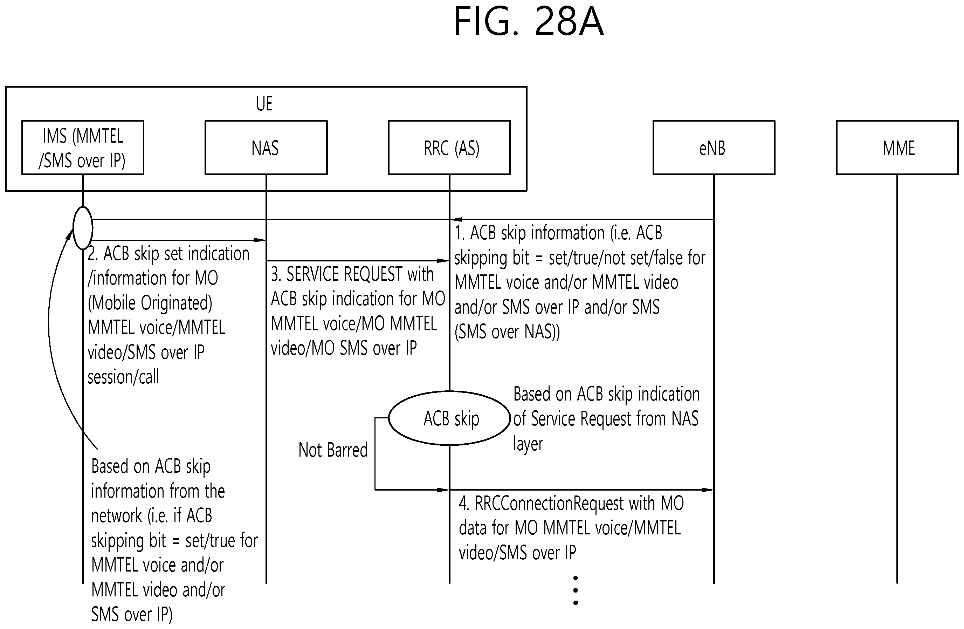

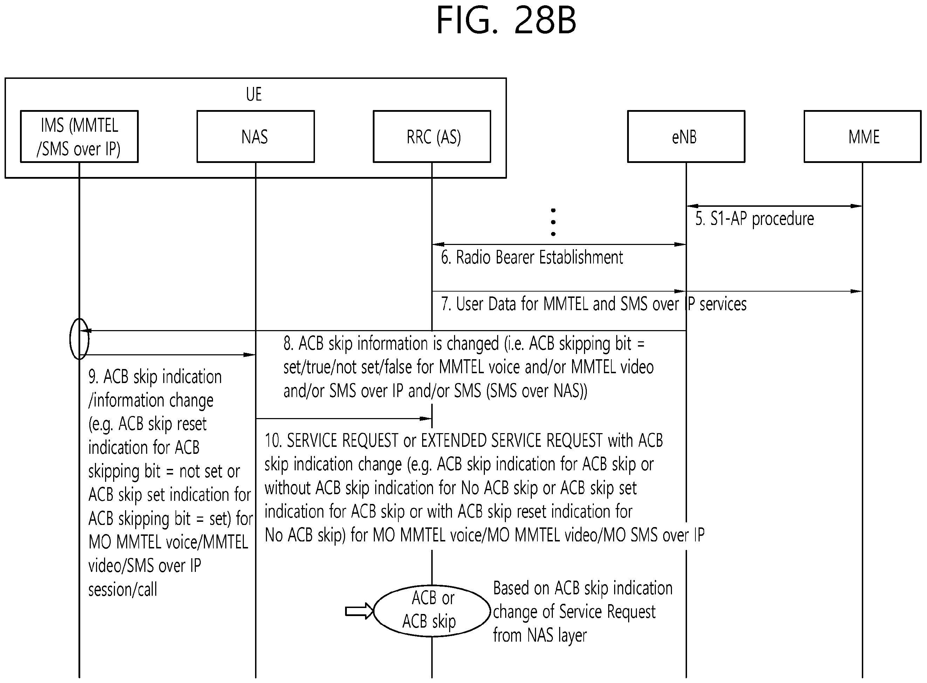

**FIG. 28a** **and** **FIG. 28b** **are signal flows illustrating the proposals 10-1/10-2/10-3 of the present specification.**

Referring to FIG. 28a and FIG. 28b, when an IMS layer for MMTEL/SMS over IP starts a service connection for MO MMTEL voice/MMTEL video, and MO SMS over IP, if confirming of ACB skip information for an MMTE voice/MMTEL video/SMS over IP or SMS (SMS over SGs) service provided from an AS layer (e.g., RRC layer) results in 'ACB skipping bit = set/true', the IMS layer for MMTEL provides an indication/information to a NAS layer to report that it is an MMTEL voice and MMTEL voice session/call. Likewise, the IMS layer for SMS over IP provides an indication/information for reporting an SMS over IP session to the NAS layer.

Alternatively, when the IMS layer for MMTEL starts a service connection for MMTEL voice, if confirming of ACB skip information for an MMTEL voice service provided from an AS layer (e.g., RRC layer) results in 'ACB skipping bit = set/true', whether there is no other ongoing MMTEL voice service session is confirmed. Thereafter, if such a session is not present, the IMS layer for MMTEL provides an ACB skip set indication to the NAS layer to report the start of an MMTEL voice session/call. Likewise, when the IMS layer for MMTEL starts a service connection for MMTEL video, if confirming of ACB skip information for an MMTEL video service provided from an AS layer (e.g., RRC layer) results in 'ACB skipping bit = set/true', whether there is no other ongoing MMTEL video service session is confirmed. Thereafter, if such a session is not present, the IMS layer for MMTEL provides an ACB skip set indication to the NAS layer to report the start of an MMTEL video session/call. Likewise, when the IMS layer for SMS over IP starts a service connection for MO SMS over IP, if confirming of ACB skip information for an MMTEL SMS over IP service provided from an AS layer (e.g., RRC layer) results in 'ACB skipping bit = set/true', whether there is no other ongoing MMTEL SMS over IP service session is confirmed. Thereafter, if such a session is not present, the IMS layer for MMTEL provides an ACB skip set indication to the NAS layer to report the start of an MMTEL SMS over IP session/call.

If the IMS layer for MMTEL/SMS over IP provides an ACB skip set indication for a session/call for MO MMTEL voice/video or MO SMS over IP, the NAS layer recognizes that the session/call is not a normal data session/call but a session/call for the MMTEL voice/video or SMS over IP. Thereafter, the NAS layer starts a service request procedure to connect a session for MMTEL voice/video or SMS over IP. When the service request procedure is started, ACB skip information is provided to the AS layer (e.g., RRC layer).

Meanwhile, according to the proposal 10-2/10-3, the IMS layer for MMTEL/SMS over IP confirms whether there is no other ongoing MMTEL voice and MMTEL video service session upon ending/terminating MO MMTEL voice, MO MMTEL video, and MO SMS over IP service connections, and thereafter if such a session is not present, provides an ACB skip reset indication to the NAS layer to report the end of the MMTEL voice and MMTEL video session/call. Likewise, the IMS layer for SMS over IP confirms whether there is no other ongoing SMS over IP service session, and if such a session is not present, provides the ACB skip reset indication to the NAS layer to report the end of the SMS over IP session.

In addition, according to the proposal 10-2/10-3, if the IMS layer for MMTEL/SMS over IP provides a reset indication (i.e., ACB skip reset indication) for a session/call for MO MMTEL voice, MO MMTEL video, or MO SMS over IP, the NAS layer recognizes the end of session/call for MO MMTEL voice/video, or MO SMS over IP. Thereafter, the NAS layer does not skip an ACB check for a session for MMTEL voice/video or SMS over IP. That is, the service request procedure is performed by recognizing the session as a session for normal data, and ACB is applied in the AS layer (i.e., RRC layer).

Meanwhile, when there is a change in the ACB skip information provided from the network, the AS layer (e.g., RRC layer) provides the changed information to the IMS layer and the NAS layer for MMTEL/SMS over IP. If confirming of the ACB skip information by the IMS layer for MMTEL as to the MMTEL voice service provided from the AS layer (e.g., RRC layer) results in 'ACB skipping bit = set/true' (i.e., when ACB skip information is changed), when an MMTEL voice session is ongoing, the IMS layer for MMTEL immediately provides the ACB skip set indication to the NAS layer. If confirming of the ACB skip information by the IMS layer for MMTEL as to the MMTEL video service provided from the AS layer (e.g., RRC layer) results in 'ACB skipping bit = set/true' (i.e., when ACB skip information is changed), the IMS layer for MMTEL immediately provides the ACB skip set indication to the NAS layer. Likewise, if confirming of the ACB skip information by the IMS layer for SMS over IP as to the SMS over IP service provided from the AS layer (e.g., RRC layer) results in 'ACB skipping bit = set/true' (i.e., when ACB skip information is changed), when the SMS over IP service session is ongoing, ACB skip set indication is immediately provided to the NAS layer. If the changed ACB skip information is 'ACB skipping bit = reset/false', when the MMTEL voice, MMTEL video, or SMS over IP session is ongoing, an ACB skip reset indication for MMTEL voice/video and an ACB skip reset indication for SMS over IP are provided immediately to the NAS layer. The NAS layer performs a next service request procedure according to a change of the ACB skip indication/information provided from the MMTEL/SMS over IP (IMS) layer.

### <Proposal 10-1>

According to the proposal 10-1, an AS layer (e.g., RRC layer) of a UE provides a NAS layer with ACB skip information provided from a network. In this case, the AS layer (e.g., RRC layer) may provide ACB skip information for MMTEL voice/MMTEL video/SMS over IP/SMS over NAS provided from the network to the NAS layer as well as an IMS layer for MMTEL/SMS over IP. If information provided from the network is only an MMTEL voice/MMTEL video/SMS over IP service, the ACB skip information may be provided only to the IMS layer for MMTEL/SMS over IP. Further, if the information provided from the network includes only an SMS service, the ACB skip information may be provided only to the NAS layer.

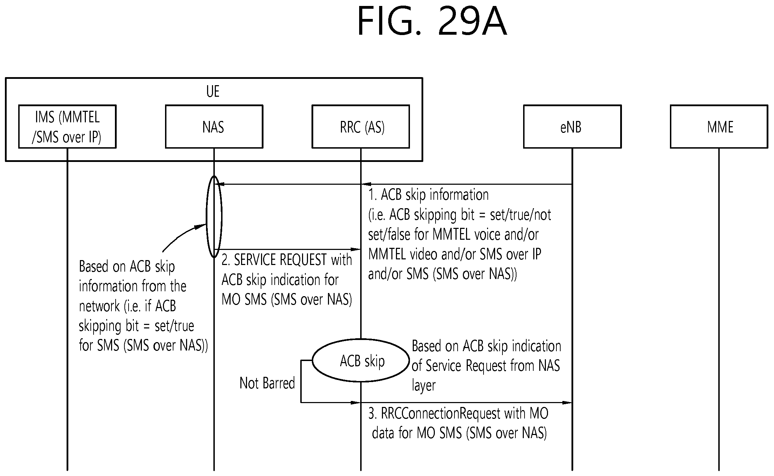

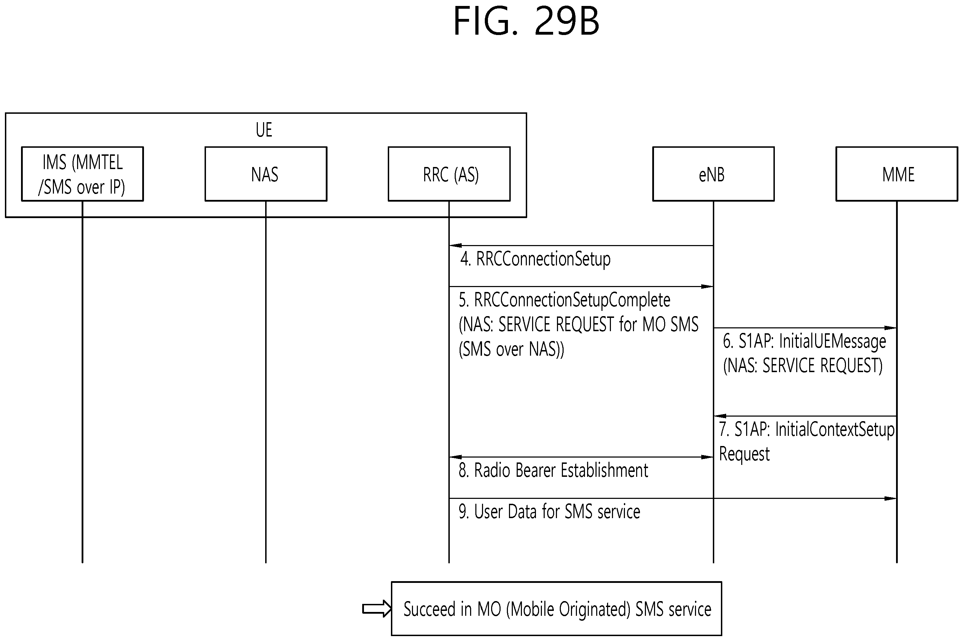

**FIG. 29a** **and** **FIG. 29b** **are signal flows illustrating an example of SMS in the proposal 10-1 of the present specification.**

Referring to FIG. 29a and FIG. 29b, in case of SMS over NAS, when a NAS layer starts a service request procedure for an MO SMS connection, if confirming of ACB skip information for an SMS over NAS service provided from an AS layer (e.g., RRC layer) results in 'ACB skipping bit = set/true', ACB skip information (i.e., ACB skip = set/true) is provided together to the AS layer (e.g., RRC layer).

Meanwhile, the following description relates to an improvement based on the proposal 10-1.

The following abnormal cases can be identified.
a) Access barred because of access class barring or NAS signalling connection establishment rejected by the network without "Extended wait time" received from lower layers.

The ACB may not be applied in the following cases.
- When the service request procedure is started in response to a paging request.
- When the service request procedure is requested for originating SMS, and a lower layer is configured to skip the ACB.
- When the service request procedure is started if the upper layers request for user plane radio resources and the upper layers instruct to skip an ACB check for MMTEL voice.

If the trigger for the service request procedure is the response to a paging request and the NAS signalling connection establishment is rejected by the network, the service request procedure may not be started. If the UE stays in the current serving cell, a normal cell reselection procedure is performed. The service request procedure may be started when access for "terminating calls" is granted or because of a cell change or the like.

Meanwhile, the following descriptions relates to an improvement of a procedure for mapping an RRC establishment cause in a NAS layer.

If an EMM requests for an establishment of NAS signaling, an RRC establishment cause used by a UE is selected according to a NAS procedure. The EMM must report a call type related to the RRC establishment cause to a lower layer for the purpose of an access control. Further, when the EMM requests for a NAS signaling connection, if an upper layer instructs to skip an ACB check, the EMM must deliver the skipping of the ACB check to the lower layer. If extended access barring (EAB) is set in the UE, for the purpose of an access control, the EMM applies the EAB to those requests except for the following cases.
- The UE is configured to use one of AC11 to AC 15 in a selected PLMN
- The UE responds to a paging signal
- An RRC establishment cause is set to Emergency call
- When the UE is configured to override the EAB
- When the UE is configured to override the EAB and already has a PDN connection established while overriding the EAB

The EMM instructs the upper layer not to apply the ACB for the purpose of the access control in the following cases.
- When a request for originating SMS is received and a lower layer instructs to skip an ACB check for SMS.
- When a request is received from an upper layer as to a radio resource of a user plane and the upper layer instructs to skip the ACB check.

**[Table 15]**

| NAS procedure | RRC establishment cause | Call type |
|---|---|---|
| Service Request | If the service request is to request user plane radio resources, the RRC establishment cause shall be set to MO data. | originating calls |
| | If the service request is to request user plane radio resources for emergency bearer services, the RRC establishment cause shall be set to Emergency call. | emergency calls |
| | If the service request is to request resources for UL signalling, the RRC establishment cause shall be set to MO data. | originating calls |
| | If the service request is to request user plane radio resources or to request resources for UL signalling and the UE is configured for dual priority and the NAS signalling low priority indicator is overridden, the RRC establishment cause shall be set to MO data. | originating calls |
| | If the service request is triggered by a PDN connectivity request that has call type set to "emergency", the RRC establishment cause shall be set to Emergency call. | emergency calls |
| | If the service request is to request user plane radio resources or to request resources for UL signalling and the UE is configured for NAS signalling low priority, the RRC establishment cause shall be set to Delay tolerant. | originating calls |
| | If the service request is a response to paging when a core network (CN) domain indicator is set to "PS", the RRC establishment cause shall be set to MT access. | terminating calls |
| For these NAS procedures initiated by UEs of access class 12, 13 or 14, the RRC establishment cause may be set to "High priority access AC 11 - 15". | | |

### <Proposal 10-2>

According to the proposal 10-2, smart congestion mitigation (SCM) may be improved as follows.

The following information is provided from an AS layer.
- ACBSkipForMMTEL-Voice: ACB skipping bit for MMTEL voice;
- ACBSkipForMMTEL-Video: ACB skipping bit for MMTEL video.

The following information may be delivered to a NAS layer.
- ACB-skip-set-indication with MMTEL identifier; and
- ACB-skip-reset-indication with MMTEL identifier

If a request is received from a user to establish a multimedia telephony communication session and if the session establishment is continued after performing a service specific access control, a UE operates as follows.
1) If audio is offered in the multimedia telephony communication session, if there is no other multimedia telephony communication session for audio, and if an ACB skipping bit for MMTEL voice is set, the UE delivers the ACB-skip-set-indication with the MMTEL identifier to the NAS layer and continues with session establishment.
2) If video is offered in the multimedia telephony communication session, if there is no other multimedia telephony communication session for video, and if an ACB skipping bit for MMTEL video is set, the UE delivers the ACB-skip-set-indication with the MMTEL identifier to the NAS layer and continues with session establishment.

If the ACB skip information provided from the AS layer is changed in an ongoing multimedia telephony communication session state, the UE operates as follows.
1) If audio is offered in the multimedia telephony communication session and the ACB skipping bit is changed for MMTEL voice,
   if the ACB skipping bit was set for MMTEL voice, the ACB-skip-set-indication with the MMTEL identifier is delivered to the NAS layer, and the ongoing session is continued; and
   Otherwise, the UE delivers the ACB-skip-reset-indication with the MMTEL identifier to the NAS layer and continues with the ongoing session.
2) If video is offered in the multimedia telephony communication session and the ACB skipping bit is changed for MMTEL voice,
   if the ACB skipping bit was set for MMTEL video, the ACB-skip-set-indication with the MMTEL identifier is delivered to the NAS layer, and the ongoing session is continued.

Otherwise, the UE delivers the ACB-skip-reset-indication with the MMTEL identifier to the NAS layer and continues with the ongoing session.

The change of the ACB skip information provided from the AS layer includes: (1) a change from not providing the ACB skip information to providing the ACB skip information; and (2) a change of a value of the ACB skip information.

When the multimedia telephony communication session ends, if the multimedia telephony communication session was initiated to offer voice and there was no other multimedia telephony communication session for offering voice, the UE must deliver the ACB-skip-reset-indication with the MMTEL identifier to the NAS layer.

When the multimedia telephony communication session ends, if the multimedia telephony communication session was initiated to offer video and there was no other multimedia telephony communication session for offering video, the UE must deliver the ACB-skip-reset-indication with the MMTEL identifier to the NAS layer.

Alternatively, smart congestion mitigation (SCM) may be improved as follows.

The following information is provided from an AS layer.
- ACBSkipForMMTEL-Voice: ACB skipping bit for MMTEL voice
- ACBSkipForMMTEL-Video: ACB skipping bit for MMTEL video

The following information is provided to a NAS layer.
- ACB-skip-set-indication with MMTEL identifier
- ACB-skip-reset-indication with MMTEL identifier

If a request is received from a user to establish a multimedia telephony communication session and if the session establishment is continued after performing a service specific access control, a UE operates as follows.
1) If audio is only offered in the multimedia telephony communication session and there is no other multimedia telephony communication session for audio, if the ACB skipping bit for MMTEL voice is set, the UE delivers the ACB-skip-set-indication with the "MMTEL" identifier to the NAS layer and continues with session establishment.
2) If video is only offered in the multimedia telephony communication session and there is no other multimedia telephony communication session for video, if the ACB skipping bit for MMTEL video is set, the UE delivers the ACB-skip-set-indication with the "MMTEL" identifier to the NAS layer and continue with session establishment.

If the ACB skip information was not provided from the AS layer when the multimedia telephony communication session was started and is provided during the ongoing originating multimedia telephony communication session, or if ACB skip information was provided when the multimedia telephony communication session was started and is changed during the ongoing originating multimedia telephony communication session, the UE operates as follows.

If audio is only offered in the multimedia telephony communication session,
1) if the ACB skipping bit for MMTEL voice has changed from "not set" to "set", the UE delivers the ACB-skip-set-indication with the "MMTEL" identifier to the NAS layer and continues with session establishment.
2) if the ACB skipping bit for MMTEL voice has changed from "set" to "not set", the UE delivers the ACB-skip-reset-indication with the "MMTEL" identifier to the NAS layer and continues with session establishment.
3) if the ACB skipping bit for MMTEL was not provided from the AS layer when the multimedia telephony communication session was initiated and is provided during the ongoing originating multimedia telephony communication session, and the ACB skipping bit for MMTEL video is "set", the UE delivers the ACB-skip-set-indication with the "MMTEL" identifier to the NAS layer.

On the other hand, if video is only offered in the multimedia telephony communication session,
1) if the ACB skipping bit for MMTEL video has changed from "not set" to "set", the UE delivers the ACB-skip-set-indication with the "MMTEL" identifier to the NAS layer and continues with session establishment.
2) if the ACB skipping bit for MMTEL video has changed from "set" to "not set", the UE delivers the ACB-skip-reset-indication with the "MMTEL" identifier to the NAS layer and continues with session establishment.
3) if the ACB skipping bit for MMTEL was not provided from the AS layer when the multimedia telephony communication session was initiated and is provided during the ongoing originating multimedia telephony communication session, and the ACB skipping bit for MMTEL video is "set", the UE delivers the ACB-skip-set-indication with the "MMTEL" identifier to the NAS layer.

If the multimedia telephony communication session ends, if the multimedia telephony communication session was initiated to offer audio, and there is no other multimedia telephony communication session for offering audio, the UE delivers the ACB-skip-reset-indication with the "MMTEL" identifier to the NAS layer.

### <Proposal 10-3>

According to the proposal 10-2, smart congestion mitigation (SCM) may be improved as follows.

The following information is provided from an AS layer.
- ACBSkipForSMS-over-IP: ACB skipping bit for SMS-over-IP.

The following information may be delivered to a NAS layer.
- ACB-skip-set-indication with SMS-over IP identifier
- ACB-skip-reset-indication with SMS-over-IP identifier

Upon receiving a request for originating SMS over IP from a user, if there is no other originating SMS over IP, the UE operates as follows.
1) If the ACB skipping bit for SMS-over-IP is set, the UE delivers the ACB-skip-set-indication with the "SMS-over-IP" identifier to the NAS layer, and continues with originating SMS over IP.

When the ACB skip information provided from the AS layer is changed during the SMS over IP is ongoing, the UE operates as follows.
1) If the ACB skipping bit for SMS-over-IP is set, the UE delivers the ACB-skip-set-indication with the "SMS-over-IP" identifier to the NAS layer, and continues with originating SMS over IP.

Alternatively, smart congestion mitigation (SCM) may be improved as follows.

The following information is provided from an AS layer.
- ACBSkipForSMS-over-IP: ACB skipping bit for SMS-over-IP.

The following information may be delivered to a NAS layer.
- ACB-skip-set-indication with SMS-over IP identifier
- ACB-skip-reset-indication with SMS-over-IP identifier

Upon receiving a request for originating SMS over IP from a user, if there is no other originating SMS over IP, the UE operates as follows.
1) If the ACB skipping bit for SMS-over-IP is set, the UE delivers the ACB-skip-set-indication with the "SMS-over-IP" identifier to the NAS layer.

If the ACB skip information is not provided from the AS layer when the SMS over IP is initiated whereas the ACB skip information is provided when SMS over IP is ongoing, or if the ACB skip information is provided from the AS layer when SMS over IP is initiated whereas the ACB skip information is not provided when SMS over IP is ongoing, the UE may operate as follows.
1) If the ACB skipping bit for SMS over IP is not provided from the AS layer when SMS-over-IP is initiated and if the ACB skipping bit is configured for SMS over IP, the UE delivers the ACB-skip-set-indication with the SMS over IP identifier to the NAS layer.
2) If the ACB skipping bit for SMS-over-IP has changed from "not set" to "set", the UE delivers the ACB-skip-set-indication with the SMS-over-IP identifier to the NAS layer.
3) If the ACB skipping bit for SMS-over-IP has changed from "set" to "not set", the UE delivers the ACB-skip-reset-indication with the SMS-over-IP identifier to the NAS layer.

### <Proposal 11>

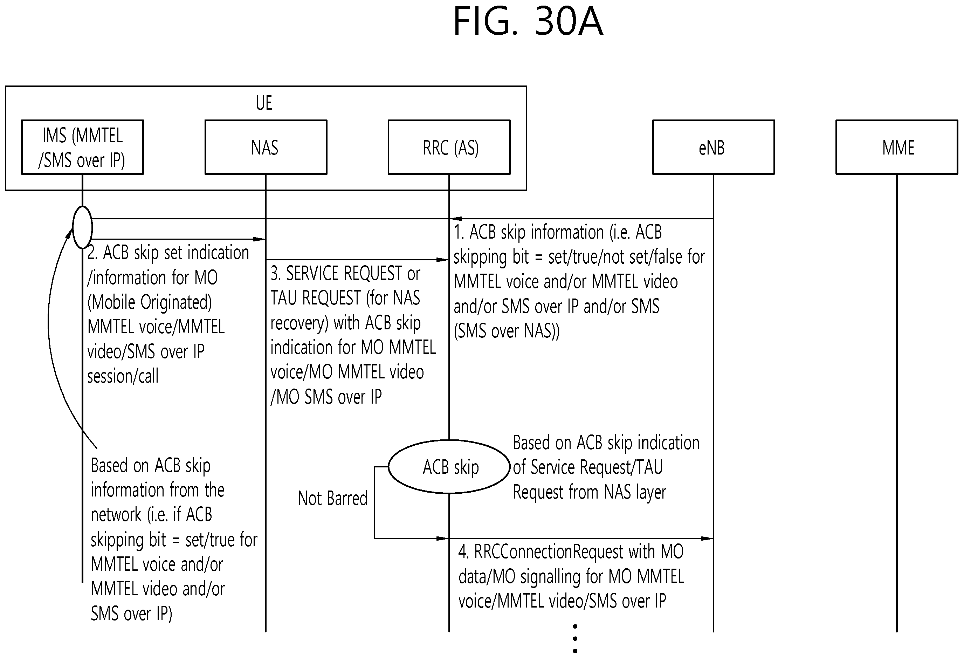

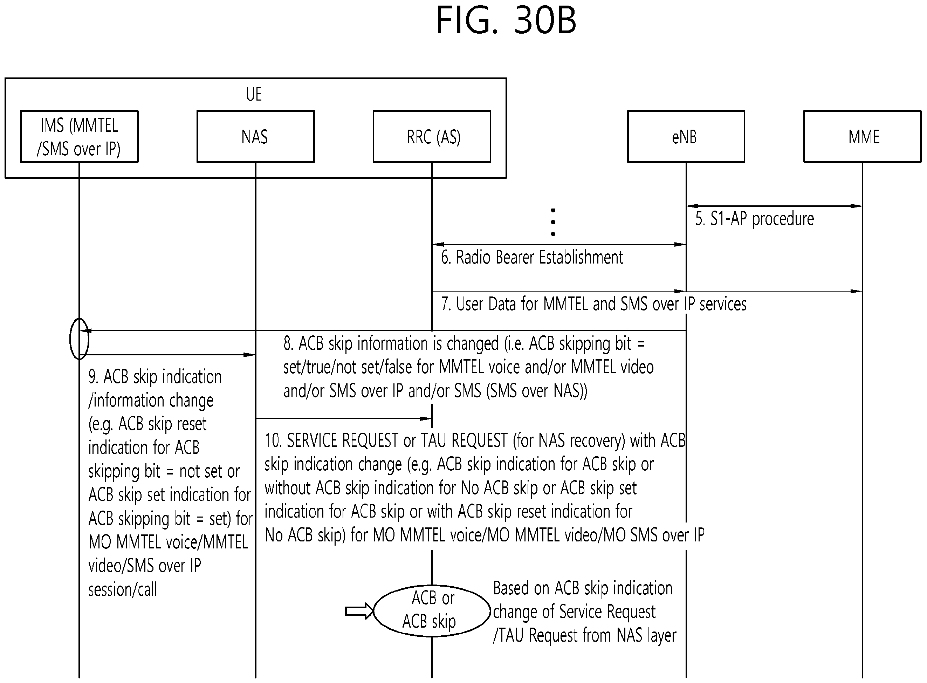

**FIG. 30a** **and** **FIG. 30b** **are signal flows illustrating the proposal 11 of the present specification.**

As can be seen from FIG. 30a and FIG. 30b, when an MO MMTEL voice service connection is started, an IMS layer for MMTEL confirms ACB skip information for an MMTEL voice service provided from an AS layer (e.g., RRC layer), and if 'ACB skipping bit = set' as to MMTEL voice, confirms whether there is no other ongoing MMTEL voice service session. Thereafter, if such a session is not present, the IMS layer for MMTEL provides an ACB skip set indication to the NAS layer to report the start of an MMTEL voice session/call. Likewise, when an MO MMTEL video service connection is started, an IMS layer for MMTEL confirms ACB skip information for an MMTEL video service provided from an AS layer (e.g., RRC layer), and if'ACB skipping bit = set', confirms whether there is no other ongoing MMTEL video service session. Thereafter, if such a session is not present, the IMS layer for MMTEL provides an ACB skip set indication to the NAS layer to report the start of an MMTEL video session/call. Likewise, when an MO SMS over IP service connection is started, an IMS layer for SMS over IP confirms ACB skip information for an SMS over IP service provided from an AS layer (e.g., RRC layer), and if'ACB skipping bit = set', confirms whether there is no other ongoing SMS over IP service session. Thereafter, if such a session is not present, the IMS layer for MMTEL provides an ACB skip set indication to the NAS layer to report the start of an SMS over IP session/call.

If the IMS layer for MMTEL/SMS over IP provides an ACB skip set indication for a session/call for MO MMTEL voice/video or MO SMS over IP, the NAS layer recognizes that the session/call is not a normal data session/call but a session/call for the MMTEL voice/video or SMS over IP. Thereafter, the NAS layer starts a service request procedure to connect a session for the MMTEL voice/video or SMS over IP. When the service request procedure is started, the ACB skip indication (i.e., ACB skip = set/true) or ACB skip indication (i.e., ACB skip = set/true) for SMS over IP is provided to the AS layer (e.g., RRC layer).

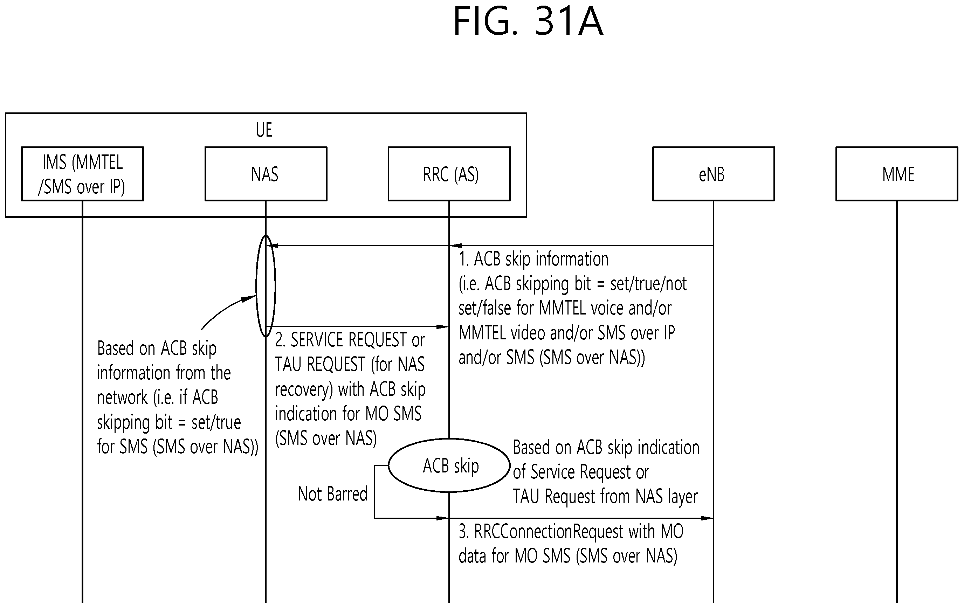

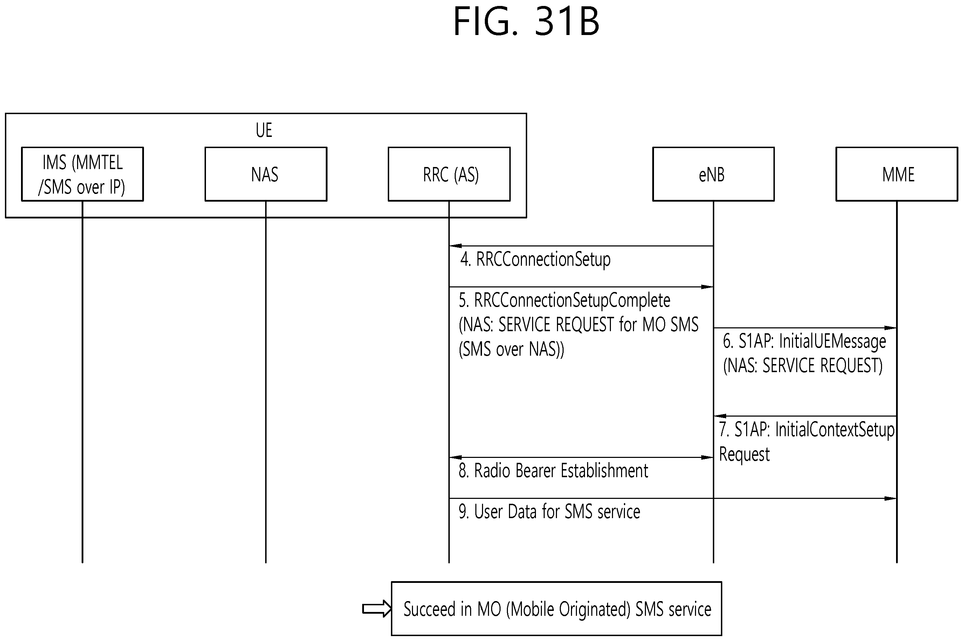

**FIG 31a** **and** **FIG. 31b** **are signal flows illustrating an example for SMS in the proposal 11 of the present specification.**

Referring to FIG. 31a and FIG. 31b, in case of SMS (SMS over NAS), when a service request procedure for an MO SMS connection is started, a NAS layer confirms ACB skip information for an SMS (SMS over NAS) provided from an AS layer (e.g., RRC layer), and if ACB skipping bit = set, provides an ACB skip indication (i.e., ACB skip = set) for SMS (SMS over NAS) together to the AS layer (e.g., RRC layer).

Returning to FIG. 30a and FIG. 30b, an IMS layer for MMTEL/SMS over IP confirms whether there is no other ongoing MMTEL voice and MMTEL video service session upon ending/terminating MO MMTEL voice, MO MMTEL video, and MO SMS over IP service connections, and thereafter if such a session is not present, provides an ACB skip reset indication to the NAS layer to report the end of the MMTEL voice and MMTEL video session/call. Likewise, the IMS layer for SMS over IP confirms whether there is no other ongoing SMS over IP service session, and if such a session is not present, provides the ACB skip reset indication to the NAS layer to report the end of the SMS over IP session.

If the IMS layer for MMTEL/SMS over IP provides an ACB skip reset indication for a session/call for MO MMTEL voice, MO MMTEL video, or MO SMS over IP or ACB skip reset indication for a session/request for MO SMS over IP, the NAS layer recognizes the end of session/call for MO MMTEL voice/video, or MO SMS over IP. Thereafter, the NAS layer does not skip an ACB check for an MMTEL voice/video or SMS over IP session.

Meanwhile, when there is a change in the ACB skip information provided from the network, the AS layer (e.g., RRC layer) provides the changed information to the IMS layer and the NAS layer for MMTEL/SMS over IP. If confirming of the ACB skip information by the IMS layer for MMTEL as to the MMTEL voice service provided from the AS layer (e.g., RRC layer) results in 'ACB skipping bit = set' (i.e., when ACB skip information is changed) as to MMTEL voice, when an MMTEL voice session is ongoing, the IMS layer for MMTEL immediately provides the ACB skip set indication for MO MMTEL to the NAS layer. If confirming of the ACB skip information by the IMS layer for MMTEL as to the MMTEL video service provided from the AS layer (e.g., RRC layer) results in 'ACB skipping bit = set/true' (i.e., when ACB skip information is changed) as to MMTEL video, the IMS layer for MMTEL immediately provides the ACB skip set indication for MO MMTEL to the NAS layer. Likewise, if confirming of the ACB skip information by the IMS layer for SMS over IP as to the SMS over IP service provided from the AS layer (e.g., RRC layer) results in 'ACB skipping bit = set/true' (i.e., when ACB skip information is changed) as to SMS over IP, when the SMS over IP service session is ongoing, ACB skip set indication for MO SMS over IP is immediately provided to the NAS layer.

If confirming of the ACB skip information by the IMS layer for MMTEL as to the MMTEL voice service provided from the AS layer (e.g., RRC layer) results in 'ACB skipping bit = not set' (i.e., when it is changed from 'ACB skipping bit = set for MMTEL voice' to 'ACB skipping bit = not set for MMTEL voice') as to MMTEL voice, when an MMTEL voice session is ongoing, the IMS layer for MMTEL immediately provides the ACB skip set indication for MO MMTEL to the NAS layer. If confirming of the ACB skip information by the IMS layer for MMTEL as to the MMTEL video service provided from the AS layer (e.g., RRC layer) results in 'ACB skipping bit = not set' (i.e., when it is changed from 'ACB skipping bit = set for MMTEL video' to 'ACB skipping bit = not set for MMTEL video') as to MMTEL video, the IMS layer for MMTEL immediately provides the ACB skip set indication for MO MMTEL to the NAS layer. Likewise, if confirming of the ACB skip information by the IMS layer for SMS over IP as to the SMS over IP service provided from the AS layer (e.g., RRC layer) results in 'ACB skipping bit = not set' (i.e., when it is changed from 'ACB skipping bit = set for SMS over IP' to 'ACB skipping bit = not set for SMS over IP') as to SMS over IP, when an SMS over IP session is ongoing, the IMS layer for SMS over IP immediately provides the ACB skip set indication for MO SMS over IP to the NAS layer.

The NAS layer performs a next service request procedure according to a change of the ACB skip indication/information provided from the MMTEL/SMS over IP (IMS) layer.

Meanwhile, the NAS layer may also provide the ACB skip set indication information when a TAU request procedure for a NAS recovery is started (performed).

If the TAU request procedure for the NAS recovery is started (performed), the AS layer (e.g., RRC layer) skips (or applies) an ACB of a corresponding TAU request message (an RRC establishment cause is set to MO signalling) according to the ACB skip-ON/TRUE-indication information provided from the NAS layer.

If a session for corresponding MMTE voice/video/SMS over IP ends, an IMS layer for MMTEL/SMS over IP transmits ACB skip RESET/STOP to the NAS layer to report the end of an MMTEL service (transmission). In this case, the ACB skip SET/START may be a one-bit indication, or may be an indication/information distinguished according to MMTEL voice/video/SMS over IP similarly to MMTEL-voice-ACB-skip-RESET/STOP, MMTEL-video-ACB-skip-RESET/STOP, and SMSoverIP-ACB-skip-RESET/STOP. If the MMTEL layer receives the ACB skip RESET/STOP indication/information, the NAS layer does not provide an ACB skip-ON/TRUE indication/information together/separately to the AS layer (e.g., RRC layer) in a service request procedure (or a TAU request procedure) started/performed at a later time.

In the aforementioned procedure, when the service request procedure (or TAU request procedure) is initiated/performed, the NAS layer may request ACB skip information provided from the network via SIB2, or the RRC layer may immediately provide the ACB skip information to the NAS layer whenever system information (SI) is updated or whenever there is a change in ACB skip configuration information.

### <Proposal 12: Standard improvement>

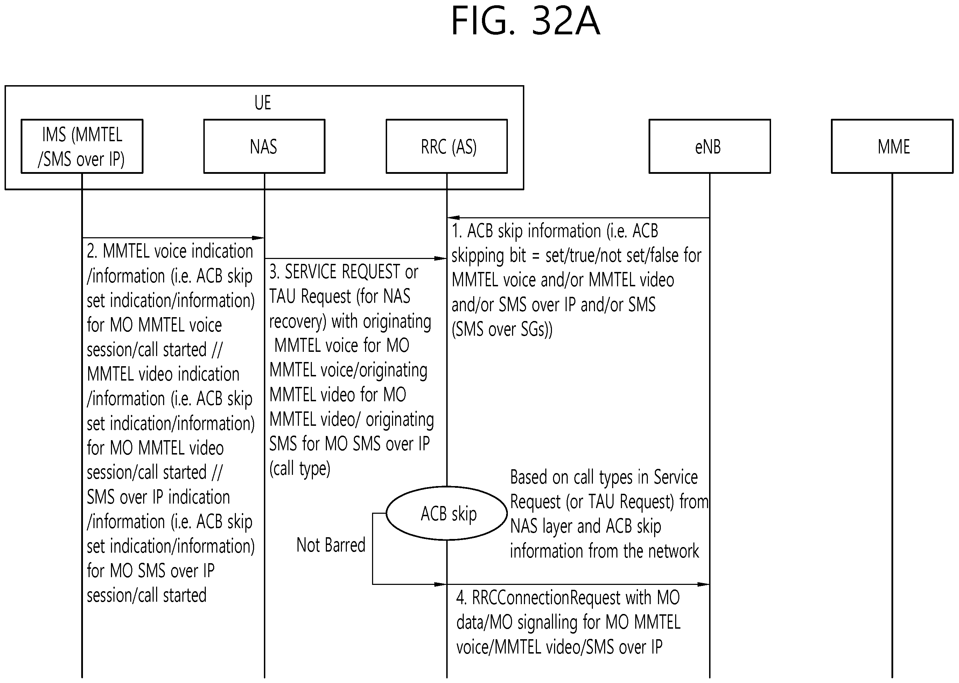

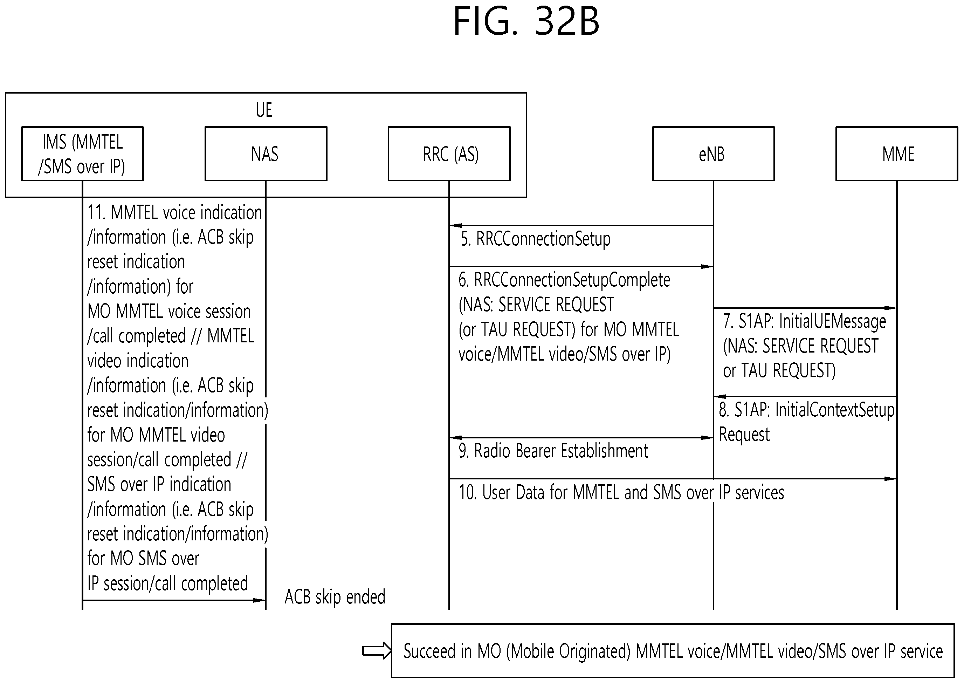

**FIG. 32a** **and** **FIG. 32b** **are signal flows illustrating the proposal 12 of the present specification.**

Referring to FIG. 32a and FIG. 32b, when a service connection for MO MMTEL voice is started, an IMS layer for MMTEL confirms whether is no other ongoing MMTEL voice service session. Thereafter, if such a session is not present, the IMS layer for MMTEL provides an ACB skip set indication to the NAS layer to report the start of an MMTEL voice session/call. Likewise, when a service connection for MO MMTEL video is started, the IMS layer for MMTEL confirms whether there is no other ongoing MMTEL video service session. Thereafter, if such a session is not present, the IMS layer for MMTEL provides an ACB skip set indication to the NAS layer to report the start of an MMTEL video session/call. Likewise, when the IMS layer for MO SMS over IP starts a service connection for MO SMS over IP, whether there is no other ongoing MMTEL SMS over IP service session is confirmed. Thereafter, if such a session is not present, the IMS layer for MMTEL provides an ACB skip set indication for MO SMS over IP to the NAS layer to report the start of an MMTEL SMS over IP session/call.

If the IMS layer for MMTEL/SMS over IP provides an ACB skip set indication (e.g., ACB skip set indication for MO MMTEL voice, ACB skip set indication for MO MMTEL video or ACB skip set indication for MO SMS over IP) for a session/call for MO MMTEL voice, MO MMTE video, or MO SMS over IP, the NAS layer recognizes that the session/call is not a normal data session/call but a session/call for the MMTEL voice, MMTEL video, or SMS over IP. Thereafter, the NAS layer starts a service request procedure to connect a session for the MMTEL voice/MMTE video or the SMS over IP. In this case, a call type of the service request message is set to originating MMTEL voice for MO MMTEL voice, originating MMTEL video for MO MMTEL video, or originating SMS for MO SMS over IP, and an RRC establishment cause is set to MO data.

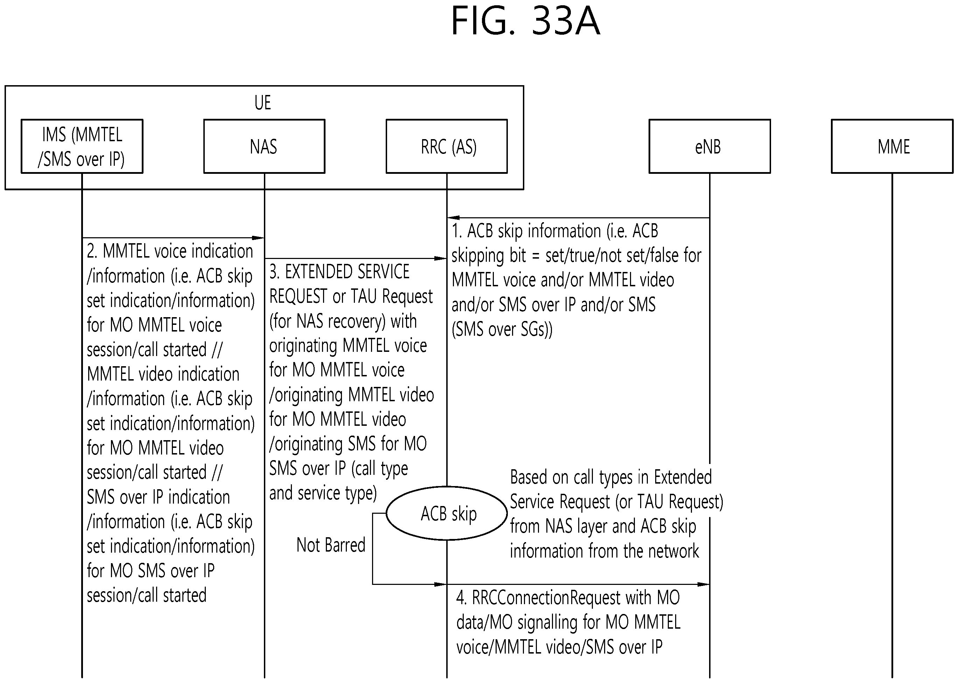

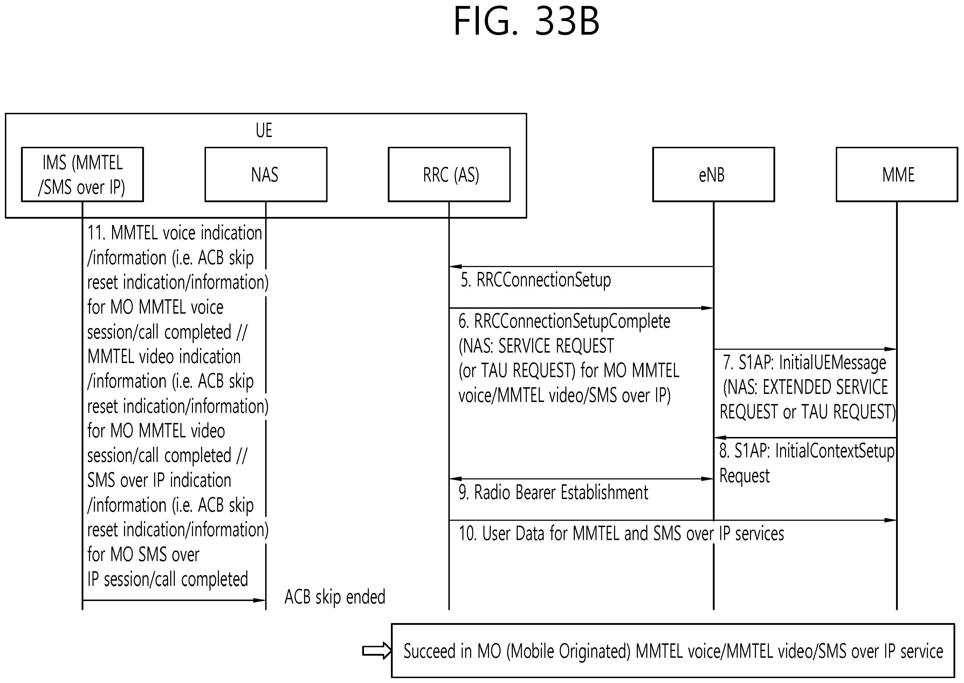

**FIG. 33a** **and** **FIG. 33b** **are signal flows illustrating an exemplary modification of the proposal 12 of the present specification.**

Referring to FIG. 33a and FIG. 33b, if an extended service request message is used for a service request procedure, a service type of an extended service request message is set to mobile originating MMTEL voice for MMTEL voice/mobile originating MMTEL video for MMTEL video/mobile originating SMS over IP for SMS over IP, and an RRC establishment cause is set to MO data. In addition, a call type is set to originating MMTEL voice for MO MMTEL voice, originating MMTEL video for MO MMTEL video or originating SMS for MO SMS over IP.

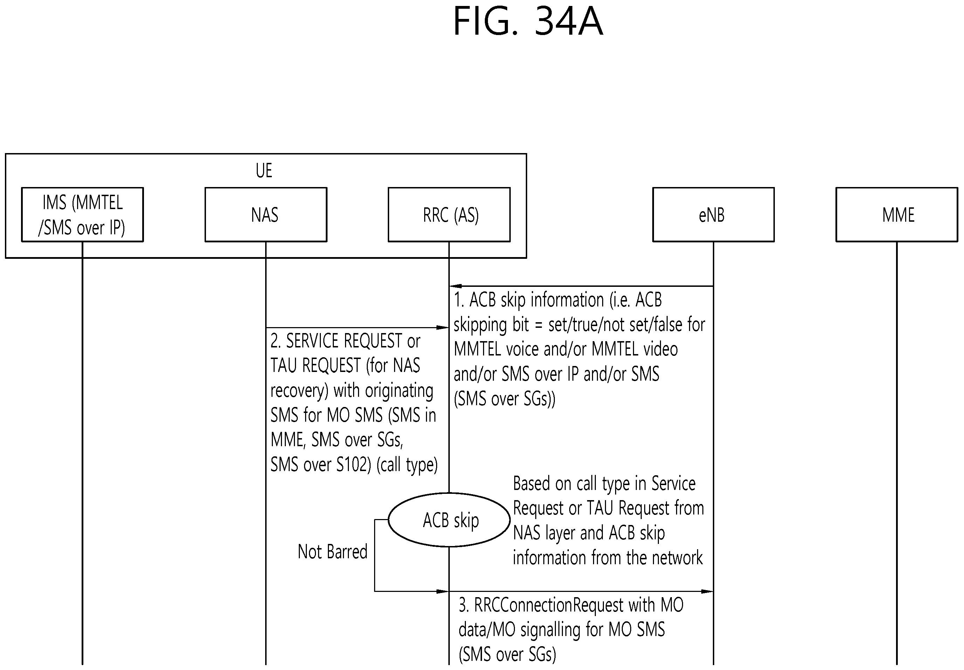

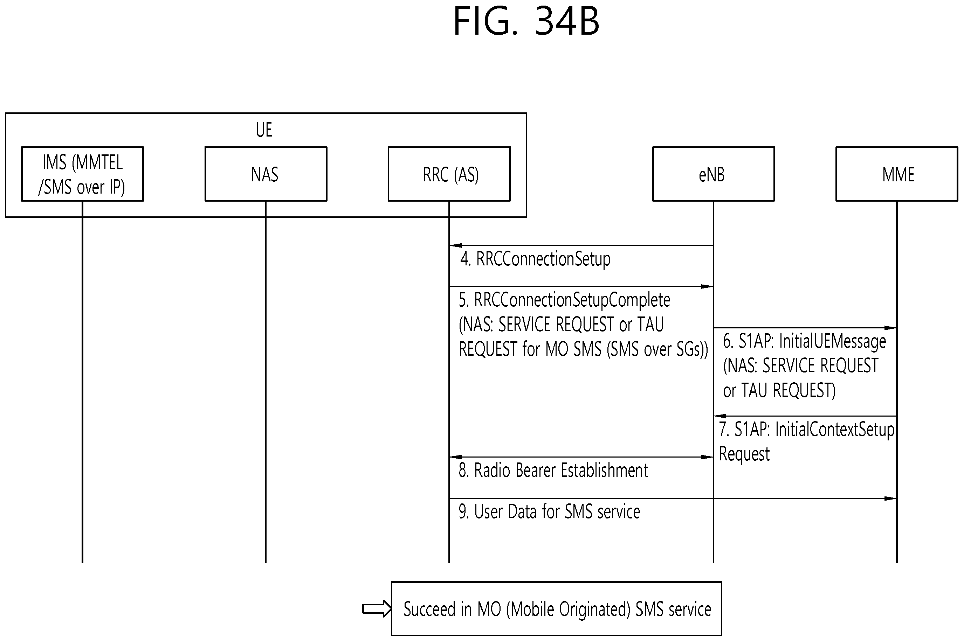

**FIG. 34a** **and** **FIG. 34b** **are signal flows illustrating an example of SMS in the proposal 12 of the present specification.**

Referring to FIG. 34a and FIG. 34b, in case of SMS (SMS in MME, SMS over SGs, SMS over S102), when a NAS layer starts a service request for a mobile originated (MO) SMS connection, a call type of a service request message is set to originating SMS for MO SMS (SMS in MME, SMS over SGs, SMS over S102), and an RRC establishment cause is set to MO data. Alternatively, if an extended service message is used in a service request procedure, a service type of the extended service request message is set to mobile originating SMS, an RRC establishment cause is set to MO data, and a call type is set to originating SMS for MO SMS (SMS in MME, SMS over SGs, SMS over S102).

Returning to FIG. 32a and FIG. 32b, the AS layer (e.g., RRC layer) of the UE reads call types for the service request of the NAS layer, and recognizes that the service request is a service request for a service connection for mobile originated (MO) MMTEL voice/MMTEL video, MO SMS over IP, and MO SMS. Thereafter, if confirming of ACB skip information for an MMTEL voice/MMTEL video/SMS over IP or SMS (SMS over SGs) service results in 'ACB skipping bit = set/true', an ACB check for the service request is skipped. In addition, an establishment cause of the RRC connection request message is set to MO-data.

Alternatively, the AS layer (e.g., RRC layer) of the UE reads a call type for the service request procedure of the NAS (service request message transmission or extended service request message transmission), and recognizes that the service request procedure is for an MO MMTEL voice, MO MMTEL video, MO SMS over IP, and MO SMS service connection. Thereafter, if confirming of ACB skip information for an MMTEL voice/MMTEL video/SMS over IP or SMS (SMS in MME, SMS over SGs, SMS over S102) is 'ACB skipping bit = set/true', an ACB check for the service request message is skipped. In this case, an establishment cause of the RRC connection request message is set to MO-data.

Meanwhile, the NAS layer may also provide this call type (e.g., originating MMTEL voice for MO MMTEL voice, originating MMTEL video for MO MMTEL video or originating SMS for MO SMS over IP, originating SMS for MO SMS (SMS in MME, SMS over SGs, SMS over S102)) when a TAU request procedure for a NAS recovery is initiated (performed).

The IMS layer for MMTEL/SMS over IP confirms whether there is no other ongoing MMTEL voice and MMTEL video service session upon ending/terminating MO MMTEL voice, MO MMTEL video, and MO SMS over IP service connections, and thereafter if such a session is not present, provides an ACB skip reset indication for MO MMTEL voice and ACB skip reset indication for MMTEL video to the NAS layer to report the end of the MMTEL voice and MMTEL video session/call. Likewise, the IMS layer for SMS over IP confirms whether there is no other ongoing SMS over IP service session, and if such a session is not present, provides the ACB skip reset indication for MO SMS over IP to the NAS layer to report the end of the SMS over IP session. (The operation of the proposals 12-3/12-4 of the present invention)

If the IMS layer for MMTEL/SMS over IP provides a session/call ACB skip reset indication (e.g., ACB skip reset indication for MO MMTEL voice, ACB skip reset indication for MMTEL video or ACB skip reset indication for MO SMS over IP) for MO MMTEL voice, MO MMTEL video, or MO SMS over IP, the NAS layer recognizes the end of session/call for MO MMTEL voice, MO MMTEL video, or MO SMS over IP. Thereafter, the NAS layer does not skip an ACB check for an MMTEL voice, MMTEL video, or SMS over IP session.

Meanwhile, the aforementioned proposals may be combined.

The content described up to now can be implemented in hardware. This will be described with reference to FIG. 12a and FIG. 12b.

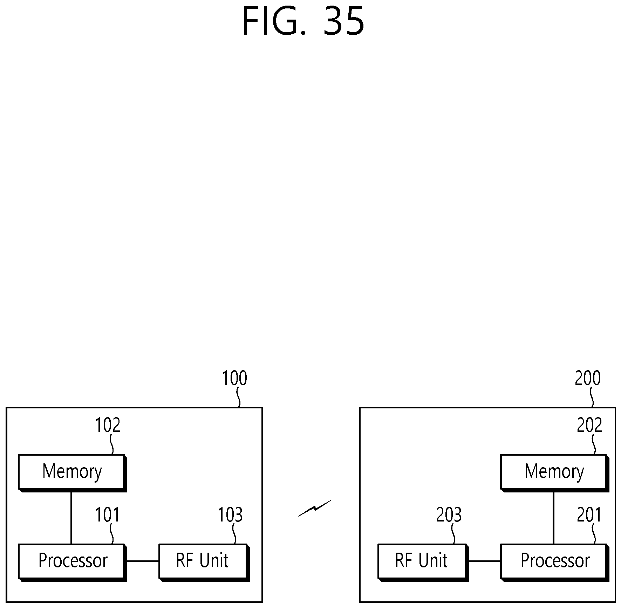

**FIG. 35** **is a block diagram of a UE 100 and an eNodeB 200 according to an embodiment of the present invention.**

Referring to FIG. 35, the UE 100 includes a storage unit 101, a controller 102, and a transceiver 103. Further, the eNodeB 200 includes a storage unit 201, a controller 202, and a transceiver 203.

The storage units 101 and 201 store the aforementioned methods.

The controllers 102 and 202 control the storage units 101 and 201 and the transceivers 103 and 203. More specifically, the controllers 102 and 202 respectively perform the methods stored in the storage units 101 and 201. The controllers 102 and 202 transmit the aforementioned signals via the transceivers 103 and 203.

Although exemplary embodiments of the present invention have been described above, the scope of the present invention is not limited to the specific embodiments and the present invention may be modified, changed, or improved in various ways within the scope of the present invention and the category of the claims.

## Claims

1. A method for performing a service request procedure, the method performed by a user equipment (UE) and comprising:
barring, by a lower layer of the UE, an access for an originating call, because of an access class barring (ACB);
receiving, by a non-access stratum (NAS) layer of the UE, a start indication from an upper layer due to a request for an uplink data;
if the lower layer indicates that the access was barred for the originating call and if the NAS layer receives the start indication, starting, by the NAS layer, a service request procedure,
wherein the starting the service request procedure includes:
delivering, to the lower layer, a call type for transmitting a service request message or an extended service request message, and
wherein the call type is set to one of an originating multimedia telephony (MMTEL) voice, an originating MMTEL video, an originating short message service (SMS) over internet protocol (IP) or an originating SMS.

2. The method of claim 1, wherein
the request for the uplink data corresponds a request to submit an originating message over IP.

3. The method of claim 2, wherein
the NAS layer receives the start indication from the upper layer, if the request to submit the originating message over IP is received and if no other originating message over IP exists.

4. The method of claim 1, wherein
the request for the uplink data corresponds to a request to establish an originating MMTEL communication session and to establish the originating SMS over IP.

5. The method of claim 4, wherein
the NAS layer receives the start indication from the upper layer, if an audio is offered in the MMTEL communication session or if a video is offered in the MMTEL communication session.

6. The method of claim 1, wherein
if the service request message or the extended service request message is to request user plane radio resources and if a MMTEL voice call is started,
the service request message or the extended service request includes:
the call type field set to the originating MMTEL voice; and
an establish cause field set to a mobile orienting (MO) data.

7. The method of claim 1, wherein
if the service request message or the extended service request message is to request user plane radio resources and if a MMTEL video call is started,
the service request message or the extended service request message includes:
the call type field set to the originating MMTEL video; and
an establish cause field set to MO data.

8. The method of claim 1, wherein
if the service request message or the extended service request message is to request user plane radio resources and if a SMS over IP is started,
the service request message or the extended service request message includes:
the call type field set to the originating SMS over IP; and
an establish cause field set to MO data.

9. The method of claim 1, wherein
if the service request message or the extended service request message is to request resources for an uplink signalling for SMS or SMS over NAS,
the service request message or the extended service request message includes:
the call type field set to the originating SMS (SMS over NAS); and
an establish cause field set to MO data.

10. The method of claim 1, wherein the service request message further includes a service type field,
wherein the service type field is set to a MO MMTEL voice, a MO MMTEL video, a MO SMS over IP, or MO SMS(SMS over NAS).

11. A user equipment (UE) for performing a service request procedure, comprising:
a transceiver; and
a processor controlling the transceiver and configured to include:
a lower layer for barring an access for an originating call, because of an access class barring (ACB); and
a non-access stratum (NAS) layer for receiving a start indication from an upper layer due to a request for an uplink data,
wherein if the lower layer indicates that the access was barred for the originating call and if the NAS layer receives the start indication, the NAS layer deliveries, to the lower layer, a call type for transmitting a service request message or an extended service request message to start a service request procedure,
wherein the call type is set to one of an originating multimedia telephony (MMTEL) voice, an originating MMTEL video, an originating short message service (SMS) over internet protocol (IP) or an originating SMS.

12. The user equipment of claim 11, wherein
if the service request message or the extended service request message is to request user plane radio resources and if a MMTEL voice call is started,
the service request message or the extended service request includes:
the call type field set to the originating MMTEL voice; and
an establish cause field set to a mobile orienting (MO) data.

13. The user equipment of claim 11, wherein
if the service request message or the extended service request message is to request user plane radio resources and if a MMTEL video call is started,
the service request message or the extended service request message includes:
the call type field set to the originating MMTEL video; and
an establish cause field set to MO data.

14. The user equipment of claim 11, wherein
if the service request message or the extended service request message is to request user plane radio resources and if a SMS over IP is started,
the service request message or the extended service request message includes:
the call type field set to the originating SMS over IP; and
an establish cause field set to MO data.

15. The user equipment of claim 11, wherein
if the service request message or the extended service request message is to request resources for an uplink signalling for SMS or SMS over NAS,
the service request message or the extended service request message includes:
the call type field set to the originating SMS (SMS over NAS); and
an establish cause field set to MO data.

16. The user equipment of claim 11, wherein the service request message further includes a service type field,
wherein the service type field is set to a MO MMTEL voice, a MO MMTEL video, a MO SMS over IP, or MO SMS(SMS over NAS).
